# EUROPEAN PATENT APPLICATION

(11) **EP 4 277 152 A1**
(43) Date of publication of application: **15.11.2023**
(21) Application number: 22748941.6
(22) Date of filing: 24.01.2022
(51) Int. Cl.: H04B 7/06

(54) **RADIOFREQUENCY SENSING METHOD AND RELATED DEVICE**

(30) Priority: 08.02.2021 CN 202110182123
(71) Applicant: Huawei Technologies Co., Ltd., Shenzhen, Guangdong 518129 (CN)
(72) Inventor: ZHANG, Meihong, Shenzhen, Guangdong 518129 (CN); YIN, Rui, Chengdu, Sichuan 611756 (CN); DU, Rui, Shenzhen, Guangdong 518129 (CN); LONG, Yan, Chengdu, Sichuan 611756 (CN); YAN, Li, Chengdu, Sichuan 611756 (CN); HAN, Xiao, Shenzhen, Guangdong 518129 (CN); SUN, Yingxiang, Shenzhen, Guangdong 518129 (CN); LIU, Chenchen, Shenzhen, Guangdong 518129 (CN)
(74) Representative: Pfenning, Meinig & Partner mbB
(86) International application number: PCT/CN2022/073542
(87) International publication number: WO 2022/166662

(57) **Abstract**

This application relates to the field of wireless communication, and in particular, to a radio sensing method and a related apparatus. The method includes: A first device sends a plurality of first frames including first indication information, to indicate a second device to evaluate a variation of CSI from the first device to the second device. The first device receives, in a quasi-omni manner, a plurality of second frames including a first measurement result and second indication information, where the first measurement result is used to feed back a transmit beam whose variation of CSI from the first device to the second device is greater than a CSI variation threshold, and the second indication information indicates the first device to evaluate a variation of CSI from the second device to the first device. The first device sends a third frame including a second measurement result, to feed back a transmit beam whose variation of CSI from the second device to the first device is greater than a CSI variation threshold. According to embodiments of this application, a beamforming training mechanism can be combined with WLAN sensing, to implement sensing while performing communication beam training.

## Description

This application claims priority to Chinese Patent Application No. 202110182123.1, filed with the China National Intellectual Property Administration on February 8, 2021 and entitled "RADIO SENSING METHOD AND RELATED APPARATUS", which is incorporated herein by reference in its entirety.

### TECHNICAL FIELD

This application relates to the field of wireless communication technologies, and in particular, to a radio sensing method and a related apparatus.

### BACKGROUND

In daily lives, a signal sent by a transmitter is usually received after being reflected, diffracted, and scattered by various obstacles. As a result, an actually received signal is usually superimposed of a plurality of signals. Therefore, a wireless signal can sense a physical environment through which the wireless signal passes. A surrounding environment can be inferred by analyzing the wireless signal "modulated" by various obstacles. In this way, a wireless local area network (wireless local area network, WLAN) sensing (sensing) technology is derived.

WLAN sensing is a promising technology. It can use currently widely deployed WLAN devices to send specific data or communication channel explorer frames to sense a surrounding environment, receive a reflected signal or feedback information generated by a peer device on a wireless network, and extract a corresponding parameter from the received signal according to an algorithm for analysis, to obtain surrounding environment information. Although existing sensors on the market can also provide environmental control feedback, the sensors need to be installed specifically. The WLAN sensing can use an existing network to generate the same feedback without constructing and maintaining a plurality of systems.

A 60 GHz millimeter-wave band has rich available spectrum resources. However, because a path loss increases, attenuation is very serious. Therefore, a directional communication technology of beamforming (Beamforming, BF) is mainly considered in the standard 802.11ad/ay. To use the beamforming technology, beamforming training (Beamforming training, BFT) needs to be performed first. In a future 802.11 standard, it is considered that the WLAN sensing is introduced into a beamforming training mechanism. However, how to combine a conventional beamforming training mechanism with the WLAN sensing and perform WLAN sensing without affecting normal communication becomes an urgent problem to be resolved.

### SUMMARY

Embodiments of this application provide a radio sensing method and a related apparatus, so that a conventional beamforming training mechanism in the 802.11ay can be combined with WLAN sensing, sensing and training of a beam for sensing are implemented while original communication beam training is implemented, there is no need to specially design a related procedure for the sensing and the training of the beam for sensing, overheads are low, and compatibility is good.

The following describes this application from different aspects. It should be understood that mutual reference may be made to the following implementations and beneficial effects of the different aspects.

According to a first aspect, this application provides a radio sensing method. The method includes a sector-level sweep phase. A first device sends a plurality of first frames in a sector sweep manner, where each first frame includes first indication information, and the first indication information indicates a second device to evaluate a variation of channel state information (channel state information, CSI) from the first device to the second device. The first device receives a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The first device sends a third frame, where the third frame includes a second measurement result, and the second measurement result is used to feed back a transmit beam whose variation of CSI from the second device to the first device is greater than a CSI variation threshold.

The first device may be an initiator (initiator), and the second device is a responder (responder). The first device performs sector sweep for at least two cycles. In other words, the first device sends at least twice (sends one first frame each time) by using a same transmit beam. It should be understood that a sector identifier (Sector ID) field and a directional multi-gigabit (directional multi-gigabit, DMG) antenna identifier (DMG Antenna ID) field are set in each first frame, and respectively indicate a transmit sector and a transmit antenna of the first frame. It should be further understood that the sector identifier field and the DMG antenna identifier field can be used to uniquely determine a beam.

It can be learned that, in this solution, based on procedures of the sector-level sweep phase in the standard 802.11ay, sensing is performed by using a variation between CSI values measured when a same beam sweeps for a plurality of times, and a related frame structure in the sector-level sweep phase is modified to enable a sensing operation, feed back a sensing measurement result, and the like. In this way, sensing of a single moving target and training of a transmit beam for sensing can be implemented while original communication beam training is implemented, there is no need to specially design a related procedure for the sensing and the training of the transmit beam for sensing, overheads are low, and compatibility is good.

With reference to the first aspect, in a possible design, after that the first device sends a third frame, the method further includes a multiple sector ID detection procedure. The first device sends a first beam refinement protocol (beam refinement protocol, BRP) physical layer protocol data unit (Physical layer protocol data unit, PPDU) for a plurality of times in a quasi-omni manner, where a first BRP frame included in the first BRP PPDU is used to indicate the second device to evaluate the variation of the CSI from the first device to the second device. The first device receives a second BRP PPDU for a plurality of times in a sector sweep manner, where a second BRP frame included in the second BRP PPDU is used to indicate the first device to evaluate the variation of the CSI from the second device to the first device. The first device sends a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The first device receives a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

The first device sends one first BRP PPDU each time in a quasi-omni manner, and each first BRP PPDU includes one first BRP frame and a training unit (training unit, TRN Unit). Similarly, each second BRP PPDU includes one second BRP frame and a TRN unit. The TRN unit is used by a peer end to perform CSI measurement. The first device performs sector sweep for at least two cycles. In other words, the first device receives at least twice (receives one first BRP PPDU each time) by using a same receive beam.

It can be learned that, in this solution, a related frame format is modified in the multiple sector ID detection procedure, so that a transmit end and a receive end can train an optimal receive beam in a sensing scenario.

With reference to the first aspect, in a possible design, after that the first device receives a fourth BRP frame, the method further includes a beam combining procedure. The first device sends a fifth BRP PPDU for a plurality of times in a directional manner, where a fifth BRP frame included in the fifth BRP PPDU is used to indicate the second device to evaluate the variation of the CSI from the first device to the second device. The first device receives a sixth BRP PPDU for a plurality of times in a directional manner, where a sixth BRP frame included in the sixth BRP PPDU is used to indicate the first device to evaluate the variation of the CSI from the second device to the first device. The first device sends a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The first device receives an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

It can be learned that, in this solution, based on procedures of the sector-level sweep phase and the beam refinement protocol phase in the standard 802. Hay, sensing is performed by using a variation between CSI values measured when a same beam sweeps for a plurality of times, and a related frame structure in the sector-level sweep phase and the beam refinement protocol phase is modified to enable a sensing operation, feed back a sensing measurement result, and the like. In this way, sensing of a single moving target and training of an optimal transmit/receive beam for sensing can be implemented while original communication beam training is implemented, there is no need to specially design a related procedure for the sensing and the training of the beam for sensing, overheads are low, and compatibility is good.

According to a second aspect, this application provides a radio sensing method. The method includes a sector-level sweep phase. A second device receives a plurality of first frames in a quasi-omni manner, where each first frame includes first indication information, and the first indication information indicates the second device to evaluate a variation of CSI from a first device to the second device. The second device sends a plurality of second frames in a sector sweep manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The second device receives a third frame, where the third frame includes a second measurement result, and the second measurement result is used to feed back a transmit beam whose variation of CSI from the second device to the first device is greater than a CSI variation threshold.

The first device may be an initiator, and the second device is a responder. The second device performs sector sweep for at least two cycles. In other words, the second device sends at least twice (sends one second frame each time) by using a same transmit beam. It should be understood that a sector ID field and a DMG antenna ID field are set in each second frame, and respectively indicate a transmit sector and a transmit antenna of the second frame. It should be further understood that the sector identifier field and the DMG antenna identifier field can be used to uniquely determine a beam.

With reference to the second aspect, in a possible design, after that the second device receives a third frame, the method further includes a multiple sector ID detection procedure. The second device receives a first BRP PPDU for a plurality of times in a sector sweep manner, where a first BRP frame included in the first BRP PPDU is used to indicate the second device to evaluate the variation of the CSI from the first device to the second device. The second device sends a second BRP PPDU for a plurality of times in a quasi-omni manner, where a second BRP frame included in the second BRP PPDU is used to indicate the first device to evaluate the variation of the CSI from the second device to the first device. The second device receives a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The second device sends a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

The second device sends one second BRP PPDU each time in a quasi-omni manner, and each second BRP PPDU includes one second BRP frame and a TRN unit. Similarly, each first BRP PPDU includes one first BRP frame and a TRN unit. The TRN unit is used by a peer end to perform CSI measurement. The second device performs sector sweep for at least two cycles. In other words, the second device receives at least twice (receives one second BRP PPDU each time) by using a same receive beam.

With reference to the second aspect, in a possible design, after that the second device sends a fourth BRP frame, the method further includes a beam combining procedure. The second device receives a fifth BRP PPDU for a plurality of times in a directional manner, where a fifth BRP frame included in the fifth BRP PPDU is used to indicate the second device to evaluate the variation of the CSI from the first device to the second device. The second device sends a sixth BRP PPDU for a plurality of times in a directional manner, where a sixth BRP frame included in the sixth BRP PPDU is used to indicate the first device to evaluate the variation of the CSI from the second device to the first device. The second device receives a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The second device sends an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

According to a third aspect, this application provides a first device or a chip in a first device, for example, a Wi-Fi chip. The first device includes: a sending unit, configured to send a plurality of first frames, where each first frame includes first indication information, and the first indication information indicates a second device to evaluate a variation of CSI from the first device to the second device; and a receiving unit, configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The sending unit is further configured to send a third frame, where the third frame includes a second measurement result, and the second measurement result is used to feed back a transmit beam whose variation of CSI from the second device to the first device is greater than a CSI variation threshold.

Optionally, the first device further includes a processing unit, configured to generate a plurality of first frames. The processing unit is further configured to generate a third frame.

It should be understood that a sector ID field and a DMG antenna ID field are set in each first frame, and respectively indicate a transmit sector and a transmit antenna of the first frame. It should be further understood that the sector identifier field and the DMG antenna identifier field can be used to uniquely determine a beam.

With reference to the third aspect, in a possible design, the sending unit is further configured to send a first BRP PPDU for a plurality of times in a quasi-omni manner, where a first BRP frame included in the first BRP PPDU is used to indicate the second device to evaluate the variation of the CSI from the first device to the second device. The receiving unit is further configured to receive a second BRP PPDU for a plurality of times, where a second BRP frame included in the second BRP PPDU is used to indicate the first device to evaluate the variation of the CSI from the second device to the first device. The sending unit is further configured to send a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The receiving unit is further configured to receive a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit is further configured to generate a first BRP PPDU and a third BRP frame.

Each first BRP PPDU includes one first BRP frame and a TRN unit. Similarly, each second BRP PPDU includes one second BRP frame and a TRN unit. The TRN unit is used by a peer end to perform CSI measurement.

With reference to the third aspect, in a possible design, the sending unit is further configured to send a fifth BRP PPDU for a plurality of times, where a fifth BRP frame included in the fifth BRP PPDU is used to indicate the second device to evaluate the variation of the CSI from the first device to the second device. The receiving unit is further configured to receive a sixth BRP PPDU for a plurality of times, where a sixth BRP frame included in the sixth BRP PPDU is used to indicate the first device to evaluate the variation of the CSI from the second device to the first device. The sending unit is further configured to send a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The receiving unit is further configured to receive an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit is further configured to generate a fifth BRP PPDU and a seventh BRP frame that carries a first beam information list.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

According to a fourth aspect, this application provides a second device or a chip in a second device, for example, a Wi-Fi chip. The second device includes: a receiving unit, configured to receive a plurality of first frames in a quasi-omni manner, where each first frame includes first indication information, and the first indication information indicates the second device to evaluate a variation of CSI from a first device to the second device; and a sending unit, configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The receiving unit is further configured to receive a third frame, where the third frame includes a second measurement result, and the second measurement result is used to feed back a transmit beam whose variation of CSI from the second device to the first device is greater than a CSI variation threshold.

Optionally, the second device further includes a processing unit, configured to generate a plurality of second frames.

It should be understood that a sector ID field and a DMG antenna ID field are set in each second frame, and respectively indicate a transmit sector and a transmit antenna of the second frame. It should be further understood that the sector identifier field and the DMG antenna identifier field can be used to uniquely determine a beam.

With reference to the fourth aspect, in a possible design, the receiving unit is further configured to receive a first BRP PPDU for a plurality of times, where a first BRP frame included in the first BRP PPDU is used to indicate the second device to evaluate the variation of the CSI from the first device to the second device. The sending unit is further configured to send a second BRP PPDU for a plurality of times in a quasi-omni manner, where a second BRP frame included in the second BRP PPDU is used to indicate the first device to evaluate the variation of the CSI from the second device to the first device. The receiving unit is further configured to receive a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The sending unit is further configured to send a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit is further configured to generate a second BRP PPDU and a fourth BRP frame.

Each second BRP PPDU includes one second BRP frame and a TRN unit. Similarly, each first BRP PPDU includes one first BRP frame and a TRN unit. The TRN unit is used by a peer end to perform CSI measurement.

With reference to the fourth aspect, in a possible design, the receiving unit is further configured to receive a fifth BRP PPDU for a plurality of times, where a fifth BRP frame included in the fifth BRP PPDU is used to indicate the second device to evaluate the variation of the CSI from the first device to the second device. The sending unit is further configured to send a sixth BRP PPDU for a plurality of times, where a sixth BRP frame included in the sixth BRP PPDU is used to indicate the first device to evaluate the variation of the CSI from the second device to the first device. The receiving unit is further configured to receive a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The sending unit is further configured to send an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit is further configured to generate a sixth BRP PPDU and an eighth BRP frame that carries a second beam information list.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

In any design of any one of the foregoing aspects, when the first frame is a beacon frame, the first indication information is located in an optional subelement subfield of an enhanced directional multi-gigabit (enhanced directional multi-gigabit, EDMG) capability field of the beacon frame. The first indication information may include a CSI measurement request field and a CSI variation calculation field. The CSI measurement request field is used to indicate the second device whether to measure CSI. When the CSI measurement request field is set to a first value, the CSI measurement request field is used to indicate the second device to measure the CSI. When the CSI measurement request field is set to a second value, the CSI measurement request field is used to indicate the second device not to measure the CSI. The CSI measurement request field in the first frame in this solution is set to the first value. The CSI variation calculation field is used to indicate the second device whether to calculate a CSI difference. When the CSI variation calculation field is set to a first value, the CSI variation calculation field is used to indicate the second device to calculate the CSI difference. When the CSI variation calculation field is set to a second value, the CSI variation calculation field is used to indicate the second device not to calculate the CSI difference. Optionally, the first indication information further includes one or more of the following fields: an evaluation algorithm field and a CSI variation threshold field. The evaluation algorithm field indicates a CSI evaluation algorithm, and the CSI variation threshold field indicates the CSI variation threshold.

The first value is 1, and the second value is 0; or the first value is 0, and the second value is 1.

It can be learned that, in this solution, the first indication information is carried in the optional subelement (optional subelement) subfield of the EDMG capability field of the beacon frame, to indicate the second device to evaluate the variation of the CSI from the first device to the second device. In this way, a function of the original beacon frame may not be changed (or a function of the original beacon frame may be reused), a sensing function can be implemented by using the beacon frame, there is no need to specially design a related procedure for the sensing function, overheads are low, and compatibility is good.

In any design of any one of the foregoing aspects, when the first frame is a sector sweep (sector sweep, SSW) frame, the first indication information is carried in a reserved subfield of an SSW feedback field of the SSW frame. The first indication information may include a CSI measurement request field and a CSI variation calculation field. The CSI measurement request field is used to indicate the second device whether to measure CSI. When the CSI measurement request field is set to a first value, the CSI measurement request field is used to indicate the second device to measure the CSI. When the CSI measurement request field is set to a second value, the CSI measurement request field is used to indicate the second device not to measure the CSI. The CSI measurement request field in the first frame in this solution is set to the first value. The CSI variation calculation field is used to indicate the second device whether to calculate a CSI difference. When the CSI variation calculation field is set to a first value, the CSI variation calculation field is used to indicate the second device to calculate the CSI difference. When the CSI variation calculation field is set to a second value, the CSI variation calculation field is used to indicate the second device not to calculate the CSI difference. Optionally, the first indication information further includes one or more of the following fields: an evaluation algorithm field and a CSI variation threshold field. The evaluation algorithm field indicates a CSI evaluation algorithm, and the CSI variation threshold field indicates the CSI variation threshold.

The first value is 1, and the second value is 0; or the first value is 0, and the second value is 1.

It can be learned that, in this solution, the first indication information is carried in the reserved subfield of the SSW feedback field of the SSW frame, so that a frame length of the original SSW frame may not be changed, another field in the SSW frame can be reused. In this way, both a communication beam and a sensing beam can be trained, a design is flexible, and compatibility is good.

In any design of any one of the foregoing aspects, when the second frame is an SSW frame, the second indication information is located in a reserved subfield of an SSW feedback field of the SSW frame, and the first measurement result is located in a signal-to-noise ratio (signal-to-noise ratio, SNR) report subfield of the SSW feedback field of the SSW frame. The second indication information includes a CSI variation calculation field. The CSI variation calculation field is used to indicate the first device whether to calculate a CSI difference. When the CSI variation calculation field is set to a first value, the CSI variation calculation field is used to indicate the first device to calculate the CSI difference. When the CSI variation calculation field is set to a second value, the CSI variation calculation field is used to indicate the second device not to calculate the CSI difference.

The first value is 1, and the second value is 0; or the first value is 0, and the second value is 1.

It can be learned that, in this solution, the second indication information is carried in the second frame, to indicate the first device to evaluate the variation of the CSI from the second device to the first device. This helps train an optimal sensing transmit beam of the second device, and provides a basis for subsequent application of WLAN sensing.

In any design of any one of the foregoing aspects, the second frame further includes third indication information, and the third indication information indicates whether the second frame includes the first measurement result. In this solution, the third indication information is set to a first value, to indicate that the second frame includes the first measurement result. When the second frame is an SSW frame, the third indication information is located in a reserved subfield of an SSW feedback field of the SSW frame.

It can be learned that, in this solution, the third indication information is carried in the second frame, to indicate whether the second frame includes the first measurement result. A design is more flexible.

In any design of any one of the foregoing aspects, when the third frame is an SSW feedback frame, the second measurement result is located in an SNR report subfield of an SSW feedback field of the SSW feedback frame.

It can be learned that, in this solution, the SNR report subfield of the SSW feedback frame is reused to carry the second measurement result, so that the SSW feedback frame is slightly modified, and compatibility is better.

In any design of any one of the foregoing aspects, the third frame further includes fourth indication information, and the fourth indication information indicates whether the third frame includes the second measurement result. In this solution, the fourth indication information is set to a first value, to indicate that the third frame includes the second measurement result. When the third frame is an SSW feedback frame, the fourth indication information is located in a reserved subfield of an SSW feedback field of the SSW frame.

It can be learned that, in this solution, the fourth indication information is carried in the third frame, to indicate whether the third frame includes the second measurement result. A design is more flexible.

In any design of any one of the foregoing aspects, the first measurement result includes a first antenna identifier and a first sector identifier, and the second measurement result includes a second antenna identifier and a second sector identifier. A beam determined by the first antenna identifier and the first sector identifier is a transmit beam whose CSI difference between any two CSI measurements on a same transmit beam is greater than the CSI variation threshold and that is of all transmit beams of the first device. A beam determined by the second antenna identifier and the second sector identifier is a transmit beam whose CSI difference between any two CSI measurements on a same transmit beam is greater than the CSI variation threshold and that is of all transmit beams of the second device.

It can be learned that, in this solution, a transmit beam whose CSI variation is greater than a threshold and that is of all transmit beams of the first device is fed back by using the first measurement result, and is used as an optimal sensing transmit beam of the first device. A transmit beam whose CSI variation is greater than a threshold and that is of all transmit beams of the second device is fed back by using the second measurement result, and is used as an optimal sensing transmit beam of the second device. In a sector-level sweep process of communication, a sensing transmit beam is trained.

In any design of any one of the foregoing aspects, both the first BRP frame in the first BRP PPDU and the second BRP frame in the first BRP PPDU include a CSI measurement request field and a number of beam sweep cycles field. When a value of the CSI measurement request field is a first value, the CSI measurement request field indicates to measure CSI. The number of beam sweep cycles field indicates a number of sweep cycles of a receive beam.

Optionally, the first BRP frame in the first BRP PPDU and the second BRP frame in the first BRP PPDU further include one or more of the following fields: a transmit end sensing sector identifier field and a transmit end sensing antenna identifier mask field, used to jointly indicate a transmit sector and a transmit antenna of a BRP frame; a CSI variation threshold field, used to indicate a CSI variation threshold; and an evaluation algorithm field, used to indicate a CSI evaluation algorithm.

It can be learned that, in this solution, a sensing operation is introduced by modifying a frame format of a BRP PPDU in the multiple sector ID detection procedure, so that optimal sensing receive beams of the first device and the second device can be separately obtained through training, thereby providing a basis for subsequent application of WLAN sensing.

In any design of any one of the foregoing aspects, the first number of receive beams is carried in a directional multi-gigabit (directional multi-gigabit, DMG) beam refinement element of the third BRP frame. The second number of receive beams is carried in a DMG beam refinement element of the fourth BRP frame.

In any design of any one of the foregoing aspects, both the fifth BRP frame in the fifth BRP PPDU and the sixth BRP frame in the sixth BRP PPDU include a CSI measurement request field and a number of beam sweep cycles field. When a value of the CSI measurement request field is a first value, the CSI measurement request field indicates to measure CSI. The number of beam sweep cycles field indicates a number of sweep cycles of a receive beam.

Optionally, the fifth BRP frame in the fifth BRP PPDU and the sixth BRP frame in the sixth BRP PPDU further include one or more of the following fields: a transmit end sensing sector identifier field and a transmit end sensing antenna identifier mask field, used to jointly indicate a transmit sector and a transmit antenna of a BRP frame; a CSI variation threshold field, used to indicate the CSI variation threshold; and an evaluation algorithm field, used to indicate a CSI evaluation algorithm.

It can be learned that, in this solution, a sensing operation is introduced by modifying a frame format of a BRP PPDU in the beam combining procedure, so that optimal sensing transmit and receive beams of the first device and the second device can be combined, thereby providing a basis for subsequent application of WLAN sensing.

In any design of any one of the foregoing aspects, the first beam information list is located in a sensing measurement feedback element of the seventh BRP frame, and the second beam information list is located in a sensing measurement feedback element of the eighth BRP frame. An element identifier of the sensing measurement feedback element is a reserved value, for example, 13.

In any design of any one of the foregoing aspects, the first beam information list includes antenna identifiers and sector identifiers that correspond to transmit beams in a plurality of transmit and receive beam pairs whose variations of CSI from the second device to the first device are greater than the CSI variation threshold, and a receive antenna identifier corresponding to each transmit beam. Similarly, the second beam information list includes antenna identifiers and sector identifiers that correspond to transmit beams in a plurality of transmit and receive beam pairs whose variations of CSI from the first device to the second device are greater than the CSI variation threshold, and a receive antenna identifier corresponding to each transmit beam. It should be understood that one transmit and receive beam pair includes one transmit beam and one receive beam. One antenna identifier and one sector identifier can be used to uniquely determine one beam. However, because the receive beam is used by a receive end to receive data, a direction of the receive beam does not need to be notified to a transmit end, and only needs to be known by the receive end. Therefore, the first beam information list may not include a sector identifier of the receive beam.

According to a fifth aspect, this application provides a radio sensing method. The method includes: A first device sends a plurality of first frames in a sector sweep manner, where each first frame includes first indication information, and the first indication information indicates a second device to evaluate a variation of CSI from the first device to the second device. The first device receives a plurality of second frames in a quasi-omni manner, where each second frame includes second indication information, and the second indication information indicates the first device to evaluate a variation of CSI from the second device to the first device. The first device sends a first sensing feedback frame, where the first sensing feedback frame includes a second measurement result, and the second measurement result is used to feed back a plurality of transmit beams whose variations of CSI from the second device to the first device are greater than a CSI variation threshold. The first device receives a second sensing feedback frame, where the second sensing feedback frame includes a first measurement result, and the first measurement result is used to feed back a plurality of transmit beams whose variations of CSI from the first device to the second device are greater than a CSI variation threshold.

The first device may be an initiator (initiator), and the second device is a responder (responder). The first device performs sector sweep for at least two cycles. In other words, the first device sends at least twice (sends one first frame each time) by using a same transmit beam. It should be understood that a sector ID field and a DMG antenna ID field are set in each first frame, and respectively indicate a transmit sector and a transmit antenna of the first frame. It should be further understood that the sector identifier field and the DMG antenna identifier field can be used to uniquely determine a beam.

It can be learned that, in this solution, a sensing feedback procedure is added to resolve a problem that beam information of a plurality of targets cannot be fed back due to insufficient reserved bits in a sector-level sweep phase, and implement sensing of a plurality of moving targets and training of an optimal transmit/receive beam for sensing each moving target. There is no need to specially design a related procedure for the sensing and the training of the beam for sensing, overheads are low, and compatibility is good.

With reference to the fifth aspect, in a possible design, after that the first device receives a second sensing feedback frame, the method further includes a multiple sector ID detection procedure. The first device sends a first BRP PPDU for a plurality of times in a quasi-omni manner, where a first BRP frame included in the first BRP PPDU is used to indicate the second device to evaluate the variation of the CSI from the first device to the second device. The first device receives a second BRP PPDU for a plurality of times in a sector sweep manner, where a second BRP frame included in the second BRP PPDU is used to indicate the first device to evaluate the variation of the CSI from the second device to the first device. The first device sends a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The first device receives a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

The first device sends one first BRP PPDU each time in a quasi-omni manner, and each first BRP PPDU includes one first BRP frame and a TRN unit. Similarly, each second BRP PPDU includes one second BRP frame and a TRN unit. The TRN unit is used by a peer end to perform CSI measurement. The first device performs sector sweep for at least two cycles. In other words, the first device receives at least twice (receives one first BRP PPDU each time) by using a same receive beam.

It can be learned that, in this solution, a related frame format is modified in the multiple sector ID detection procedure, so that a transmit end and a receive end can train an optimal receive beam in a sensing scenario.

With reference to the fifth aspect, in a possible design, after that the first device receives a fourth BRP frame, the method further includes a beam combining procedure. The first device sends a fifth BRP PPDU for a plurality of times in a directional manner, where a fifth BRP frame included in the fifth BRP PPDU is used to indicate the second device to evaluate the variation of the CSI from the first device to the second device. The first device receives a sixth BRP PPDU for a plurality of times in a directional manner, where a sixth BRP frame included in the sixth BRP PPDU is used to indicate the first device to evaluate the variation of the CSI from the second device to the first device. The first device sends a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The first device receives an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

It can be learned that, in this solution, based on procedures of the sector-level sweep phase and the beam refinement protocol phase in the standard 802.11ay, sensing is performed by using a variation between CSI values measured when a same beam sweeps for a plurality of times, and a related frame structure in the sector-level sweep phase and the beam refinement protocol phase is modified to enable a sensing operation, feed back a sensing measurement result, and the like. In this way, sensing of a single moving target and training of an optimal transmit/receive beam for sensing can be implemented while original communication beam training is implemented, there is no need to specially design a related procedure for the sensing and the training of the beam for sensing, overheads are low, and compatibility is good.

According to a sixth aspect, this application provides a radio sensing method. The method includes: A second device receives a plurality of first frames in a quasi-omni manner, where each first frame includes first indication information, and the first indication information indicates the second device to evaluate a variation of CSI from a first device to the second device. The second device sends a plurality of second frames in a sector sweep manner, where each second frame includes second indication information, and the second indication information indicates the first device to evaluate a variation of CSI from the second device to the first device. The second device receives a first sensing feedback frame, where the first sensing feedback frame includes a second measurement result, and the second measurement result is used to feed back a plurality of transmit beams whose variations of CSI from the second device to the first device are greater than a CSI variation threshold. The second device sends a second sensing feedback frame, where the second sensing feedback frame includes a first measurement result, and the first measurement result is used to feed back a plurality of transmit beams whose variations of CSI from the first device to the second device are greater than a CSI variation threshold.

The first device may be an initiator, and the second device is a responder. The second device performs sector sweep for at least two cycles. In other words, the second device sends at least twice (sends one second frame each time) by using a same transmit beam. It should be understood that a sector ID field and a DMG antenna ID field are set in each second frame, and respectively indicate a transmit sector and a transmit antenna of the second frame. It should be further understood that the sector identifier field and the DMG antenna identifier field can be used to uniquely determine a beam.

With reference to the sixth aspect, in a possible design, after that the second device sends a second sensing feedback frame, the method further includes a multiple sector ID detection procedure. The second device receives a first BRP PPDU for a plurality of times in a sector sweep manner, where a first BRP frame included in the first BRP PPDU is used to indicate the second device to evaluate the variation of the CSI from the first device to the second device. The second device sends a second BRP PPDU for a plurality of times in a quasi-omni manner, where a second BRP frame included in the second BRP PPDU is used to indicate the first device to evaluate the variation of the CSI from the second device to the first device. The second device receives a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The second device sends a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

The second device sends one second BRP PPDU each time in a quasi-omni manner, and each second BRP PPDU includes one second BRP frame and a TRN unit. Similarly, each first BRP PPDU includes one first BRP frame and a TRN unit. The TRN unit is used by a peer end to perform CSI measurement. The second device performs sector sweep for at least two cycles. In other words, the second device receives at least twice (receives one second BRP PPDU each time) by using a same receive beam.

With reference to the sixth aspect, in a possible design, after that the first device receives a fourth BRP frame, the method further includes a beam combining procedure. The second device receives a fifth BRP PPDU for a plurality of times in a directional manner, where a fifth BRP frame included in the fifth BRP PPDU is used to indicate the second device to evaluate the variation of the CSI from the first device to the second device. The second device sends a sixth BRP PPDU for a plurality of times in a directional manner, where a sixth BRP frame included in the sixth BRP PPDU is used to indicate the first device to evaluate the variation of the CSI from the second device to the first device. The second device receives a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The second device sends an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

According to a seventh aspect, this application provides a first device or a chip in a first device, for example, a Wi-Fi chip. The first device includes: a sending unit, configured to send a plurality of first frames, where each first frame includes first indication information, and the first indication information indicates a second device to evaluate a variation of CSI from the first device to the second device; and a receiving unit, configured to receive a plurality of second frames in a quasi-omni manner, where each second frame includes second indication information, and the second indication information indicates the first device to evaluate a variation of CSI from the second device to the first device. The sending unit is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The receiving unit is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the first device further includes a processing unit, configured to generate a plurality of first frames. The processing unit is further configured to generate a first sensing feedback frame.

It should be understood that a sector ID field and a DMG antenna ID field are set in each first frame, and respectively indicate a transmit sector and a transmit antenna of the first frame. It should be further understood that the sector identifier field and the DMG antenna identifier field can be used to uniquely determine a beam.

With reference to the seventh aspect, in a possible design, the sending unit is further configured to send a first BRP PPDU for a plurality of times in a quasi-omni manner, where a first BRP frame included in the first BRP PPDU is used to indicate the second device to evaluate the variation of the CSI from the first device to the second device. The receiving unit is further configured to receive a second BRP PPDU for a plurality of times, where a second BRP frame included in the second BRP PPDU is used to indicate the first device to evaluate the variation of the CSI from the second device to the first device. The sending unit is further configured to send a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The receiving unit is further configured to receive a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit is further configured to generate a first BRP PPDU and a third BRP frame.

Each first BRP PPDU includes one first BRP frame and a TRN unit. Similarly, each second BRP PPDU includes one second BRP frame and a TRN unit. The TRN unit is used by a peer end to perform CSI measurement.

With reference to the seventh aspect, in a possible design, the sending unit is further configured to send a fifth BRP PPDU for a plurality of times, where a fifth BRP frame included in the fifth BRP PPDU is used to indicate the second device to evaluate the variation of the CSI from the first device to the second device. The receiving unit is further configured to receive a sixth BRP PPDU for a plurality of times, where a sixth BRP frame included in the sixth BRP PPDU is used to indicate the first device to evaluate the variation of the CSI from the second device to the first device. The sending unit is further configured to send a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The receiving unit is further configured to receive an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit is further configured to generate a fifth BRP PPDU and a seventh BRP frame that carries a first beam information list.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

According to an eighth aspect, this application provides a second device or a chip in a second device, for example, a Wi-Fi chip. The second device includes: a receiving unit, configured to receive a plurality of first frames in a quasi-omni manner, where each first frame includes first indication information, and the first indication information indicates the second device to evaluate a variation of CSI from a first device to the second device; and a sending unit, configured to send a plurality of second frames, where each second frame includes second indication information, and the second indication information indicates the first device to evaluate a variation of CSI from the second device to the first device. The receiving unit is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The sending unit is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the second device further includes a processing unit, configured to generate a plurality of second frames. The processing unit is further configured to generate a second sensing feedback frame.

It should be understood that a sector ID field and a DMG antenna ID field are set in each second frame, and respectively indicate a transmit sector and a transmit antenna of the second frame. It should be further understood that the sector identifier field and the DMG antenna identifier field can be used to uniquely determine a beam.

With reference to the eighth aspect, in a possible design, the receiving unit is further configured to receive a first BRP PPDU for a plurality of times, where a first BRP frame included in the first BRP PPDU is used to indicate the second device to evaluate the variation of the CSI from the first device to the second device. The sending unit is further configured to send a second BRP PPDU for a plurality of times in a quasi-omni manner, where a second BRP frame included in the second BRP PPDU is used to indicate the first device to evaluate the variation of the CSI from the second device to the first device. The receiving unit is further configured to receive a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The sending unit is further configured to send a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit is further configured to generate a second BRP PPDU and a fourth BRP frame.

Each second BRP PPDU includes one second BRP frame and a TRN unit. Similarly, each first BRP PPDU includes one first BRP frame and a TRN unit. The TRN unit is used by a peer end to perform CSI measurement.

With reference to the eighth aspect, in a possible design, the receiving unit is further configured to receive a fifth BRP PPDU for a plurality of times, where a fifth BRP frame included in the fifth BRP PPDU is used to indicate the second device to evaluate the variation of the CSI from the first device to the second device. The sending unit is further configured to send a sixth BRP PPDU for a plurality of times, where a sixth BRP frame included in the sixth BRP PPDU is used to indicate the first device to evaluate the variation of the CSI from the second device to the first device. The receiving unit is further configured to receive a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The sending unit is further configured to send an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit is further configured to generate a sixth BRP PPDU and an eighth BRP frame that carries a second beam information list.

Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

In any design of any one of the foregoing aspects, when the first frame is a beacon frame, the first indication information is located in an optional subelement subfield of an enhanced directional multi-gigabit (enhanced directional multi-gigabit, EDMG) capability field of the beacon frame. The first indication information may include a CSI measurement request field and a CSI variation calculation field. The CSI measurement request field is used to indicate the second device whether to measure CSI. When the CSI measurement request field is set to a first value, the CSI measurement request field is used to indicate the second device to measure the CSI. When the CSI measurement request field is set to a second value, the CSI measurement request field is used to indicate the second device not to measure the CSI. The CSI measurement request field in the first frame in this solution is set to the first value. The CSI variation calculation field is used to indicate the second device whether to calculate a CSI difference. When the CSI variation calculation field is set to a first value, the CSI variation calculation field is used to indicate the second device to calculate the CSI difference. When the CSI variation calculation field is set to a second value, the CSI variation calculation field is used to indicate the second device not to calculate the CSI difference. Optionally, the first indication information further includes one or more of the following fields: an evaluation algorithm field and a CSI variation threshold field. The evaluation algorithm field indicates a CSI evaluation algorithm, and the CSI variation threshold field indicates the CSI variation threshold.

The first value is 1, and the second value is 0; or the first value is 0, and the second value is 1.

It can be learned that, in this solution, the first indication information is carried in the optional subelement (optional subelement) subfield of the EDMG capability field of the beacon frame, to indicate the second device to evaluate the variation of the CSI from the first device to the second device. In this way, a function of the original beacon frame may not be changed (or a function of the original beacon frame may be reused), a sensing function can be implemented by using the beacon frame, there is no need to specially design a related procedure for the sensing function, overheads are low, and compatibility is good.

In any design of any one of the foregoing aspects, when the first frame is a sector sweep (sector sweep, SSW) frame, the first indication information is carried in a reserved subfield of an SSW feedback field of the SSW frame. The first indication information may include a CSI measurement request field and a CSI variation calculation field. The CSI measurement request field is used to indicate the second device whether to measure CSI. When the CSI measurement request field is set to a first value, the CSI measurement request field is used to indicate the second device to measure the CSI. When the CSI measurement request field is set to a second value, the CSI measurement request field is used to indicate the second device not to measure the CSI. The CSI measurement request field in the first frame in this solution is set to the first value. The CSI variation calculation field is used to indicate the second device whether to calculate a CSI difference. When the CSI variation calculation field is set to a first value, the CSI variation calculation field is used to indicate the second device to calculate the CSI difference. When the CSI variation calculation field is set to a second value, the CSI variation calculation field is used to indicate the second device not to calculate the CSI difference. Optionally, the first indication information further includes one or more of the following fields: an evaluation algorithm field and a CSI variation threshold field. The evaluation algorithm field indicates a CSI evaluation algorithm, and the CSI variation threshold field indicates the CSI variation threshold.

The first value is 1, and the second value is 0; or the first value is 0, and the second value is 1.

It can be learned that, in this solution, the first indication information is carried in the reserved subfield of the SSW feedback field of the SSW frame, so that a frame length of the original SSW frame may not be changed, another field in the SSW frame can be reused. In this way, both a communication beam and a sensing beam can be trained, a design is flexible, and compatibility is good.

In any design of any one of the foregoing aspects, when the second frame is an SSW frame, the second indication information is located in a reserved subfield of an SSW feedback field of the SSW frame, and the first measurement result is located in a signal-to-noise ratio (signal-to-noise ratio, SNR) report subfield of the SSW feedback field of the SSW frame. The second indication information includes a CSI variation calculation field. The CSI variation calculation field is used to indicate the first device whether to calculate a CSI difference. When the CSI variation calculation field is set to a first value, the CSI variation calculation field is used to indicate the first device to calculate the CSI difference. When the CSI variation calculation field is set to a second value, the CSI variation calculation field is used to indicate the second device not to calculate the CSI difference.

The first value is 1, and the second value is 0; or the first value is 0, and the second value is 1.

It can be learned that, in this solution, the second indication information is carried in the second frame, to indicate the first device to evaluate the variation of the CSI from the second device to the first device. This helps train an optimal sensing transmit beam of the second device, and provides a basis for subsequent application of WLAN sensing.

In any design of any one of the foregoing aspects, the first measurement result includes a first antenna identifier and a first sector identifier, and the second measurement result includes a second antenna identifier and a second sector identifier. A beam determined by the first antenna identifier and the first sector identifier is a transmit beam whose CSI difference between any two CSI measurements on a same transmit beam is greater than the CSI variation threshold and that is of all transmit beams of the first device. A beam determined by the second antenna identifier and the second sector identifier is a transmit beam whose CSI difference between any two CSI measurements on a same transmit beam is greater than the CSI variation threshold and that is of all transmit beams of the second device.

It can be learned that, in this solution, a transmit beam whose CSI variation is greater than a threshold and that is of all transmit beams of the first device is fed back by using the first measurement result, and is used as an optimal sensing transmit beam of the first device. A transmit beam whose CSI variation is greater than a threshold and that is of all transmit beams of the second device is fed back by using the second measurement result, and is used as an optimal sensing transmit beam of the second device. In a sector-level sweep process of communication, a sensing transmit beam is trained.

In any design of any one of the foregoing aspects, both the first BRP frame in the first BRP PPDU and the second BRP frame in the first BRP PPDU include a CSI measurement request field and a number of beam sweep cycles field. When a value of the CSI measurement request field is a first value, the CSI measurement request field indicates to measure CSI. The number of beam sweep cycles field indicates a number of sweep cycles of a receive beam.

Optionally, the first BRP frame in the first BRP PPDU and the second BRP frame in the first BRP PPDU further include one or more of the following fields: a transmit end sensing sector identifier field and a transmit end sensing antenna identifier mask field, used to jointly indicate a transmit sector and a transmit antenna of a BRP frame; a CSI variation threshold field, used to indicate a CSI variation threshold; and an evaluation algorithm field, used to indicate a CSI evaluation algorithm.

It can be learned that, in this solution, a sensing operation is introduced by modifying a frame format of a BRP PPDU in the multiple sector ID detection procedure, so that optimal sensing receive beams of the first device and the second device can be separately obtained through training, thereby providing a basis for subsequent application of WLAN sensing.

In any design of any one of the foregoing aspects, the first number of receive beams is carried in a directional multi-gigabit (directional multi-gigabit, DMG) beam refinement element of the third BRP frame. The second number of receive beams is carried in a DMG beam refinement element of the fourth BRP frame.

In any design of any one of the foregoing aspects, both the fifth BRP frame in the fifth BRP PPDU and the sixth BRP frame in the sixth BRP PPDU include a CSI measurement request field and a number of beam sweep cycles field. When a value of the CSI measurement request field is a first value, the CSI measurement request field indicates to measure CSI. The number of beam sweep cycles field indicates a number of sweep cycles of a receive beam.

Optionally, the fifth BRP frame in the fifth BRP PPDU and the sixth BRP frame in the sixth BRP PPDU further include one or more of the following fields: a transmit end sensing sector identifier field and a transmit end sensing antenna identifier mask field, used to jointly indicate a transmit sector and a transmit antenna of a BRP frame; a CSI variation threshold field, used to indicate the CSI variation threshold; and an evaluation algorithm field, used to indicate a CSI evaluation algorithm.

It can be learned that, in this solution, a sensing operation is introduced by modifying a frame format of a BRP PPDU in the beam combining procedure, so that optimal sensing transmit and receive beams of the first device and the second device can be combined, thereby providing a basis for subsequent application of WLAN sensing.

In any design of any one of the foregoing aspects, the first beam information list is located in a sensing measurement feedback element of the seventh BRP frame, and the second beam information list is located in a sensing measurement feedback element of the eighth BRP frame. An element identifier of the sensing measurement feedback element is a reserved value, for example, 13.

In any design of any one of the foregoing aspects, the first beam information list includes antenna identifiers and sector identifiers that correspond to transmit beams in a plurality of transmit and receive beam pairs whose variations of CSI from the second device to the first device are greater than the CSI variation threshold, and a receive antenna identifier corresponding to each transmit beam. Similarly, the second beam information list includes antenna identifiers and sector identifiers that correspond to transmit beams in a plurality of transmit and receive beam pairs whose variations of CSI from the first device to the second device are greater than the CSI variation threshold, and a receive antenna identifier corresponding to each transmit beam. It should be understood that one transmit and receive beam pair includes one transmit beam and one receive beam. One antenna identifier and one sector identifier can be used to uniquely determine one beam. However, because the receive beam is used by a receive end to receive data, a direction of the receive beam does not need to be notified to a transmit end, and only needs to be known by the receive end. Therefore, the first beam information list may not include a sector identifier of the receive beam.

According to a ninth aspect, this application provides a first device, including a transceiver and optionally a processor.

In a design, the transceiver is configured to send a plurality of first frames, where each first frame includes first indication information, and the first indication information indicates a second device to evaluate a variation of CSI from the first device to the second device. The transceiver is further configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The transceiver is further configured to send a third frame, where the third frame includes a second measurement result, and the second measurement result is used to feed back a transmit beam whose variation of CSI from the second device to the first device is greater than a CSI variation threshold.

Optionally, the processor is configured to generate a plurality of first frames, and is further configured to generate a third frame.

In another design, the transceiver is configured to send a plurality of first frames, where each first frame includes first indication information, and the first indication information indicates a second device to evaluate a variation of CSI from the first device to the second device. The transceiver is further configured to receive a plurality of second frames in a quasi-omni manner, where each second frame includes second indication information, and the second indication information indicates the first device to evaluate a variation of CSI from the second device to the first device. The transceiver is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The transceiver is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processor is configured to generate a plurality of first frames, and is further configured to generate a first sensing feedback frame.

According to a tenth aspect, this application provides a second device, including a transceiver and optionally a processor.

In a design, the transceiver is configured to receive a plurality of first frames in a quasi-omni manner, where each first frame includes first indication information, and the first indication information indicates the second device to evaluate a variation of CSI from a first device to the second device. The transceiver is further configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The transceiver is further configured to receive a third frame, where the third frame includes a second measurement result, and the second measurement result is used to feed back a transmit beam whose variation of CSI from the second device to the first device is greater than a CSI variation threshold.

Optionally, the processor is configured to generate a plurality of second frames.

In another design, the transceiver is configured to receive a plurality of first frames in a quasi-omni manner, where each first frame includes first indication information, and the first indication information indicates the second device to evaluate a variation of CSI from a first device to the second device. The transceiver is further configured to send a plurality of second frames, where each second frame includes second indication information, and the second indication information indicates the first device to evaluate a variation of CSI from the second device to the first device. The transceiver is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The transceiver is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processor is configured to generate a plurality of second frames, and is further configured to generate a second sensing feedback frame.

According to an eleventh aspect, this application provides a first device. The first device may exist in a product form of a chip, and a structure of the first device includes an input/output interface and a processing circuit.

In a design, the input/output interface is configured to send a plurality of first frames, where each first frame includes first indication information, and the first indication information indicates a second device to evaluate a variation of CSI from the first device to the second device. The input/output interface is further configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The input/output interface is further configured to send a third frame, where the third frame includes a second measurement result, and the second measurement result is used to feed back a transmit beam whose variation of CSI from the second device to the first device is greater than a CSI variation threshold.

Optionally, the processing circuit is configured to generate a plurality of first frames, and is further configured to generate a third frame.

In another design, the input/output interface is configured to send a plurality of first frames, where each first frame includes first indication information, and the first indication information indicates a second device to evaluate a variation of CSI from the first device to the second device. The input/output interface is further configured to receive a plurality of second frames in a quasi-omni manner, where each second frame includes second indication information, and the second indication information indicates the first device to evaluate a variation of CSI from the second device to the first device. The input/output interface is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The input/output interface is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processing circuit is configured to generate a plurality of first frames, and is further configured to generate a first sensing feedback frame.

According to a twelfth aspect, this application provides a second device. The second device may exist in a product form of a chip, and a structure of the second device includes an input/output interface and a processing circuit.

In a design, the input/output interface is configured to receive a plurality of first frames in a quasi-omni manner, where each first frame includes first indication information, and the first indication information indicates the second device to evaluate a variation of CSI from a first device to the second device. The input/output interface is further configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The input/output interface is further configured to receive a third frame, where the third frame includes a second measurement result, and the second measurement result is used to feed back a transmit beam whose variation of CSI from the second device to the first device is greater than a CSI variation threshold.

Optionally, the processing circuit is configured to generate a plurality of second frames.

In another design, the input/output interface is configured to receive a plurality of first frames in a quasi-omni manner, where each first frame includes first indication information, and the first indication information indicates the second device to evaluate a variation of CSI from a first device to the second device. The input/output interface is further configured to send a plurality of second frames, where each second frame includes second indication information, and the second indication information indicates the first device to evaluate a variation of CSI from the second device to the first device. The input/output interface is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The input/output interface is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processing circuit is configured to generate a plurality of second frames, and is further configured to generate a second sensing feedback frame.

According to a thirteenth aspect, this application provides a computer-readable storage medium. The computer-readable storage medium stores program instructions, and when the program instructions are run on a computer, the computer is enabled to perform the method according to the first aspect, the second aspect, the fifth aspect, or the sixth aspect.

According to a fourteenth aspect, this application provides a computer program product including program instructions. When the computer program product runs on a computer, the computer performs the method according to the first aspect, the second aspect, the fifth aspect, or the sixth aspect.

Embodiments of this application are implemented, so that a conventional beamforming training mechanism in the 802.11ay can be combined with WLAN sensing, sensing and training of a beam for sensing are implemented while original communication beam training is implemented, there is no need to specially design a related procedure for the sensing and the training of the beam for sensing, overheads are low, and compatibility is good.

### BRIEF DESCRIPTION OF DRAWINGS

To describe the technical solutions in embodiments of this application more clearly, the following briefly describes the accompanying drawings used for describing embodiments.
FIG. 1 is a diagram of a system architecture according to an embodiment of this application;
FIG. 2 is a schematic diagram of a structure of an AP or a STA according to an embodiment of this application;
FIG. 3a is a schematic diagram of a beamforming training process according to an embodiment of this application;
FIG. 3b is a schematic diagram of another beamforming training process according to an embodiment of this application;
FIG. 3c is a schematic diagram of a beam direction in beamforming training according to an embodiment of this application;
FIG. 4a is a schematic diagram of a time sequence of beamforming training for sending a beacon frame according to an embodiment of this application;
FIG. 4b is a schematic diagram of a time sequence of beamforming training for sending an SSW frame according to an embodiment of this application;
FIG. 5A and FIG. 5B are a schematic flowchart of a radio sensing method according to an embodiment of this application;
FIG. 6A to FIG. 6C are a schematic diagram of a frame format of a beacon frame according to an embodiment of this application;
FIG. 7 is a schematic diagram of a frame format of an SSW frame in ISS according to an embodiment of this application;
FIG. 8 is a schematic diagram of a frame format of an SSW frame in RSS according to an embodiment of this application;
FIG. 9 is a schematic diagram of a frame format of an SSW feedback frame according to an embodiment of this application;
FIG. 10 is a schematic time sequence diagram of an SLS phase according to an embodiment of this application;
FIG. 11 is another schematic time sequence diagram of an SLS phase according to an embodiment of this application;
FIG. 12 is a schematic flowchart of a MID procedure of a radio sensing method according to an embodiment of this application;
FIG. 13A and FIG. 13B are a schematic diagram of a frame format of a BRP sensing request element according to an embodiment of this application;
FIG. 14 is a schematic diagram of a frame format of a DMG beam refinement element according to an embodiment of this application;
FIG. 15 is a schematic flowchart of a BC procedure of a radio sensing method according to an embodiment of this application;
FIG. 16 is a schematic time sequence diagram of a BRP phase according to an embodiment of this application;
FIG. 17A and FIG. 17B are another schematic flowchart of a radio sensing method according to an embodiment of this application;
FIG. 18 is a schematic diagram of a frame format of a first sensing feedback frame according to an embodiment of this application;
FIG. 19 is a schematic time sequence diagram of a radio sensing method according to an embodiment of this application;
FIG. 20 is a schematic diagram of a structure of a first device according to an embodiment of this application; and
FIG. 21 is a schematic diagram of a structure of a second device according to an embodiment of this application;

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

To facilitate understanding of the technical solutions in embodiments of this application, the following describes a system architecture and/or an application scenario of a radio sensing method provided in embodiments of this application. It may be understood that scenarios described in embodiments of this application are intended to describe the technical solutions in embodiments of this application more clearly, and do not constitute a limitation on the technical solutions provided in embodiments of this application.

Embodiments of this application provide the radio sensing method. A related frame structure and/or a feedback procedure may be modified based on a beamforming training process in the standard 802.11ay, and a conventional beamforming training mechanism in the 802.11ay may be combined with WLAN sensing. In this way, sensing of a single target/a plurality of targets and training of a beam for sensing are implemented while original communication beam training is performed, there is no need to specially design a related procedure for the sensing and the training of the beam for sensing, overheads are low, and compatibility is good. The method may be applied to a wireless communication system. The wireless communication system may be a wireless local area network or a cellular network. The method may be implemented by a communication device in the wireless communication system or a chip or a processor in a communication device. The communication device may be an access point (access point, AP) device or a station (station, STA) device. The access point device and the station device each may be a single-link device or a multi-link device.

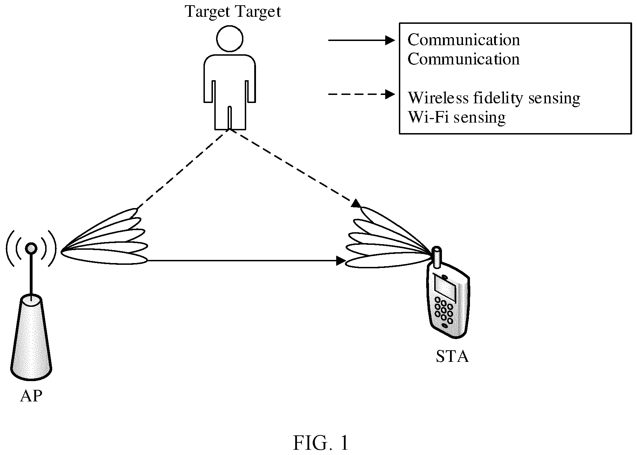

FIG. 1 is a diagram of a system architecture according to an embodiment of this application. As shown in FIG. 1, the system architecture includes at least two WLAN devices (for example, an AP and a STA in FIG. 1). One WLAN device (for example, the AP) may perform beamforming training with the other WLAN device (for example, the STA). Optionally, a target shown in FIG. 1 may be a moving object. The WLAN device may support the standard 802.11 . The standard 802.11 may include the 802.11ay or the 802.11ad, and may further include standards such as the 802.11be, the 802.11ax, and the 802.11ac. Certainly, with continuous evolution and development of communication technologies, the communication protocol may further include a next-generation 802.11 standard and the like. In this application, an apparatus for implementing the method in this application may be an AP or a STA in a WLAN, or a chip or a processing system installed in an AP or a STA.

An access point (AP) is an apparatus having a wireless communication function, supports communication according to a WLAN protocol, has a function of communicating with another device (for example, a station or another access point) in a WLAN, and certainly, may further have a function of communicating with another device. In a WLAN system, the access point may be referred to as an access point station (AP STA). The apparatus having a wireless communication function may be an entire device, or may be a chip, a processing system, or the like installed in an entire device. The device in which the chip or the processing system is installed may implement the method and a function in embodiments of this application under control of the chip or the processing system. The AP in embodiments of this application is an apparatus that provides a service for a STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and the function in embodiments of this application.

A station (STA) is an apparatus having a wireless communication function, supports communication by using a WLAN protocol, and has a capability of communicating with another station or access point in a WLAN. In a WLAN system, the station may be referred to as a non-access point station (non-access point station, non-AP STA). For example, the STA is any user communication device that allows a user to communicate with an AP and further communicate with a WLAN. The apparatus having a wireless communication function may be an entire device, or may be a chip, a processing system, or the like installed in an entire device. The device in which the chip or the processing system is installed may implement the method and the function in embodiments of this application under control of the chip or the processing system. For example, the STA may be user equipment that can be connected to an internet, such as a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, an internet of things node in an internet of things, a vehicle-mounted communication apparatus in an internet of vehicles, an entertainment device, a game device or system, or a global positioning system device. Alternatively, the STA may be a chip and a processing system in the foregoing terminals.

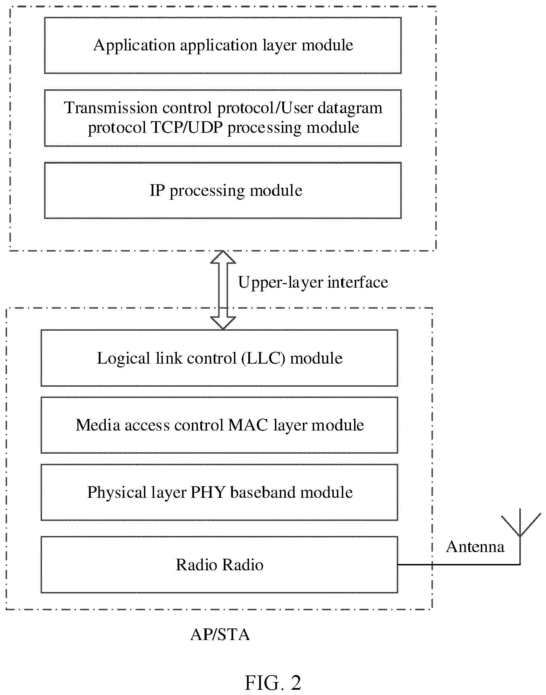

Specifically, this application focuses on a method for implementing the WLAN sensing by using the beamforming training process in the standard 802.11ay. The method may be implemented by a controller of a wireless communication network device. To be specific, the controller implements the WLAN sensing function in this application by sending or receiving signaling and an interaction procedure designed in this application. This application focuses on an interaction procedure and negotiation between two parties of the WLAN sensing, namely, an AP and a STA, and does not improve internal structures of the AP and the STA. The following briefly describes structures of the AP and the STA. FIG. 2 is a schematic diagram of a structure of an AP or a STA according to an embodiment of this application. As shown in FIG. 2, the AP or the STA may include an application (application) layer module, a transmission control protocol (transmission control protocol, TCP)/user datagram protocol (user datagram protocol, UDP) processing module, an internet protocol (internet protocol, IP) processing module, a logical link control (logical link control, LLC) module, a media access control (media access control, MAC) layer module, a physical (physical, PHY) layer baseband module, radio (radio), an antenna, and the like. The AP or the STA shown in FIG. 2 may be of a single-antenna structure, or may be of a multi-antenna structure. This is not limited in this embodiment of this application.

A WLAN system can provide high-speed and low-latency transmission. With continuous evolution of WLAN application scenarios, the WLAN system is applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display screen, a television, a speaker, a refrigerator, or a washing machine) in a smart home, a node in an internet of things, an entertainment terminal (for example, a wearable device such as augmented reality (augmented reality, AR) or virtual reality (virtual reality, VR)), an intelligent device in intelligent office (for example, a printer, a projector, a loudspeaker, or a speaker), an internet of vehicles device in an internet of vehicles, infrastructure in a daily life scenario (for example, a vending machine, a self-service navigation console of a shopping mall or supermarket, a self-service cashier, or a self-service dining machine), equipment for large sports and music venues, or the like. Specific forms of the STA and the AP are not limited in this embodiment of this application, and are merely examples for description herein.

The foregoing content briefly describes the system architecture provided in this application. To better understand the technical solutions provided in this application, the following briefly describes the beamforming training (Beamforming Training, BFT) process in the standard 802.11ay.

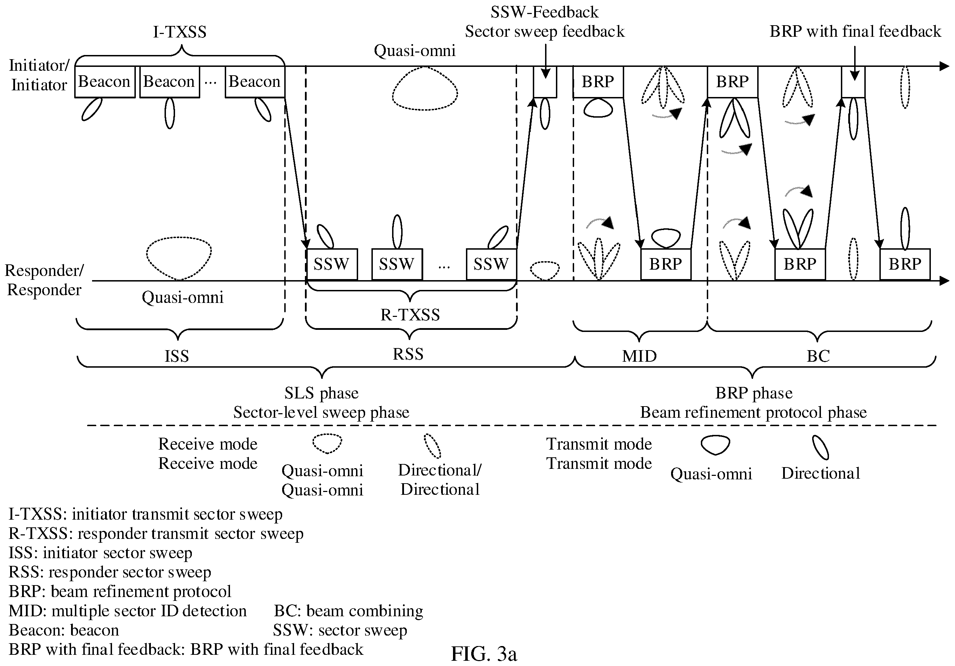

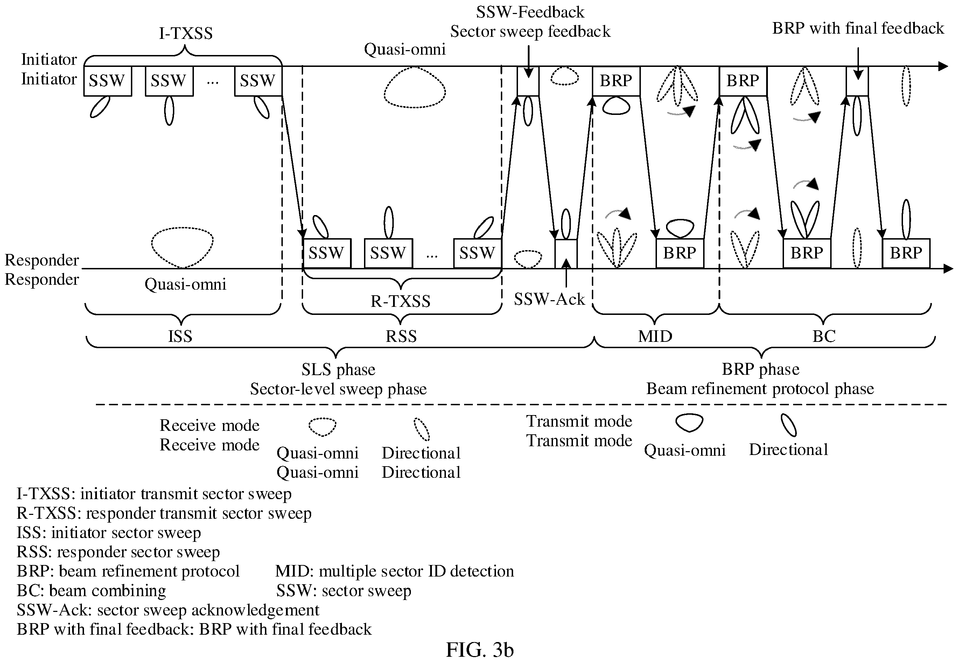

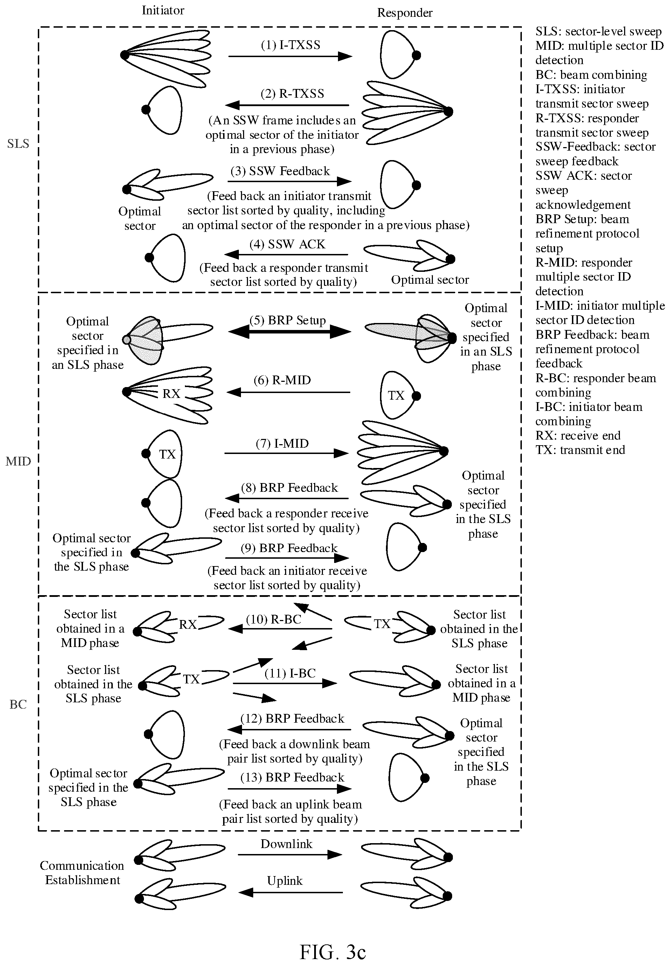

The beamforming training process in the standard 802.11ay is mainly divided into two phases: a sector-level sweep (sector-level sweep, SLS) phase and a beam refinement protocol (beam refinement protocol, BRP) phase. FIG. 3a and FIG. 3b respectively show two beamforming training processes. In addition, FIG. 3c is a schematic diagram of a beam direction of each frame in an interaction procedure in the beamforming training processes shown in FIG. 3a and FIG. 3b. As shown in FIG. 3a and FIG. 3b, the beamforming training process in the standard 802.11ay includes the following phases.

### 1. Sector-level sweep phase (SLS phase)

The sector-level sweep phase includes four parts: initiator sector sweep (initiator sector sweep, ISS), responder sector sweep (responder sector sweep, RSS), sector sweep (sector sweep, SSW) feedback (SSW Feedback), and sector sweep acknowledgement (SSWACK).

The initiator sector sweep (ISS) is used to train a directional transmit beam of an initiator. The initiator sends training data in a directional manner by using a beam of a specific width, and a responder receives the training data in a quasi-omni manner. The responder sector sweep (RSS) is used to train a directional transmit beam of the responder. The responder sends training data in a directional manner by using a beam of a specific width, where the training data includes optimal transmit sector information of the initiator in a previous phase (that is, an ISS phase). In this case, the initiator receives the training data in a quasi-omni manner. The sector sweep feedback (SSW Feedback) is used by the initiator to feed back optimal transmit sector information of the responder in a previous phase (namely, an RSS phase). In this case, the responder is in a quasi-omni receiving mode. The sector sweep acknowledgement (SSW ACK) does not exist when sector-level sweep is performed before a data transfer interval (data transfer interval, DTI). If the sector-level sweep is performed in the data transfer interval, the sector sweep acknowledgement (SSW ACK) is required to acknowledge receipt of an SSW feedback frame sent by the initiator.

It should be understood that the training data in the ISS phase may be a beacon (beacon) frame or an SSW frame, and the training data in the RSS phase may be an SSW frame.

### 2. Beam refinement protocol phase (BRP phase)

The beam refinement protocol phase includes BRP setup (also referred to as initialization setting), multiple sector ID detection (multiple sector ID detection, MID), beam combining (beam combining, BC), beam refinement transaction (beam refinement transaction, BRT), and the like.

The initialization setting (namely, BRP setup) is used to configure training information in subsequent multiple sector ID detection (MID) and beam combining (BC) phases. A function of the multiple sector ID detection is to train optimal receive beams of an initiator and a responder. A training process is similar to a training process of an optimal transmit beam (the foregoing ISS phase and RSS phase). A difference lies in that training data is sent in a quasi-omni mode, and training data is received in a directional mode. It should be understood that training data in a MID phase is a BRP physical layer protocol data unit (Physical layer protocol data unit, PPDU). The BRP PPDU includes a BRP frame and a training unit (training unit, TRN Unit). A function of the beam combining is to combine transmit and receive beams that are separately trained in the sector-level sweep phase and the multiple sector ID detection phase, to obtain an optimal transmit and receive beam pair, so as to find an optimal directional communication link. In this case, a directional mode is used to send and receive the training data. After the beam combining, at least one beam refinement transaction procedure is further required to perform further beam refinement transaction, so as to find a more refined transmit and receive beam pair through iteration, thereby improving quality of a communication link. It should be understood that this application does not include a beam refinement transaction procedure. Therefore, the beam refinement transaction procedure is not shown in FIG. 3a and FIG. 3b.

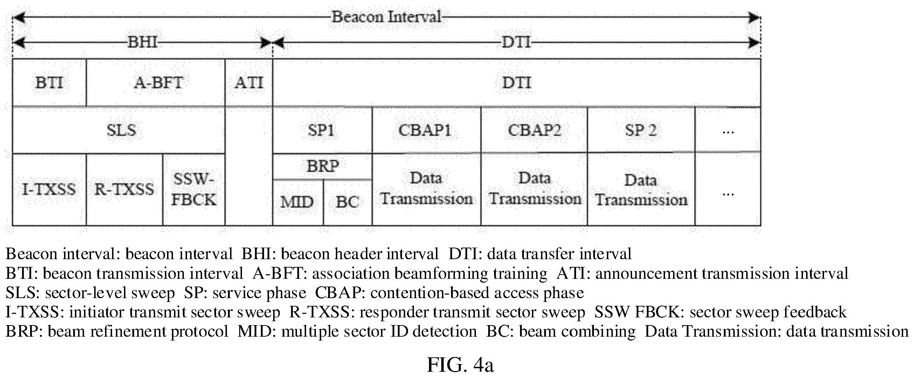

As shown in FIG. 3a and FIG. 3b, in the ISS phase of beamforming training, both a beacon (beacon) frame and a sector sweep (SSW) frame may be sent. When different frames are sent, the beamforming training process is in different time intervals of one beacon interval (beacon interval, BI). In an implementation, FIG. 4a is a schematic diagram of a time sequence of beamforming training for sending a beacon frame according to an embodiment of this application. As shown in FIG. 4a, in a beacon interval (BI), when a beacon frame is sent in the beamforming training process, a sector-level sweep process is performed in a beacon transmission interval (beacon transmission interval, BTI) and association beamforming training (association beamforming training, A-BFT). After an announcement transmission interval (announcement transmission interval, ATI), beam refinement is started in a data transfer interval. In this case, a beam refinement protocol process needs to undergo three phases: BRP setup (also referred to as initialization setting), multiple sector ID detection, and beam combining, finally, data transmission is performed.

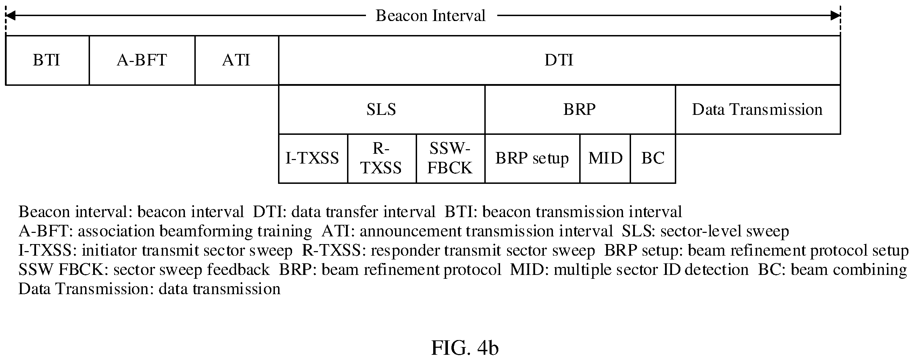

In another implementation, FIG. 4b is a schematic diagram of a time sequence of beamforming training for sending an SSW frame according to an embodiment of this application. As shown in FIG. 4b, in a BI, when an SSW frame is sent in the beamforming training process, a sector-level sweep process is performed in a data transfer interval, and is no longer performed synchronously with a BTI and an A-BFT. In the data transfer interval, the sector-level sweep process is first started, and then a beam refinement protocol process is performed. In this case, the beam refinement protocol process includes two phases: multiple sector ID detection and beam combining, and optionally further includes a BRP setup (also referred to as initialization setting) phase. Finally, data transmission starts.

It can be learned that a main objective of the beamforming training process in the standard 802.11ay is to obtain an optimal communication beam through a plurality of times of beam sweeping. In a future 802.11 standard, it is considered that the WLAN sensing is introduced into the beamforming training mechanism. However, how to combine the conventional beamforming training mechanism with the WLAN sensing and perform WLAN sensing without affecting normal communication becomes an urgent problem to be resolved.

The WLAN sensing can be substantially classified into two types. One is a radar technology, which enables a wireless device to sense and detect a target by sending a radar signal. The other one is to sense and detect a target by obtaining channel feature changes at different moments by using channel state information (channel state information, CSI). This application focuses on a manner of sensing and detecting a target by using CSI.

Embodiments of this application provide the radio sensing method. Sensing is performed by using a variation between CSI values measured when a same beam sweeps for a plurality of times, a related frame structure and a feedback procedure are modified based on the beamforming training process in the standard 802.11ay, and the conventional beamforming training mechanism in the 802.11ay can be combined with the WLAN sensing. In this way, sensing of a single target/a plurality of targets and training of a beam for sensing are implemented while original communication beam training is performed, there is no need to specially design a related procedure for the sensing and the training of the beam for sensing, overheads are low, and compatibility is good.

The following describes in detail the technical solutions provided in this application with reference to more accompanying drawings.

The technical solutions provided in this application are described in detail by using two embodiments. Embodiment 1 describes how to design a related frame structure based on a beamforming training process in the standard 802.11ay when only a single optimal sensing beam needs to be fed back in a sensing scenario, to implement both communication beam training and radio sensing. Embodiment 2 describes how to design a related frame structure and a feedback procedure based on a beamforming training process in the standard 802.11 ay when one or more optimal sensing beams are fed back in a sensing scenario, to implement both communication beam training and radio sensing.

It may be understood that a first device in this application may represent an initiator (initiator), and the initiator may be the AP or the STA in FIG. 1. In other words, the first device may be the AP or the STA. A second device in this application may represent a responder (responder), and the responder may be the STA or the AP in FIG. 1. In other words, the second device may be the STA or the AP.

It may be further understood that both the first device and the second device in this application support the standard 802.11, for example, the standard 802.11ay, and may further support another 802.11 standard, for example, 802.11be, 802.11ax, or a next-generation standard of 802.11be.

### Embodiment 1

Embodiment 1 of this application mainly describes how to modify a related frame format in the beamforming training process based on the beamforming training process in the standard 802.11ay when a single moving target is sensed and only a single optimal sensing beam needs to be fed back, to implement both communication beam training and radio sensing.

Because the beamforming training process in the standard 802.11ay includes an SLS phase and a BRP phase, a radio sensing method provided in Embodiment 1 of this application also includes an SLS phase and a BRP phase. The SLS phase includes an ISS procedure, an RSS procedure, and an SSW feedback procedure, and the BRP phase includes a MID procedure and a BC procedure.

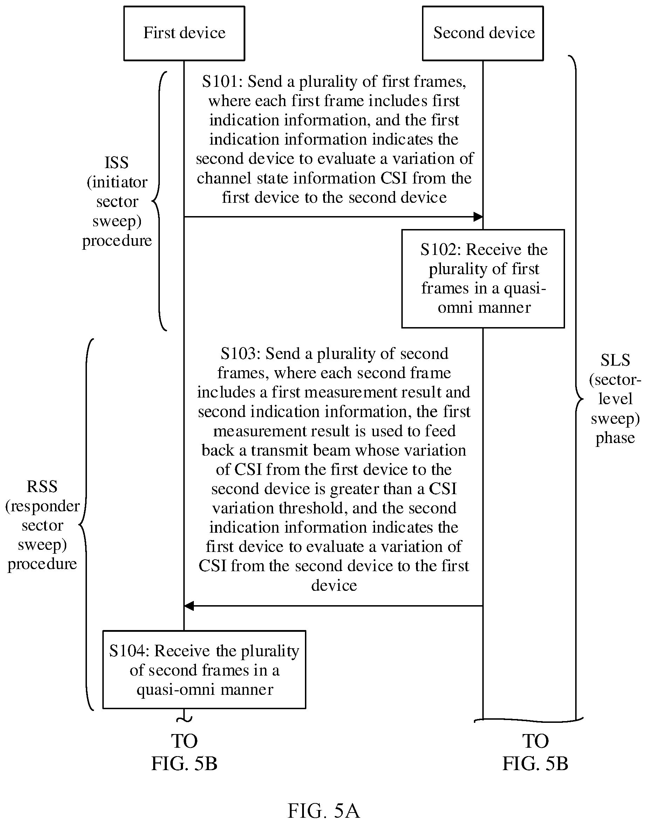

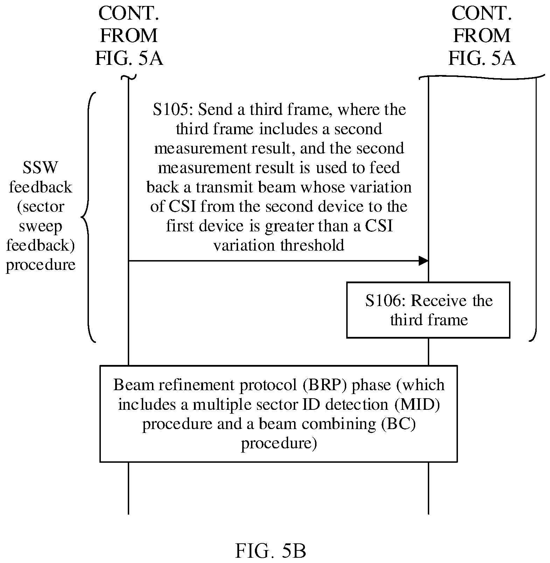

FIG. 5A and FIG. 5B are a schematic flowchart of the radio sensing method according to an embodiment of this application. As shown in FIG. 5A and FIG. 5B, the ISS procedure includes a step S101 and a step S102, and may be used to train an optimal sensing transmit beam of the first device (or the initiator). The RSS procedure includes a step S103 and a step S104, may be used to train an optimal sensing transmit beam of the second device (or the responder), and may be used to feed back the optimal sensing transmit beam of the first device obtained in the ISS procedure. The SSW feedback procedure includes a step S105 and a step S106, and may be used to feed back the optimal sensing transmit beam obtained in the RSS procedure.

Specifically, the radio sensing method shown in FIG. 5A and FIG. 5B includes but is not limited to the following steps.

S101: A first device sends a plurality of first frames, where each first frame includes first indication information, and the first indication information indicates a second device to evaluate a variation of channel state information CSI from the first device to the second device.

S102: The second device receives the plurality of first frames in a quasi-omni manner.

Optionally, the first device sends the first frame in a sector sweep manner, the second device receives the first frame in the quasi-omni manner, and the second device compares variations between CSI values obtained when a same transmit beam of the first device sweeps for a plurality of times, to determine whether there is a moving target in a swept area of the beam. The second device records a transmit beam of which there is a moving target in a swept area. It should be understood that, in this embodiment of this application, that the first device sends the first frame in a sector sweep manner may be understood as that the first device sends the first frame in a directional manner by using a beam of a specific width each time. A sector identifier (Sector ID) field and a directional multi-gigabit (directional multi-gigabit, DMG) antenna identifier (DMG Antenna ID) field are set in the first frame, and respectively indicate a transmit sector and a transmit antenna of the first frame. It should be further understood that the sector identifier field and the DMG antenna identifier field can be used to uniquely determine a beam. A same transmit sector and a same transmit antenna send (or sweep) at least twice. Therefore, the first device sends the plurality of first frames. The plurality of first frames may be sent in one beacon interval (BI), or may be sent in a plurality of BIs. To be specific, the first device may perform sweeping for a plurality of cycles in the BI, or the first device performs sweeping for one cycle in one BI, and completes sweeping for a plurality of cycles in the plurality of BIs.

Optionally, each first frame includes first indication information. The first indication information indicates the second device (or a peer end) to evaluate a variation of CSI from the first device to the second device, or is used to indicate a peer end (herein referred to as the second device or a responder) to enable a sensing operation.

The following describes in detail an implementation of the first frame.

### (1) The first frame is a beacon frame.

Optionally, when the first frame is the beacon frame, an element field may be newly added to an optional subelement (optional subelement) subfield of an enhanced directional multi-gigabit (enhanced directional multi-gigabit, EDMG) capability field of the beacon frame, to indicate to enable the sensing operation or indicate the second device (or the peer end) to evaluate the variation of the CSI from the first device to the second device. In other words, the first indication information may be located in the newly added element field of the optional subelement subfield of the EDMG capability field of the beacon frame. In this application, a newly added element is referred to as a sensing control element (sensing control element). It should be understood that the newly added element may have another name. This is not limited in this application. In other words, the first indication information is specifically carried in the sensing control element of the beacon frame, and is used to indicate the peer end (herein referred to as the second device or the responder) to enable the sensing operation or evaluate the variation of the CSI from the first device to the second device. A subelement identifier (subelement ID) of the sensing control element is one of reserved values (5 to 255), for example, 5.

Optionally, the first indication information (namely, the sensing control element) includes a CSI measurement request field and a CSI variation calculation field. When a value of the CSI measurement request field is a first value, the CSI measurement request field indicates the peer end (herein referred to as the second device or the responder) to measure CSI. When a value of the CSI measurement request field is a second value, the CSI measurement request field indicates the peer end (herein referred to as the second device or the responder) not to measure CSI. In this embodiment of this application, the CSI measurement request field of the beacon frame is set to the first value. The CSI variation calculation field is used to indicate the second device whether to calculate a CSI difference. When a value of the CSI variation calculation field is a first value, the CSI variation calculation field is used to indicate the second device to calculate the CSI difference. When a value of the CSI variation calculation field is a second value, the CSI variation calculation field is used to indicate the second device not to calculate the CSI difference. The first value may be 1, and the second value is 0; or the first value is 0, and the second value is 1. The first indication information further includes one or more of the following fields: an evaluation algorithm field and a CSI variation threshold field. The evaluation algorithm field indicates a CSI evaluation algorithm, and the CSI variation threshold field indicates a CSI variation threshold. It should be understood that the CSI evaluation algorithm is used to evaluate (or calculate) a CSI value, and the CSI variation threshold is compared with a variation between CSI values measured when a same beam sweeps a same location for a plurality of times, to determine whether there is a moving target (target) in a swept area of the beam.

It should be further understood that the fields included in the first indication information may alternatively have other names. This is not limited in this embodiment of this application.

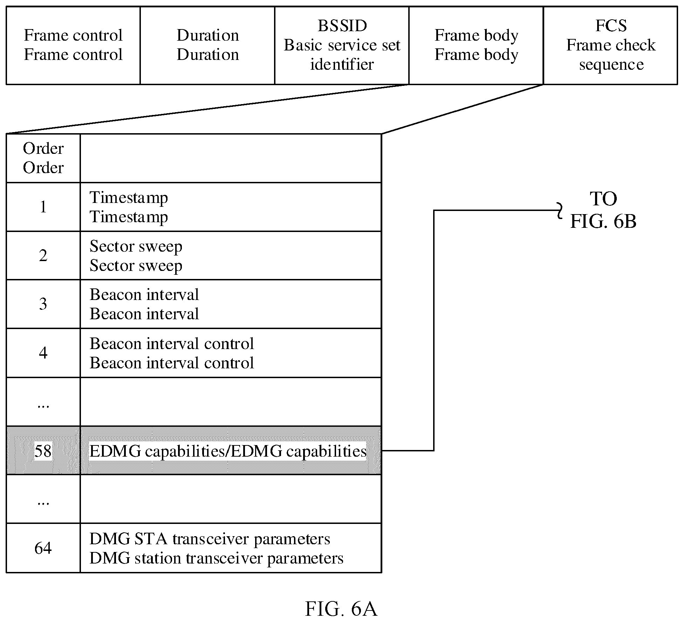

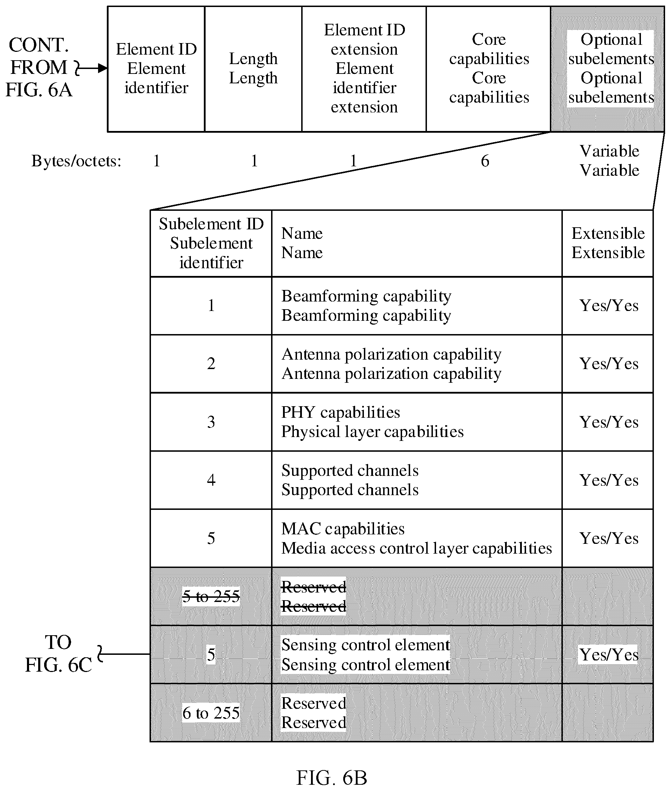

FIG. 6A to FIG. 6C are a schematic diagram of a frame format of a beacon frame according to an embodiment of this application. As shown in FIG. 6A and FIG. 6B, a frame body (frame body) of the beacon frame includes an EDMG capability (EDMG Capability) field, and an optional subelement (optional subelement) subfield of the EDMG capability field includes a sensing control element. A subelement identifier (subelement ID) of the sensing control element is one of reserved values (5 to 255), for example, a subelement identifier 5 in FIG. 6B. In other words, when a subelement identifier of the optional subelement (optional subelement) subfield is a reserved value, it indicates that the optional subelement is the sensing control element. The sensing control element (or the first indication information) includes a CSI measurement request (CSI Measurement Request) field, an evaluation algorithm (Evaluation algorithm) field, a CSI variation threshold (CSI Variation Threshold) field, and a CSI variation calculation (CSI Variation Calculation) field. A length of the CSI measurement request field is 1 bit, and when a value of the CSI measurement request field is a first value, the CSI measurement request field indicates to enable CSI measurement. It should be understood that the CSI measurement request field of the beacon frame is set to the first value. A length of the evaluation algorithm field is 2 bits, and the evaluation algorithm field indicates a CSI evaluation algorithm. A length of the CSI variation threshold field is 2 bits, and the CSI variation threshold field indicates a CSI variation threshold. When a variation between CSI values measured when a same transmit beam sweeps for a plurality of times is greater than the CSI variation threshold, it indicates that there is a moving target (target) in a swept area of the beam, and the responder (namely, the second device) stores a transmit antenna ID and a transmit sector ID that correspond to the transmit beam. On the contrary, when a variation between CSI values measured when a same transmit beam sweeps for a plurality of times is less than or equal to the CSI variation threshold, it indicates that there is no moving target in a swept area of the beam. A length of the CSI variation calculation field is 1 bit, and the CSI variation calculation field is used to indicate the peer end whether to calculate a CSI difference. When a value of the CSI variation calculation field is a first value, the CSI variation calculation field is used to indicate the peer end to calculate the CSI difference. When a value of the CSI variation calculation field is a second value, the CSI variation calculation field is used to indicate the peer end not to calculate the CSI difference. The first value may be 1, and the second value may be 0; or the first value is 0, and the second value is 1.

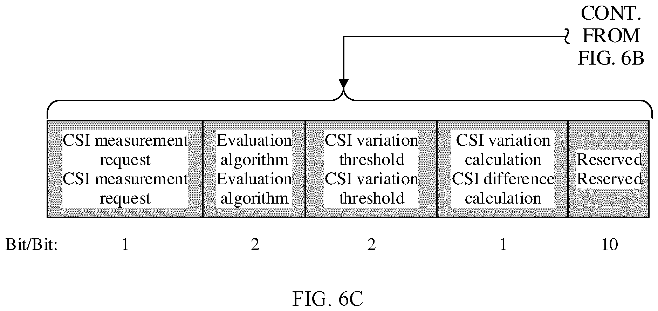

It should be understood that the fields included in the sensing control element in FIG. 6C may alternatively have other names. This is not limited in this embodiment of this application.

Optionally, a CSI variation calculation field of a beacon frame sent by a same beam for a first time need to be set to the second value, and a CSI variation calculation field of a beacon frame sent by a same beam for an N^{th} time may be set to the first value. N is an integer greater than or equal to 2.

Optionally, the CSI evaluation algorithm and/or the CSI variation threshold may also be specified in a standard, and does not need to be indicated by adding a field to a beacon frame. In other words, the sensing control element shown in FIG. 6B may not include the evaluation algorithm field and/or the CSI variation threshold field.

### (2) The first frame is an SSW frame.

Optionally, when the first frame is the SSW frame, a reserved subfield of an SSW feedback field of the SSW frame may be used to carry the first indication information. The first indication information indicates the peer end (herein referred to as the second device or the responder) to enable the sensing operation or evaluate the variation of the CSI from the first device to the second device.

Optionally, the first indication information includes a CSI measurement request field and a CSI variation calculation field. When a value of the CSI measurement request field is a first value, the CSI measurement request field indicates the peer end (herein referred to as the second device or the responder) to measure CSI. When a value of the CSI measurement request field is a second value, the CSI measurement request field indicates the peer end (herein referred to as the second device or the responder) not to measure CSI. In this embodiment of this application, the CSI measurement request field of the SSW frame is set to the first value. The CSI variation calculation field is used to indicate the second device whether to calculate a CSI difference. When a value of the CSI variation calculation field is a first value, the CSI variation calculation field is used to indicate the peer end (herein referred to as the second device or the responder) to calculate the CSI difference. When a value of the CSI variation calculation field is a second value, the CSI variation calculation field is used to indicate the peer end (herein referred to as the second device or the responder) not to calculate the CSI difference. The first value may be 1, and the second value is 0; or the first value is 0, and the second value is 1. The first indication information further includes one or more of the following fields: an evaluation algorithm field and a CSI variation threshold field. The evaluation algorithm field indicates a CSI evaluation algorithm, and the CSI variation threshold field indicates a CSI variation threshold. It should be understood that the CSI evaluation algorithm is used to calculate a CSI value, and the CSI variation threshold is compared with a variation between CSI values measured when a same beam sweeps a same location for a plurality of times, to determine whether there is a moving target (target) in a swept area of the beam.

It should be further understood that the fields included in the first indication information may alternatively have other names. This is not limited in this embodiment of this application.

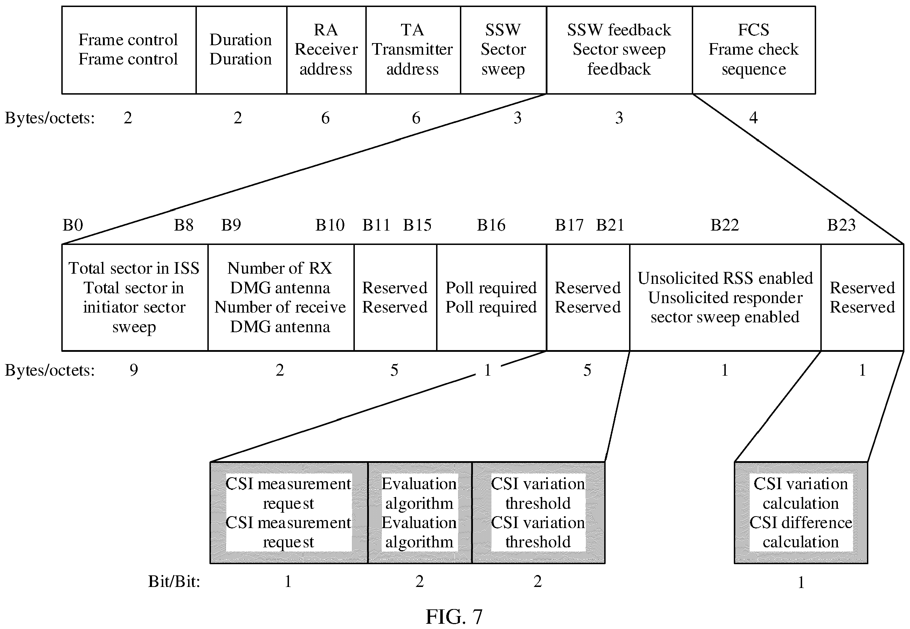

FIG. 7 is a schematic diagram of a frame format of an SSW frame in ISS according to an embodiment of this application. As shown in FIG. 7, an SSW feedback field of the SSW frame includes three reserved subfields. A length of two reserved subfields is 5 bits (B11 to B15 and B17 to B21), and a length of the other reserved subfield is 1 bit (B23). A first reserved subfield (for example, B17 to B21 in FIG. 7) includes a 1-bit CSI measurement request field, a 2-bit evaluation algorithm field, and a 2-bit CSI variation threshold field, and a second reserved subfield (B23) is a 1-bit CSI variation calculation field. When a value of the CSI measurement request field is a first value, the CSI measurement request field indicates to enable CSI measurement. It should be understood that the CSI measurement request field of the SSW frame is set to the first value. The evaluation algorithm field indicates a CSI evaluation algorithm. The CSI variation threshold field indicates a CSI variation threshold. When a variation between CSI values measured when a same transmit beam sweeps for a plurality of times is greater than the CSI variation threshold, it indicates that there is a moving target (target) in a swept area of the beam, and the responder (namely, the second device) stores a transmit antenna ID and a transmit sector ID that correspond to the transmit beam. On the contrary, when a variation between CSI values measured when a same transmit beam sweeps for a plurality of times is less than or equal to the CSI variation threshold, it indicates that there is no moving target in a swept area of the beam. The CSI variation calculation field is used to indicate the peer end whether to calculate a CSI difference. When a value of the CSI variation calculation field is a first value, the CSI variation calculation field is used to indicate the peer end to calculate the CSI difference. When a value of the CSI variation calculation field is a second value, the CSI variation calculation field is used to indicate the peer end not to calculate the CSI difference. The first value may be 1, and the second value may be 0; or the first value is 0, and the second value is 1.

Optionally, a CSI variation calculation field of an SSW frame sent by a same beam for a first time need to be set to the second value, and a CSI variation calculation field of an SSW frame sent by a same beam for an N^{th} time may be set to the first value. N is an integer greater than or equal to 2.

Optionally, the CSI evaluation algorithm and/or the CSI variation threshold may also be specified in a standard, and does not need to be indicated by adding a field to a beacon frame. In other words, the first reserved subfield (B17 to B21) shown in FIG. 7 may not include the evaluation algorithm field and/or the CSI variation threshold field, and remaining bits are still represented as reserved.

S103: The second device sends a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device.

S104: The first device receives the plurality of second frames in a quasi-omni manner.

Optionally, the second device sends the second frame in a sector sweep manner, the first device receives the second frame in the quasi-omni manner, and the first device compares variations between CSI values obtained when a same transmit beam of the second device sweeps for a plurality of times, to determine whether there is a moving target in a swept area of the beam. The second device records a transmit beam of which there is a moving target in a swept area. The second frame is an SSW frame. It should be understood that, in this embodiment of this application, that the second device sends the second frame in a sector sweep manner may be understood as that the second device sends the second frame in a directional manner by using a beam of a specific width each time. A sector ID field and a DMG antenna ID field are set in the second frame, and respectively indicate a transmit sector and a transmit antenna of the second frame. It should be further understood that the sector ID field and the DMG antenna ID field can be used to uniquely determine a beam. A same transmit sector and a same transmit antenna send (or sweep) at least twice. Therefore, the second device sends the plurality of second frames, where the plurality of second frames may be sent in one beacon interval (BI), or may be sent in a plurality of BIs. To be specific, the second device may perform sweeping for a plurality of cycles in the BI, or the second device performs sweeping for one cycle in one BI, and completes sweeping for a plurality of cycles in the plurality of BIs.

Optionally, each second frame includes a first measurement result and second indication information. The first measurement result is used to feed back a transmit beam whose variation of CSI from the first device to the second device is greater than a CSI variation threshold. In other words, the first measurement result is used to feed back a result evaluated by the second device, or is used to feed back a sensing measurement result (for example, an antenna identifier and a sector identifier that correspond to the moving target) in the ISS phase. The second indication information indicates the first device (or a peer end) to evaluate a variation of CSI from the second device to the first device, or used to indicate a peer end (herein referred to as the first device or an initiator) to enable a sensing operation.

Optionally, the second frame is an SSW frame, and the second indication information may be located in a reserved subfield of an SSW feedback field of the SSW frame. The second indication information may include a CSI variation calculation field. The CSI variation calculation field is used to indicate the first device whether to calculate a CSI difference. When a value of the CSI variation calculation field is a first value, the CSI variation calculation field is used to indicate the peer end (the first device or the initiator) to calculate the CSI difference. When a value of the CSI variation calculation field is a second value, the CSI variation calculation field is used to indicate the peer end (the first device or the initiator) not to calculate the CSI difference. The first value may be 1, and the second value is 0; or the first value is 0, and the second value is 1. It should be understood that the second indication information may not include an evaluation algorithm field and a CSI variation threshold field. In other words, the second device does not need to notify the first device of a CSI evaluation algorithm and the CSI variation threshold.

Optionally, the second indication information may further include a CSI measurement request field. When a value of the CSI measurement request field is a first value, the CSI measurement request field indicates the peer end (herein referred to as the first device or the initiator) to measure CSI. When a value of the CSI measurement request field is a second value, the CSI measurement request field indicates the peer end (herein referred to as the first device or the initiator) not to measure CSI. If the second indication information includes the CSI measurement request field, the CSI measurement request field of the SSW frame is set to the first value. A length of the CSI measurement request field is 1 bit.

Optionally, the second frame is an SSW frame, and the first measurement result may be located in a signal-to-noise ratio (signal-to-noise ratio, SNR) report subfield of an SSW feedback field of the SSW frame. The first measurement result includes a first antenna identifier and a first sector identifier, and a beam determined by the first antenna identifier and the first sector identifier is a transmit beam whose CSI difference between any two (or two adjacent) CSI measurements on a same transmit beam is greater than the CSI variation threshold and that is of all transmit beams of the first device. When a variation between CSI values measured when a same transmit beam sweeps for a plurality of times is greater than the CSI variation threshold, it indicates that there is a moving target (target) in a swept area of the beam. Therefore, the first antenna identifier and the first sector identifier may also be understood as a transmit antenna identifier and a transmit sector identifier of the initiator (namely, the first device) corresponding to the moving target.

It should be further understood that, if there are a plurality of transmit beams whose CSI difference between any two (or two adjacent) CSI measurements on a same transmit beam is greater than the CSI variation threshold and that is of all the transmit beams of the first device, the beam determined by the first antenna identifier and the first sector identifier may be a transmit beam with a largest CSI difference, or any one of the plurality of transmit beams whose CSI difference is greater than the CSI variation threshold, or a first transmit beam whose CSI difference is greater than the CSI variation threshold. It should be further understood that the beam determined by the first antenna identifier and the first sector identifier may be used as an optimal transmit beam of the first device in a sensing scenario.

For example, it is assumed that the first device performs sector sweep for two cycles, that is, sends the first frame twice at different moments by using a same transmit beam. The second device obtains two CSI values through measurement based on first frames received twice on a same transmit beam (the sector ID field and the DMG antenna ID field in the first frame determine whether first frames received at different moments are sent by the same transmit beam), calculates a difference (or an absolute value of a difference) between the two CSI values based on an indication of the first frame sent for a second time on the transmit beam, and compares the difference with the CSI variation threshold. An antenna identifier and a sector identifier (namely, values of the sector ID field and the DMG antenna ID field in the first frame) corresponding to a beam whose difference is greater than the CSI variation threshold are recorded. The second device adds an antenna identifier and a sector identifier that correspond to a beam having a largest CSI difference to the SNR report subfield of the SSW feedback field of the SSW frame, and feeds back the SNR report subfield to the first device.

Optionally, the second frame further includes third indication information, used to indicate whether the second frame includes the first measurement result, or used to indicate whether the SNR report subfield indicates an SNR of a beam with optimal communication or indicates the first measurement result. The second frame is an SSW frame, and the third indication information is located in a reserved subfield of an SSW feedback field of the SSW frame.

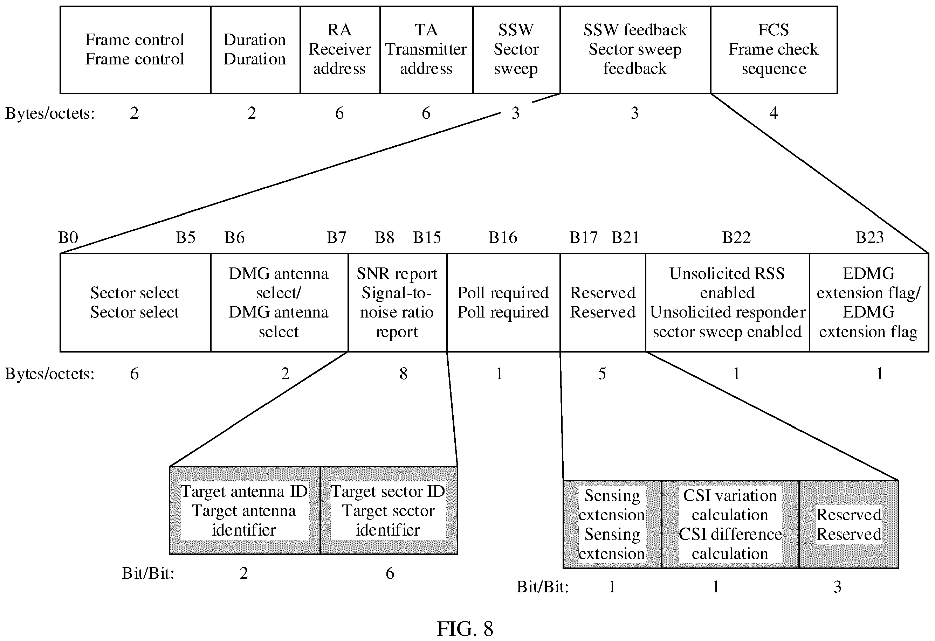

FIG. 8 is a schematic diagram of a frame format of an SSW frame in RSS according to an embodiment of this application. As shown in FIG. 8, an SSW feedback field of the SSW frame includes an 8-bit SNR report subfield and a 5-bit (B17 to B21) reserved subfield. The reserved subfield includes a 1-bit sensing extension field, a 1-bit CSI variation calculation field, and the remaining 3 bits are still represented as reserved. The CSI variation calculation field is used to indicate the peer end (the first device or the initiator) whether to calculate a CSI difference. When a value of the CSI variation calculation field is a first value, the CSI variation calculation field is used to indicate the peer end (the first device or the initiator) to calculate the CSI difference. When a value of the CSI variation calculation field is a second value, the CSI variation calculation field is used to indicate the peer end (the first device or the initiator) not to calculate the CSI difference. When a value of the sensing extension field (the foregoing third indication information) is a first value, the sensing extension field is used to indicate that the SSW frame includes the first measurement result, or is used to indicate that the SNR report subfield of the SSW frame indicates the SNR of the beam with optimal communication. When a value of the sensing extension field (the foregoing third indication information) is a second value, the sensing extension field is used to indicate that the SSW frame does not include the first measurement result, or is used to indicate that the SNR report subfield of the SSW frame indicates the first measurement result (the first antenna identifier and the first sector identifier). In other words, when the value of the sensing extension field (the foregoing third indication information) is the second value, the SNR report subfield includes a 2-bit target antenna identifier (Target Antenna ID) field and a 6-bit target sector (Target Sector ID) identifier field. The target antenna identifier field indicates the first antenna identifier, and the target sector identifier field indicates the first sector identifier. It should be understood that, in this embodiment of this application, the sensing extension field (the third indication information) is set to the first value. The first value may be 1, and the second value may be 0; or the first value is 0, and the second value is 1.

Optionally, a CSI variation calculation field of an SSW frame sent by a same beam for a first time need to be set to the second value, and a CSI variation calculation field of an SSW frame sent by a same beam for an N^{th} time may be set to the first value. N is an integer greater than or equal to 2. It should be understood that, in the RSS phase, even if the CSI variation calculation field of the SSW frame is set to the second value, after receiving the SSW frame, the first device still performs CSI measurement based on the received SSW frame. In the ISS phase, the first device indicates, by using the CSI measurement request field, the peer end to measure the CSI. Correspondingly, the first device also needs to perform a corresponding measurement operation in the RSS phase. Therefore, the CSI measurement request field may not be required to indicate the first device to measure the CSI.

It should be further understood that the fields included in the SNR report subfield and the reserved field of the SSW feedback field of the SSW frame shown in FIG. 8 may alternatively have other names. This is not limited in this embodiment of this application.

S105: The first device sends a third frame, where the third frame includes a second measurement result, and the second measurement result is used to feed back a transmit beam whose variation of CSI from the second device to the first device is greater than a CSI variation threshold.

S106: The second device receives the third frame.

Optionally, the first device sends the third frame by using the transmit beam with optimal communication that is obtained through training in the ISS phase, and the second device receives the third frame in a quasi-omni manner. Optionally, after receiving the third frame, the second device may respond with an SSW-Ack frame. The third frame is an SSW feedback frame. The third frame includes a second measurement result that is used to feed back a transmit beam whose variation of CSI from the second device to the first device is greater than a CSI variation threshold. In other words, the second measurement result is used to feed back a result evaluated by the first device, or is used to feed back a sensing measurement result (for example, an antenna identifier and a sector identifier that correspond to a moving target) in the RSS phase.

Optionally, the third frame is an SSW feedback frame, and the second measurement result may be located in an SNR report subfield of an SSW feedback field of the SSW feedback frame. The second measurement result includes a second antenna identifier and a second sector identifier, and a beam determined by the second antenna identifier and the second sector identifier is a transmit beam whose CSI difference between any two (or two adjacent) CSI measurements on a same transmit beam is greater than the CSI variation threshold and that is of all transmit beams of the second device. When a variation between CSI values measured when a same transmit beam sweeps for a plurality of times is greater than the CSI variation threshold, it indicates that there is a moving target (target) in a swept area of the beam. Therefore, the second antenna identifier and the second sector identifier may also be understood as a transmit antenna identifier and a transmit sector identifier of the responder (namely, the second device) corresponding to the moving target.

It should be understood that, if there are a plurality of transmit beams whose CSI difference between any two (or two adjacent) CSI measurements on a same transmit beam is greater than the CSI variation threshold and that is of all the transmit beams of the second device, the beam determined by the second antenna identifier and the second sector identifier may be a transmit beam with a largest CSI difference, or any one of the plurality of transmit beams whose CSI difference is greater than the CSI variation threshold, or a first transmit beam whose CSI difference is greater than the CSI variation threshold. It should be further understood that the beam determined by the second antenna identifier and the second sector identifier may be used as an optimal transmit beam of the second device in a sensing scenario.

For example, it is assumed that the second device performs sector sweep for two cycles, that is, sends the second frame twice at different moments by using a same transmit beam. The first device obtains two CSI values through measurement based on second frames received twice on a same transmit beam (the sector ID field and the DMG antenna ID field in the second frame determine whether second frames received at different moments are sent by the same transmit beam), calculates a difference (or an absolute value of a difference) between the two CSI values based on an indication of the second frame sent for a second time on the transmit beam, and compares the difference with the CSI variation threshold. An antenna identifier and a sector identifier (namely, values of the sector ID field and the DMG antenna ID field in the second frame) corresponding to a beam whose difference is greater than the CSI variation threshold are recorded. The first device adds an antenna identifier and a sector identifier that correspond to a beam having a largest CSI difference to the SNR report subfield of the SSW feedback field of the SSW feedback frame, and feeds back the SNR report subfield to the second device.

Optionally, the third frame further includes fourth indication information, used to indicate whether the third frame includes the second measurement result, or used to indicate whether the SNR report subfield indicates an SNR of a beam with optimal communication or indicates the second measurement result. The third frame is an SSW feedback frame, and the fourth indication information is located in a reserved subfield of an SSW feedback field of the SSW feedback frame.

Optionally, the third frame may further include a CSI variation calculation field, used to indicate the second device whether to calculate a CSI difference. The third frame is an SSW feedback frame, and the CSI variation calculation field is located in a reserved field of an SSW feedback field of the SSW feedback frame. When a value of the CSI variation calculation field is a first value, the CSI variation calculation field is used to indicate the peer end (the second device or the responder) to calculate the CSI difference. When a value of the CSI variation calculation field is a second value, the CSI variation calculation field is used to indicate the peer end (the second device or the responder) not to calculate the CSI difference. The first value may be 1, and the second value is 0; or the first value is 0, and the second value is 1. It should be understood that, in this embodiment of this application, the CSI variation calculation field of the SSW feedback frame is set to the second value.

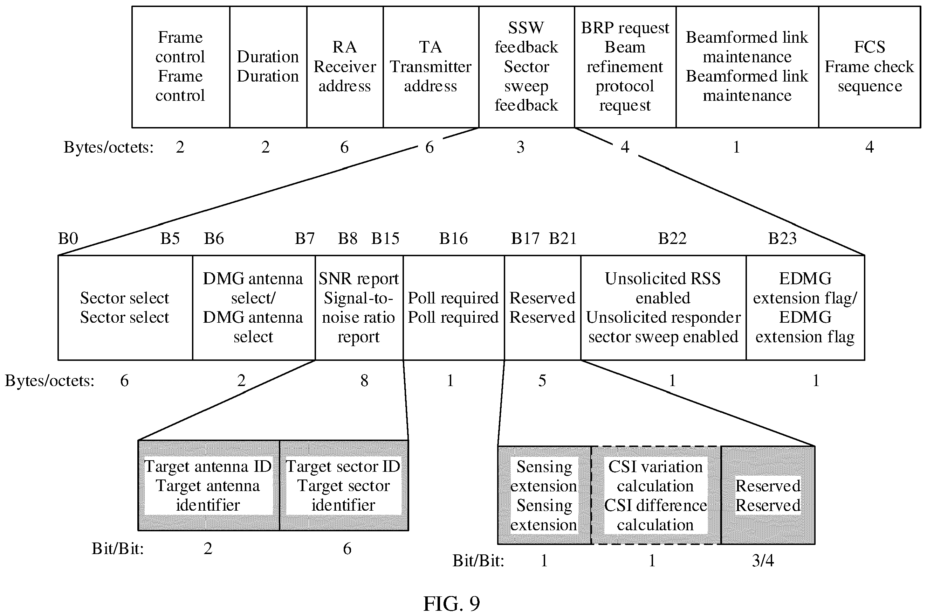

FIG. 9 is a schematic diagram of a frame format of an SSW feedback frame according to an embodiment of this application. As shown in FIG. 9, an SSW feedback field of the SSW feedback frame includes an 8-bit SNR report subfield and a 5-bit (B17 to B21) reserved subfield. The reserved subfield includes a 1-bit sensing extension field, a 1-bit CSI variation calculation field, and the remaining 3 bits are still represented as reserved. The CSI variation calculation field is used to indicate the peer end (the second device or the responder) whether to calculate a CSI difference. When a value of the CSI variation calculation field is a first value, the CSI variation calculation field is used to indicate the peer end (the second device or the responder) to calculate the CSI difference. When a value of the CSI variation calculation field is a second value, the CSI variation calculation field is used to indicate the peer end (the second device or the responder) not to calculate the CSI difference. In this embodiment of this application, the CSI variation calculation field of the SSW feedback frame is set to the second value. When a value of the sensing extension field (the foregoing fourth indication information) is a first value, the sensing extension field is used to indicate that the SSW feedback frame includes the second measurement result, or is used to indicate that the SNR report subfield of the SSW feedback frame indicates the SNR of the beam with optimal communication. When a value of the sensing extension field (the foregoing fourth indication information) is a second value, the sensing extension field is used to indicate that the SSW feedback frame does not include the first measurement result, or is used to indicate that the SNR report subfield of the SSW feedback frame indicates the second measurement result (the second antenna identifier and the second sector identifier). In other words, when the value of the sensing extension field (the foregoing fourth indication information) is the second value, the SNR report subfield includes a 2-bit target antenna identifier (Target Antenna ID) field and a 6-bit target sector (Target Sector ID) identifier field. The target antenna identifier field indicates the second antenna identifier, and the target sector identifier field indicates the second sector identifier. It should be understood that, in this embodiment of this application, the sensing extension field (the fourth indication information) is set to the first value. The first value may be 1, and the second value may be 0; or the first value is 0, and the second value is 1.

It should be further understood that the fields included in the SNR report subfield and the reserved field of the SSW feedback field of the SSW feedback frame shown in FIG. 9 may alternatively have other names. This is not limited in this embodiment of this application.

It can be learned that, in this embodiment of this solution, based on the procedures of the SLS phase in the standard 802.11ay, sensing is performed by using a variation between CSI values measured when a same beam sweeps for a plurality of times, and a related frame structure in the SLS phase is modified to enable a sensing operation, feed back a sensing measurement result, and the like. In this way, sensing of a single moving target and training of a beam for sensing can be implemented while original communication beam training is performed, there is no need to specially design a related procedure for the sensing and the training of the beam for sensing, overheads are low, and compatibility is good.

To better understand the procedures of the SLS phase of the method shown in FIG. 5A and FIG. 5B, the following uses two examples for description.

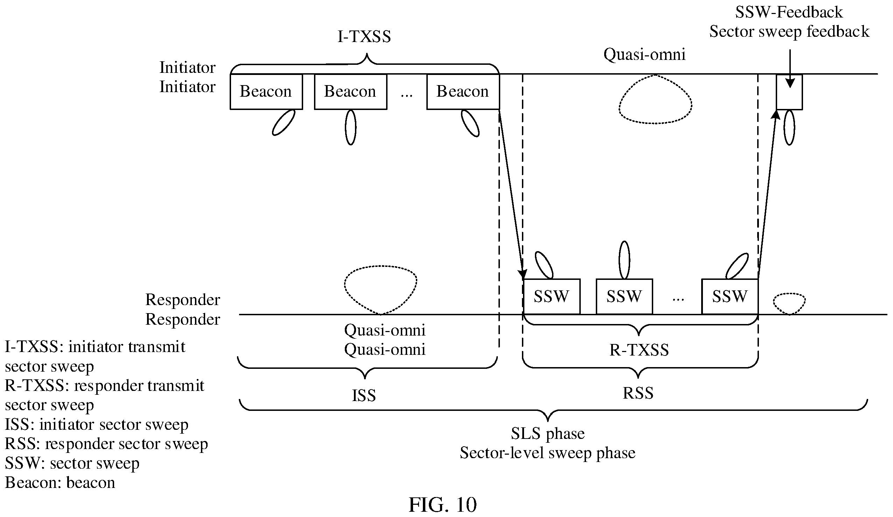

In an example, FIG. 10 is a schematic time sequence diagram of an SLS phase according to an embodiment of this application. As shown in FIG. 10, an initiator (Initiator) sends a beacon frame in a directional manner to indicate a responder (Responder) to enable a sensing operation (or the responder evaluates a variation of CSI from the initiator to the responder). The responder (Responder) performs quasi-omni receiving. The responder compares variations between CSI values obtained when a same beam sweeps for a plurality of times, to determine whether there is a moving target in a swept area of the beam. Then, the responder sends an SSW frame in a directional manner to indicate the initiator (Initiator) to perform a corresponding sensing operation (or the initiator evaluates a variation of CSI from the responder to the initiator). The initiator performs omnidirectional receiving, and adds a measurement result (which includes a first antenna identifier and a first sector identifier) obtained in an initiator transmit sector sweep (Initiator Transmit Sector Sweep, I-TXSS) procedure to the SSW frame for feedback. Similarly, the initiator feeds back, by sending an SSW feedback frame, a measurement result (which includes a second antenna identifier and a second sector identifier) obtained in a responder transmit sector sweep (Responder Transmit Sector Sweep, R-TXSS) procedure. For a frame format of each procedure in the SLS phase, refer to the foregoing descriptions. Details are not described herein again.

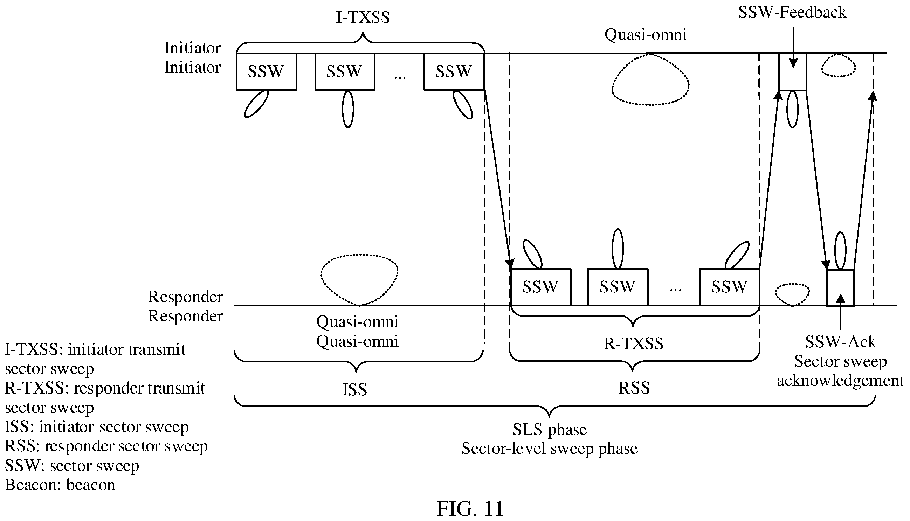

In another example, FIG. 11 is another schematic time sequence diagram of an SLS phase according to an embodiment of this application. As shown in FIG. 11, an initiator (Initiator) sends an SSW frame in a directional manner to indicate a responder (Responder) to enable a sensing operation (or the responder evaluates a variation of CSI from the initiator to the responder). The responder (Responder) performs quasi-omni receiving. The responder compares variations between CSI values obtained when a same beam sweeps a same location for a plurality of times, to determine whether there is a moving target in a swept area of the beam. Then, the responder sends an SSW frame in a directional manner to indicate the initiator (Initiator) to perform a corresponding sensing operation (or the initiator evaluates a variation of CSI from the responder to the initiator). The initiator performs omnidirectional receiving, and adds a measurement result (which includes a first antenna identifier and a first sector identifier) obtained in an I-TXSS procedure to the SSW frame for feedback. Similarly, the initiator feeds back, by sending an SSW feedback frame, a measurement result (which includes a second antenna identifier and a second sector identifier) obtained in an R-TXSS procedure. The responder performs quasi-omni receiving and sends an SSW-Ack frame to acknowledge receipt of the SSW feedback frame. For a frame format of each procedure in the SLS phase, refer to the foregoing descriptions. Details are not described herein again.

It should be understood that a main difference between FIG. 10 and FIG. 11 lies in whether the initiator (initiator) sends a beacon frame or an SSW frame in the ISS (or I-TXSS) procedure.

After the step S106, the radio sensing method provided in this embodiment of this application further includes the BRP phase. The following describes in detail the BRP phase of the radio sensing method provided in this embodiment of this application.

In an implementation, a BRP phase in the method shown in FIG. 5A and FIG. 5B may be the same as the BRP phase of the beamforming training in the standard 802.11ay. For a specific process and a related frame format, refer to descriptions in the standard 802.11ay. Details are not described herein again. In other words, the radio sensing method provided in this embodiment of this application is applied only to the SLS phase in the beamforming training process, and the BRP phase in the beamforming training process does not change. In other words, according to the radio sensing method provided in this embodiment of this application, optimal transmit beams of an initiator and a responder (an initiator and a responder) in a sensing scenario can be obtained, but optimal receive beams and optimal transmit and receive beams of the initiator and the responder (the initiator and the responder) in the sensing scenario cannot be obtained.

In another implementation, an interaction procedure of the BRP phase in the method shown in FIG. 5A and FIG. 5B is the same as an interaction procedure of the BRP phase in the beamforming training in the standard 802.11ay, but frame formats are different. The BRP phase includes a MID procedure and a BC procedure. The following describes in detail the BRP phase in FIG. 5A and FIG. 5B.

### 1. MID procedure of the BRP phase

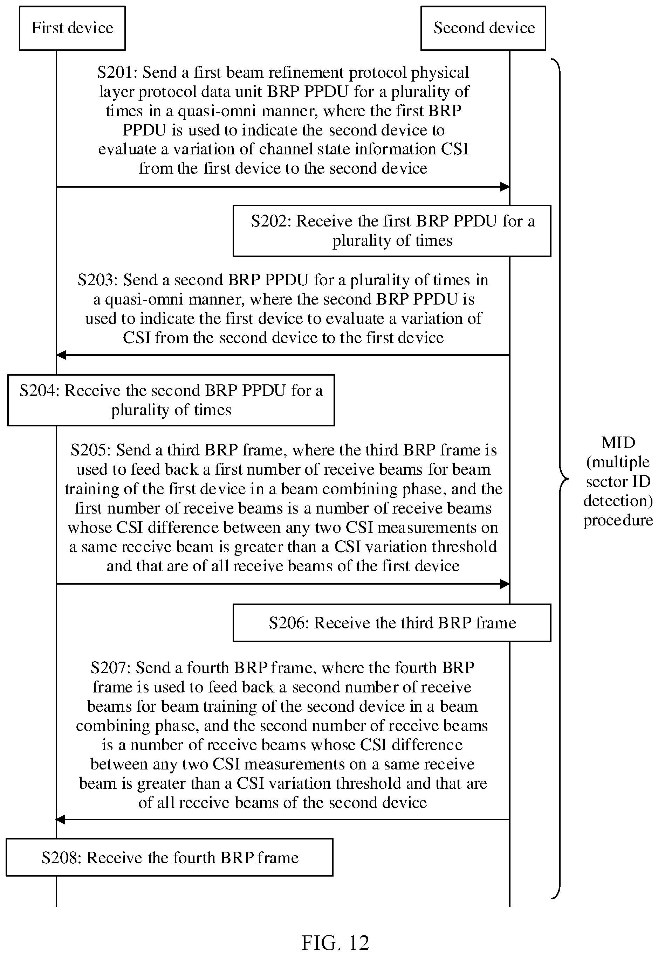

FIG. 12 is a schematic flowchart of a MID procedure of the radio sensing method according to an embodiment of this application. As shown in FIG. 12, the MID procedure of the radio sensing method includes but is not limited to the following steps.

S201: A first device sends a first beam refinement protocol physical layer protocol data unit BRP PPDU for a plurality of times in a quasi-omni manner, where the first BRP PPDU is used to indicate a second device to evaluate a variation of channel state information CSI from the first device to the second device.

S202: The second device receives the first BRP PPDU for a plurality of times.

Optionally, the first device sends the first BRP PPDU for a plurality of times in the quasi-omni manner (one first BRP PPDU is sent each time, and each first BRP PPDU includes one first BRP frame and a training unit (TRN Unit)). The second device receives the first BRP PPDU in a sector sweeping manner. The second device compares variations between CSI values obtained when a same receive beam receives the first BRP PPDU for a plurality of times, to determine whether there is a moving target in a swept area of the beam. The second device records a receive beam of which there is a moving target in a swept area. The first device may perform sending for a plurality of times in one BI, or may perform sending for a plurality of times in a plurality of BIs. It should be understood that, that the second device receives the first BRP PPDU in a sector sweeping manner may be understood as that the second device receives the first BRP PPDU in a beam polling manner, where the first BRP PPDU is directionally received by using a beam of a specific width each time. A same receive beam of the second device needs to receive (or sweep) at least twice. Therefore, the first device sends the first BRP PPDU for a plurality of times. The first BRP frame in the first BRP PPDU is used to indicate the second device (or a peer end) to evaluate the variation of the CSI from the first device to the second device, or is used to indicate a peer end (herein referred to as the second device or a responder) to enable a sensing operation.

Optionally, based on a frame format of an original BRP frame (namely, a BRP frame sent by an initiator in the MID procedure in the standard 802. 11ay), an element field is newly added to the first BRP PPDU to enable sensing receive beam training of the responder (namely, the second device). In this application, a newly added element is referred to as a BRP sensing request element (BRP Sensing Request element). It should be understood that the newly added element may alternatively have another name. This is not limited in this application. In other words, the first BRP PPDU includes the BRP sensing request element. The BRP sensing request element is used to indicate the second device (or the peer end) to evaluate the variation of the CSI from the first device to the second device, or is used to indicate the peer end (herein referred to as the second device or the responder) to enable a sensing operation. It should be understood that the standard 802.11ay defines only elements whose element identifiers (element IDs) are 0 to 11, and an element identifier 12 and a following element identifier thereof are represented as reserved values. Therefore, an element identifier (Element ID) of the BRP sensing request element is a reserved value, for example, 12.

Optionally, the BRP sensing request element (BRP Sensing Request element) includes a CSI measurement request field and a number of beam sweep cycles field. When a value of the CSI measurement request field is a first value, the CSI measurement request field indicates the peer end (herein referred to as the second device or the responder) to measure CSI. When a value of the CSI measurement request field is a second value, the CSI measurement request field indicates the peer end (herein referred to as the second device or the responder) not to measure CSI. In this embodiment of this application, the CSI measurement request field of the first BRP PPDU is set to the first value. The number of beam sweep cycles field indicates a number of sweep cycles of a receive beam of the peer end (herein referred to as the second device or the responder). The BRP sensing request element further includes one or more of the following fields: a transmit end sensing sector identifier field, a transmit end sensing antenna identifier mask field, a CSI variation threshold field, and an evaluation algorithm field. The transmit end sensing sector identifier field and the transmit end sensing antenna identifier mask field jointly indicate a transmit sector and a transmit antenna of a current BRP frame. The CSI variation threshold field indicates a CSI variation threshold. The evaluation algorithm field indicates a CSI evaluation algorithm.

It should be understood that the fields included in the BRP sensing request element may alternatively have other names. This is not limited in this embodiment of this application.

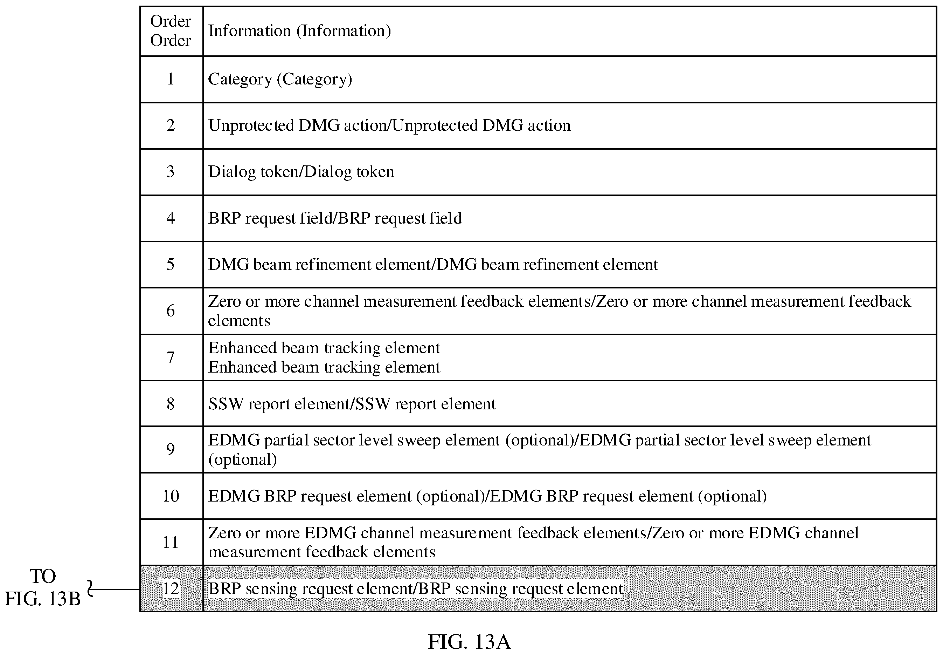

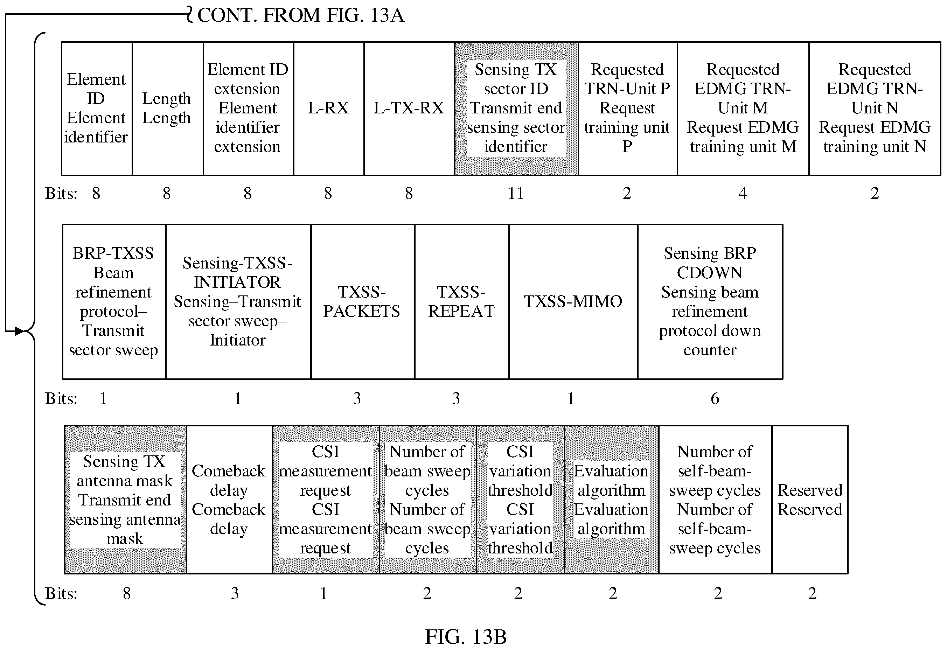

FIG. 13A and FIG. 13B are a schematic diagram of a frame format of a BRP sensing request element according to an embodiment of this application. As shown in FIG. 13A, based on a frame format of an original BRP frame, a BRP sensing request element whose element identifier is a reserved value (for example, 12) is newly added. The BRP sensing request element includes a transmit end sensing sector identifier (Sensing TX Sector ID) field, a transmit end sensing antenna identifier mask (Sensing TX Antenna ID Mask) field, a CSI measurement request (CSI Measurement Request) field, a number of beam sweep cycles (Number of beam sweep cycles) field, a CSI variation threshold (CSI Variation Threshold) field, and an evaluation algorithm (Evaluation algorithm) field. It should be understood that in this embodiment of this application, "TX" indicates a transmit end, and "RX" indicates a receive end. The transmit end is a party that sends a radio frame in this interaction, and the receive end is a party that receives the radio frame in this interaction. The transmit end is not equivalent to the initiator, and the receive end is not equivalent to the responder.

The sensing TX sector ID field indicates an identifier of a sector that needs to be trained by the transmit end in a sensing scenario. In the MID phase, the sensing TX sector ID field is set to quasi-omni (quasi-omni). The sensing TX antenna ID mask field indicates a bitmap of an antenna that needs to be trained by the transmit end in a sensing scenario. The sensing TX sector ID field and the sensing TX antenna ID mask field jointly indicate a transmit sector and a transmit antenna of a currently sent BRP frame.

The CSI measurement request field indicates the peer end (herein referred to as the second device or the responder) whether to measure CSI or enable CSI measurement. When a value of the CSI measurement request field is a first value, the CSI measurement request field indicates the peer end (herein referred to as the second device or the responder) to perform CSI measurement on a training unit (Training unit, TRN Unit) included in a received first BRP PPDU. When a value of the CSI measurement request field is a second value, the CSI measurement request field indicates the peer end (herein referred to as the second device or the responder) not to perform CSI measurement on a training unit (TRN Unit) included in a received first BRP PPDU.

The evaluation algorithm field indicates a CSI evaluation algorithm. The CSI evaluation algorithm is used to evaluate (or calculate) a CSI value.

The number of beam sweep cycles field indicates a number of times of periodic sweeping (or a number of sweep cycles of a receive beam of the peer end) that needs to be performed by the peer end (herein referred to as the second device or the responder), that is, a number of times of sweeping that needs to be performed in a same sector of a same antenna to receive the first BRP PPDU sent by the transmit end in a quasi-omni manner. After the number of times is reached, sweeping stops and CSI variation calculation is performed. For example, when a value of the number of beam sweep cycles field is 0, it indicates two cycles or two times. When a value of the number of beam sweep cycles field is 1, it indicates three cycles or three times. It should be understood that, in this embodiment of this application, the receive beam of the receive end sweeps for at least two cycles. In this way, two different CSI values are used for comparison to obtain beam information corresponding to a moving target.

The CSI variation threshold field indicates a CSI variation threshold. If a CSI difference between CSI values measured when a same receive beam sweeps for a plurality of times is greater than the CSI variation threshold, it indicates that there is a moving target in a swept area of the beam, and the receive end stores a receive antenna ID and a receive sector ID that correspond to the receive beam. On the contrary, if a CSI difference between CSI values measured when a same receive beam sweeps for a plurality of times is less than or equal to the CSI variation threshold, it indicates that there is no moving target in a swept area of the beam. It can be learned that the step S201 and the step S202 can be used to train an optimal sensing receive beam of the second device (or the responder).

It should be understood that, in the BRP sensing request element of the first BRP PPDU, a transmit end is the first device (or the initiator), a receive end is the second device (or the responder), and a peer end is also the second device (or the responder).

The BRP sensing request element shown in FIG. 13A further includes one or more of the following fields.

An element identifier (Element ID), a length (Length), and an element identifier extension (Element ID Extension) are general frame formats of an element frame. In this embodiment of this application, the element ID is set to a reserved value 12, to indicate the BRP sensing request element.

L-RX indicates to send, when beam training of a receive end serves as a part of a beam refinement transaction procedure, a number of TRN units that are requested by a STA and that are used for the beam training of the receive end. The number of TRN units is equal to a product obtained by multiplying an L-RX value by 4. The L-RX field may be used in a BRP setup procedure, and a value indicated by the L-RX field may be used in a MID procedure. However, the L-RX field is not mandatory in the MID procedure.

L-TX-RX indicates a number of consecutive TRN units in which a transmit antenna weight vector (Antenna Weight Vector, AWV) maintains a same AWV configuration in a transmit beam refinement transaction procedure and a receive beam refinement transaction procedure, and is reserved or not used in a MID phase.

Requested training unit P (Requested TRN-Unit P) indicates a number of TRN subfields that request to use a same AWV at the beginning of a TRN Unit. The AWV is the same as an AWV during transmission of preamble (preamble) and data (Data) fields of a physical layer protocol data unit (physical layer protocol data unit, PPDU). The requested TRN-Unit P field may be used in a BRP setup procedure, and a value indicated by the requested TRN-Unit P field may be used in a MID procedure. However, the requested TRN-Unit P field is not mandatory in the MID procedure.

Requested EDMG training unit M (Requested EDMG TRN-Unit M): A value of this field is increased by 1. This field indicates a number of requests for TRN subfields (subfields) that can be used for training of TX (initiator) in a TRN unit. This field is reserved or not used in a MID phase. The requested EDMG TRN-Unit M field may be used in a BRP setup procedure, and a value indicated by the field may be used in a MID procedure. However, the requested EDMG TRN-Unit M field is not mandatory in the MID procedure.

Requested EDMG training unit N (Requested EDMG TRN-Unit N) indicates a number of requests for consecutive TRN subfields transmitted using the same AWV as the EDMG TRN-Unit M, and is reserved or not used in a MID phase. The requested EDMG TRN-Unit N field may be used in a BRP setup procedure, and a value indicated by the field may be used in a MID procedure. However, the requested EDMG TRN-Unit N field is not mandatory in the MID procedure.

Beam refinement protocol transmit sector sweep (BRP-TXSS) indicates a procedure of requesting to perform BRP TXSS or acknowledging to request to perform BRP TXSS. In a MID phase, this field is set to 0.

Sensing transmit sector sweep-initiator (Sensing-TXSS-INITIATOR): If the BRP-TXSS field is equal to 1, the sensing-TXSS-INITIATOR field is set to 1, it indicates that a transmitter of a BRP frame is an initiator of a BRP TXSS procedure. If the sensing-TXSS-INITIATOR field is set to 0, a transmitter of a BRP frame is a responder of a BRP TXSS procedure. When the BRP-TXSS field is 0, the sensing-TXSS-INITIATOR field is a reserved field.

TXSS-PACKETS: If both the BRP-TXSS field and the sensing-TXSS-INITIATOR field are equal to 1, a value of the TXSS-PACKETS field is increased by 1, to indicate a number of EDMG BRP-TX PPDUs required by an initiator to perform transmit sector training. If the BRP-TXSS field is equal to 1, the sensing-TXSS-INITIATOR field is equal to 0, and the procedure includes Responder BRP TXSS, a value of the TXSS-PACKETS field is increased by 1, to indicate a number of EDMG BRP-TX PPDUs required by a responder to perform transmit sector training. When the BRP-TXSS field is equal to 0, the TXSS-PACKETS field is a reserved field.

TXSS-REPEAT: If both the BRP-TXSS field and the sensing-TXSS-INITIATOR field are equal to 1, a value of the TXSS-REPEAT field is increased by 1, to indicate a number of repetitions of the EDMG BRP-TX PPDU transmitted in responder BRP TXSS if the BRP TXSS includes the responder BRP TXSS. If BRP-TXSS = 1 and sensing- TXSS-INITIATOR = 0, a value of the TXSS-REPEAT field is increased by 1, to indicate a number of repetitions of the EDMG BRP-TX PPDU transmitted in initiator BRP TXSS. When BRP-TXSS=0, the TXSS-REPEAT field is a reserved field.

TXSS-MIMO: If both the BRP-TXSS field and the sensing-TXSS-INITIATOR field are equal to 1, the TXSS-MIMO field is set to 1, to indicate that requested BRP TXSS is MIMO BRP TXSS, and the TXSS-MIMO field is set to 0, to indicate that requested BRP TXSS is a SISO BRP TXSS. If neither the BRP-TXSS field nor the TXSS-INITIATOR field is equal to 1, the TXSS-MIMO field is reserved.

Sensing BRP down counter (Sensing BRP CDOWN) indicates a number of BRP frames to be sent after a current BRP frame.

Comeback delay (Comeback Delay) indicates that a station may not be ready to perform feedback after a beam refinement protocol interframe space (beam refinement protocol interframe space, BRPIFS). A value of this field indicates when a device performs feedback.

Number of self-beam-sweep cycles (Number of self-beam-sweep cycles) indicates a number of transmit beam sweep cycles of a transmit end, and is reserved or not used in a MID phase.

It should be understood that the fields reserved or not used in the MID phase in FIG. 13B may not be included in the BRP sensing request element.

S203: The second device sends a second BRP PPDU for a plurality of times in a quasi-omni manner, where the second BRP PPDU is used to indicate the first device to evaluate a variation of CSI from the second device to the first device.

S204: The first device receives the second BRP PPDU for a plurality of times.

Optionally, the second device sends the second BRP PPDU for a plurality of times in the quasi-omni manner (one second BRP PPDU is sent each time, and each second BRP PPDU includes one second BRP frame and a training unit (TRN Unit)). The first device receives the second BRP PPDU in a sector sweeping manner. The first device compares variations between CSI values obtained when a same receive beam receives the second BRP PPDU for a plurality of times, to determine whether there is a moving target in a swept area of the beam. The first device records a receive beam of which there is a moving target in a swept area. The second device may perform sending for a plurality of times in one BI, or may perform sending for a plurality of times in a plurality of BIs. It should be understood that, that the first device receives the second BRP PPDU in a sector sweeping manner may be understood as that the first device receives the second BRP PPDU in a beam polling manner, where the second BRP PPDU is directionally received by using a beam of a specific width each time. A same receive beam of the first device needs to receive (or sweep) at least twice. Therefore, the second device sends the second BRP PPDU for a plurality of times. The second BRP frame in the second BRP PPDU is used to indicate the first device (or a peer end) to evaluate the variation of the CSI from the second device to the first device, or is used to indicate a peer end (herein referred to as the first device or an initiator) to enable a sensing operation.

Optionally, based on a frame format of an original BRP frame (namely, a BRP frame sent by a responder in the MID phase in the standard 802.11ay), an element field is newly added to the second BRP PPDU to enable sensing receive beam training of the initiator (namely, the first device). In this application, a newly added element is referred to as a BRP sensing request element (BRP Sensing Request element). It should be understood that the newly added element may alternatively have another name. This is not limited in this application. In other words, the second BRP PPDU includes the BRP sensing request element. The BRP sensing request element is used to indicate the first device (or the peer end) to evaluate the variation of the CSI from the second device to the first device, or is used to indicate the peer end (herein referred to as the first device or the initiator) to enable a sensing operation. An element identifier (Element ID) of the BRP sensing request element is a reserved value, for example, 12.

It should be understood that a frame format of the second BRP PPDU is the same as that of the first BRP PPDU. A difference between the second BRP PPDU and the first BRP PPDU lies in that: transmit ends are different (the second BRP PPDU is transmitted by a responder (namely, the second device), and the first BRP PPDU is transmitted by an initiator (namely, the first device)); and processes are different (the second BRP PPDU is in a process of training a receive beam of the initiator, and the first BRP PPDU is in a process of training a receive beam of the responder).

Optionally, for fields included in the BRP sensing request element and a frame format of the BRP sensing request element, refer to the related descriptions in the step S201 and the step S202. Details are not described herein again. It should be understood that in the step S203 and the step S204, a transmit end is the second device (or a responder), a receive end is the first device (or an initiator), and the peer end is also the first device (or the initiator). It should be further understood that the step S203 and the step S204 are used to train an optimal sensing receive beam of the first device (or the initiator).

S205: The first device sends a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device.

S206: The second device receives the third BRP frame.

Optionally, after training of receive ends (or receive beams) of the initiator and the responder in the MID phase is completed, the first device sends the third BRP frame to the second device, and feeds back an evaluation result of the first device by using a directional multi-gigabit (directional multi-gigabit, DMG) beam refinement element carried in the third BRP frame. The third BRP frame includes the DMG beam refinement element (DMG Beam Refinement element), and is used to feed back the first number of receive beams of the first device that need beam training in the beam combining (BC) phase (namely, a next phase). The first number of receive beams is a number of receive beams whose CSI difference between any two (or two adjacent) CSI measurements on a same receive beam is greater than the CSI variation threshold and that are of all the receive beams of the first device. In other words, the DMG beam refinement element is used to feed back a number of receive beams that need training in a next phase (that is, the BC phase), and the number may be indicated by a number of sensing beams (Number of Sensing Beams) field in the DMG beam refinement element. An element identifier of the DMG beam refinement element is 5.

It should be understood that, when a variation between CSI values measured when a same receive beam sweeps for a plurality of times is greater than the CSI variation threshold, it indicates that there is a moving target (target) in a swept area of the beam. Therefore, the first number of receive beams may also be understood as a number of receive beams that can sense the moving target and that are of the first device.

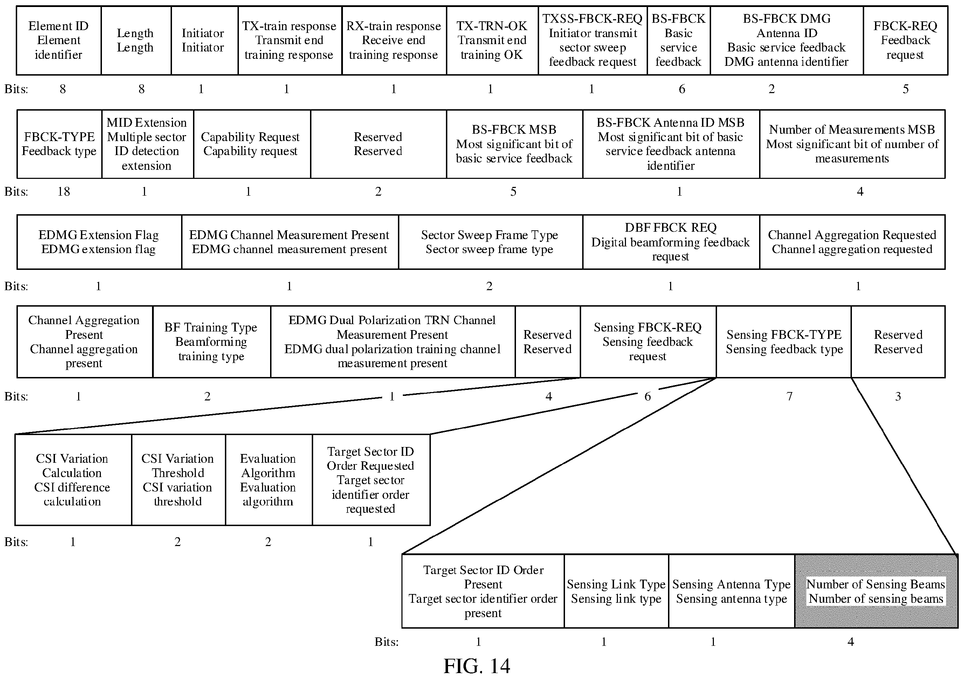

FIG. 14 is a schematic diagram of a frame format of a DMG beam refinement element according to an embodiment of this application. As shown in FIG. 14, the DMG beam refinement element includes a sensing feedback type (Sensing FBCK-TYPE) field. The sensing FBCK-TYPE field includes a number of sensing beams (Number of Sensing Beams) field, used to feed back a number of receive beams (herein referred to as the first number of receive beams) that are of an initiator/responder, that are used for beam training in the BC phase, and that are obtained through training in the MID phase. The sensing FBCK-TYPE field further includes a target sector identifier order present (Target Sector ID Order Present) field, a sensing link type (Sensing Link Type) field, and a sensing antenna type (Sensing Antenna Type) field. These fields are used in a subsequent MIMO training phase, and are all reserved bits or are not used in the MID phase. The DMG beam refinement element further includes a sensing feedback request (Sensing FBCK-REQ) field. The sensing FBCK-REQ field is also used in the MIMO training phase, and is a reserved bit or is not used in the MID phase.

It should be understood that the fields included in the DMG beam refinement element in FIG. 14 may alternatively have other names. This is not limited in this embodiment of this application.

It should be further understood that the fields reserved or not used in the MID phase in FIG. 14 may not be included in the DMG beam refinement element.

S207: The second device sends a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

S208: The first device receives the fourth BRP frame.

Optionally, the second device sends the fourth BRP frame to the first device, and feeds back an evaluation result of the second device by using a DMG beam refinement element carried in the fourth BRP frame. The fourth BRP frame includes the DMG beam refinement element (DMG Beam Refinement element), and is used to feed back the second number of receive beams of the second device that need beam training in the beam combining (BC) phase (namely, a next phase). The second number of receive beams is a number of receive beams whose CSI difference between any two (or two adjacent) CSI measurements on a same receive beam is greater than the CSI variation threshold and that are of all the receive beams of the second device. In other words, the DMG beam refinement element is used to feed back a number of receive beams that need training in a next phase (that is, the BC phase), and the number may be indicated by a number of sensing beams (Number of Sensing Beams) field in the DMG beam refinement element. An element identifier of the DMG beam refinement element is 5.

It should be understood that, when a variation between CSI values measured when a same receive beam sweeps for a plurality of times is greater than the CSI variation threshold, it indicates that there is a moving target (target) in a swept area of the beam. Therefore, the first number of receive beams may also be understood as a number of receive beams that can sense the moving target and that are of the second device.

It should be further understood that a frame format of the DMG beam refinement element is shown in FIG. 14. Details are not described herein again.

It can be learned that, in this embodiment of this application, a related frame format in the MID procedure is modified, so that the initiator and the responder can train the optimal receive beams in the sensing scenario.

### 2. BC procedure

After the SLS phase and the MID procedure, both the optimal transmit beams and the optimal receive beams of the initiator and the responder in the communication and sensing scenarios have been trained. In the BC phase, combined training of the optimal transmit beams and the optimal receive beams of the initiator and the responder is performed to obtain optimal uplink and downlink beam directions.

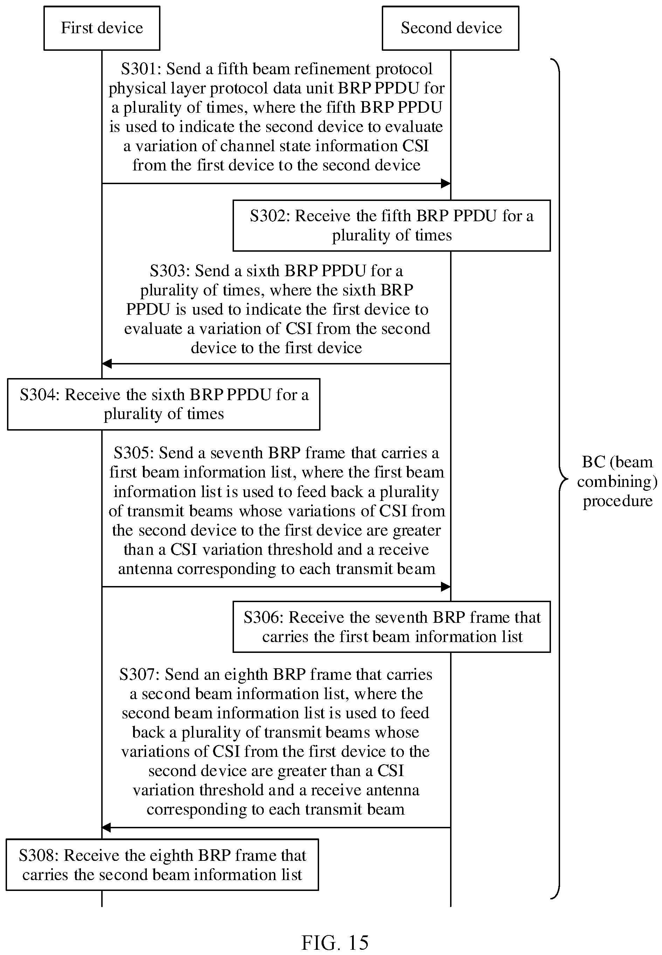

FIG. 15 is a schematic flowchart of a BC procedure of the radio sensing method according to an embodiment of this application. As shown in FIG. 15, the BC procedure of the radio sensing method includes but is not limited to the following steps.

S301: A first device sends a fifth beam refinement protocol physical layer protocol data unit BRP PPDU for a plurality of times, where the fifth BRP PPDU is used to indicate a second device to evaluate a variation of CSI from the first device to the second device.

S302: The second device receives the fifth BRP PPDU for a plurality of times.

Optionally, the first device sends the fifth BRP PPDU for a plurality of times in a directional manner (one fifth BRP PPDU is sent each time, and each fifth BRP frame includes one fifth BRP frame and a TRN unit). The second device receives the fifth BRP PPDU for a plurality of times in a directional manner. The second device compares variations between CSI values obtained when a same transmit and receive beam pair sends and receives the fifth BRP PPDU for a plurality of times, to determine whether there is a moving target in a swept area of the beam. It should be understood that, that the first device sends the fifth BRP PPDU for a plurality of times in a directional manner may be understood as that the first device sends the fifth BRP PPDU by using a beam of a specific width (which may be the optimal sensing transmit beam obtained through training in the ISS procedure, or may be another beam) each time. That the second device receives the fifth BRP PPDU for a plurality of times in a directional manner may be understood as that the second device receives the fifth BRP PPDU by polling a plurality of optimal sensing receive beams obtained through training in the MID procedure. A number of times that the first device sends the fifth BRP PPDU in the directional manner is greater than or equal to twice the second number of receive beams. This can ensure that the second device polls the optimal sensing receive beam at least twice, so that two CSI values are generated for each receive beam for comparison to obtain beam information corresponding to the moving target. The fifth BRP frame in the fifth BRP PPDU is used to indicate the second device (or a peer end) to evaluate the variation of the CSI from the first device to the second device, or is used to indicate a peer end (herein referred to as the second device or a responder) to enable a sensing operation.

Optionally, the fifth BRP PPDU includes a BRP sensing request element (BRP Sensing Request element). The BRP sensing request element is used to indicate the second device (or the peer end) to evaluate the variation of the CSI from the first device to the second device, or is used to indicate the peer end (herein referred to as the second device or the responder) to enable a sensing operation. An element identifier of the BRP sensing request element is a reserved value, for example, 12.

Optionally, the BRP sensing request element includes a CSI measurement request (CSI Measurement Request) field and a number of beam sweep cycles (Number of beam sweep cycles) field. When the CSI measurement request field is set to a first value, the CSI measurement request field is used to indicate the peer end (herein referred to as the second device or the responder) to measure CSI. When the CSI measurement request field is set to a second value, the CSI measurement request field is used to indicate the peer end (herein referred to as the second device or the responder) not to measure CSI. In this embodiment of this application, the CSI measurement request field of the first BRP PPDU is set to the first value. If the first value is 0, the second value is 1; or if the first value is 1, the second value is 0. The number of beam sweep cycles field indicates a number of sweep cycles of a receive beam of the peer end (herein referred to as the second device or the responder). In other words, the number of beam sweep cycles field indicates a number of times of periodic sweeping that needs to be performed by the peer end (herein referred to as the second device or the responder), that is, a number of times of sweeping that needs to be performed on a same sector and a same antenna to receive the fifth BRP PPDU directionally sent by a transmit end (herein referred to as an initiator or the first device). After the number of times is reached, sweeping stops and CSI variation calculation is performed.

The BRP sensing request element further includes one or more of the following fields: a transmit end sensing sector identifier (Sensing TX Sector ID) field, a transmit end sensing antenna identifier mask (Sensing TX Antenna ID Mask) field, a CSI variation threshold (CSI Variation Threshold) field, and an evaluation algorithm (Evaluation algorithm) field. The transmit end sensing sector identifier field and the transmit end sensing antenna identifier mask field jointly indicate a transmit sector and a transmit antenna of a current BRP frame. The CSI variation threshold field indicates a CSI variation threshold. The evaluation algorithm field indicates a CSI evaluation algorithm. The sensing TX sector ID field and the sensing TX antenna ID mask field jointly indicate the transmit sector and the transmit antenna of the current BRP. The evaluation algorithm field indicates the CSI evaluation algorithm. The CSI variation threshold field indicates the CSI variation threshold. If a CSI difference between CSI values measured when a same receive beam sweeps for a plurality of times is greater than the CSI variation threshold, it indicates that there is a moving target in a swept area of the beam. In this case, a receive end (herein referred to as the responder or the second device) feeds back, to the transmit end (herein referred to as the initiator or the first device) in a feedback phase, an antenna identifier and a sector identifier that correspond to a transmit beam whose CSI difference is greater than the CSI variation threshold, and a beam information list (namely, a second beam information list) that includes an antenna identifier and a sector identifier that correspond to a receive beam currently used by the responder/second device. A transmit beam and a receive beam that have a largest CSI difference are used as optimal transmit and receive beams for downlink sensing.

It should be understood that the fields included in the BRP sensing request element may alternatively have other names. This is not limited in this embodiment of this application.

It should be further understood that a frame format of the BRP sensing request element is shown in FIG. 13B. Details are not described herein again.

S303: The second device sends a sixth BRP PPDU for a plurality of times, where the sixth BRP PPDU is used to indicate the first device to evaluate a variation of CSI from the second device to the first device.

S304: The first device receives the sixth BRP PPDU for a plurality of times.

Optionally, the second device sends the sixth BRP PPDU for a plurality of times in a directional manner (one sixth BRP PPDU is sent each time, and each sixth BRP frame includes one sixth BRP frame and a TRN unit). The first device receives the sixth BRP PPDU for a plurality of times in a directional manner. The first device compares variations between CSI values obtained when a same transmit and receive beam pair sends and receives the sixth BRP PPDU for a plurality of times, to determine whether there is a moving target in a swept area of the beam. It should be understood that, that the second device sends the sixth BRP PPDU for a plurality of times in a directional manner may be understood as that the second device sends the sixth BRP PPDU by using a beam of a specific width (which may be the optimal sensing transmit beam obtained through training in the ISS procedure, or may be another beam) each time. That the first device receives the sixth BRP PPDU for a plurality of times in a directional manner may be understood as that the first device receives the sixth BRP PPDU by polling a plurality of optimal sensing receive beams obtained through training in the MID procedure. A number of times that the second device sends the sixth BRP PPDU in the directional manner is greater than or equal to twice the first number of receive beams. This can ensure that the first device polls the optimal sensing receive beam at least twice, so that two CSI values are generated for each receive beam for comparison to obtain beam information corresponding to the moving target. The sixth BRP frame in the sixth BRP PPDU is used to indicate the first device (or a peer end) to evaluate the variation of the CSI from the second device to the first device, or is used to indicate a peer end (herein referred to as the first device or an initiator) to enable a sensing operation.

Optionally, the sixth BRP PPDU includes a BRP sensing request element (BRP Sensing Request element). The BRP sensing request element is used to indicate the first device (or the peer end) to evaluate the variation of the CSI from the second device to the first device, or is used to indicate the peer end (herein referred to as the first device or the initiator) to enable a sensing operation. An element identifier of the BRP sensing request element is a reserved value, for example, 12.

Optionally, for fields included in the BRP sensing request element and a frame format of the BRP sensing request element, refer to the related descriptions in the step S301 and the step S302. Details are not described herein again. It should be understood that in the step S303 and the step S304, a transmit end is the second device (or a responder), a receive end is the first device (or an initiator), and the peer end is also the first device (or the initiator). It should be further understood that a transmit beam and a receive beam that are obtained by the receive end through calculation and that have a largest CSI difference are used as optimal transmit and receive beams for uplink sensing.

S305: The first device sends a seventh BRP frame that carries a first beam information list, where the first beam information list is used to feed back a plurality of transmit beams whose variations of CSI from the second device to the first device are greater than the CSI variation threshold and a receive antenna corresponding to each transmit beam.

S306: The second device receives the seventh BRP frame that carries the first beam information list.

Optionally, in a feedback procedure of the BC procedure, the first device sends, to the second device, the seventh BRP frame that carries the first beam information list. An element field is newly added based on a frame format of an original BRP frame to carry the first beam information list. In this application, a newly added element is referred to as a sensing measurement feedback element (Sensing Measurement feedback element). It should be understood that the newly added element may alternatively have another name. This is not limited in this application. The first beam information list is used to feed back the plurality of transmit beams whose variations of CSI from the second device to the first device are greater than the CSI variation threshold and the receive antenna corresponding to each transmit beam.

Optionally, the first beam information list includes an antenna identifier and a sector identifier that correspond to a transmit beam in a plurality of transmit and receive beam pairs whose variations of CSI from the second device to the first device are greater than the CSI variation threshold, and a receive antenna identifier corresponding to each transmit beam. It should be understood that one transmit and receive beam pair includes one transmit beam and one receive beam. One antenna identifier and one sector identifier can be used to uniquely determine one beam. However, because the receive beam is used by a receive end to receive data, a direction of the receive beam does not need to be notified to a transmit end, and only needs to be known by the receive end. Therefore, the first beam information list may not include a sector identifier of the receive beam. In other words, a CSI difference between CSI values obtained through measurement when the transmit end and the receive end (the second device and the first device) sends and receives the sixth BRP PPDU any two times by using any one of the plurality of transmit and receive beam pairs is greater than the CSI variation threshold. In other words, a difference between CSI values obtained through any two measurements on the plurality of transmit and receive beam pairs is greater than the CSI variation threshold.

Optionally, an element identifier of the sensing measurement feedback element (Sensing Measurement feedback element) may be a reserved value, for example, 13. It should be understood that the standard 802.11ay defines elements whose element identifiers (element IDs) are 0 to 11. As shown in the following table 1, based on this, this embodiment of this application defines the BRP sensing request element whose element identifier is 12 and the sensing measurement feedback element whose element identifier is 13. A frame format of the BRP sensing request element whose element identifier is 12 is shown in FIG. 13B. Details are not described herein again. The sensing measurement feedback element whose element identifier is 13 is located in the seventh BRP frame, and a frame format of the sensing measurement feedback element is shown in the following table 2.

The sensing measurement feedback element shown in the table 2 includes a sensing sector identifier order (Sensing Sector ID Order) field and a sensing BRP down counter (Sensing BRP CDOWN) field. The sensing sector ID order field indicates transmit antenna IDs, transmit sector IDs, and receive antenna IDs in a plurality of transmit and receive beam pairs whose CSI differences are greater than the CSI variation threshold. In other words, the first beam information list is located in the sensing sector ID order field of the sensing measurement feedback element of the seventh BRP frame. In other words, the sensing sector ID order field includes a plurality of groups of identifiers, and one group of identifiers is used to determine one transmit beam and one receive antenna. As shown in the table 2, every three rows of the sensing sector ID order field form a group of identifiers. For example, a sector identifier 1 (Sector ID 1)/a first value of a down counter (Down counter, CDOWN) (represented as CDOWN 1)/an AWV feedback identifier 1 (AWV Feedback ID 1), a transmit antenna identifier 1 (TX Antenna ID 1), and a receive antenna identifier 1 (RX Antenna ID 1) form a group of identifiers. A sector identifier 2 (Sector ID 2)/CDOWN 2/AWV feedback identifier 2 (AWV Feedback ID 2), a transmit antenna identifier 2 (TX Antenna ID 2), and a receive antenna identifier 2 (RX Antenna ID 2) are another group of identifiers. The rest can be deduced in the same manner. It should be understood that a 1^{st} row of every three rows of the sensing sector ID order field of the sensing measurement feedback element in this application is a sector ID. An order of the plurality of groups of identifiers in the sensing sector ID order field is determined based on CSI variations (namely, CSI differences) (different from communication, the plurality of groups of identifiers are sorted based on SNR values in communication). The plurality of groups of identifiers are sorted in descending order of the CSI variations. An antenna ID and a sector ID that have largest CSI variations are in the first place. The rest can be deduced in the same manner.

The sensing BRP CDOWN field indicates a BRP CDOWN value corresponding to an AWV feedback identifier. It should be understood that, in this embodiment of this application, because a sector ID and a TX antenna ID jointly indicate a transmit beam, there is no AWV feedback ID. Therefore, the sensing BRP CDOWN field is reserved or not used. In addition, an element identifier (Element ID), a length (Length), and an element identifier extension (Element ID Extension) shown in the table 2 are general frame formats of an element frame. In this embodiment of this application, the element ID is set to a reserved value 13, to indicate the sensing measurement feedback element.

**Table 1**

| Order (Order) | Information (Information) |
|---|---|
| 1 | Category (Category) |
| 2 | Unprotected DMG action/Unprotected DMG action |
| 3 | Dialog token/Dialog token |
| 4 | BRP request field/BRP request field |
| 5 | DMG beam refinement element/DMG beam refinement element |
| 6 | Zero or more channel measurement feedback elements/Zero or more channel measurement feedback elements |
| 7 | Enhanced beam tracking element/Enhanced beam tracking element |
| 8 | SSW report element/SSW report element |
| 9 | EDMG partial sector level sweep element (optional)/EDMG partial sector level sweep element (optional) |
| 10 | EDMG BRP request element (optional)/EDMG BRP request element (optional) |
| 11 | Zero or more EDMG channel measurement feedback elements/Zero or more EDMG channel measurement feedback elements |
| 12 | BRP sensing request element/BRP sensing request element |
| 13 | Sensing measurement feedback element/Sensing measurement feedback element |

**Table 2**

| Field/Field | | Length | Meaning/Meaning |
|---|---|---|---|
| Element ID/Element identifier | | 8 bits | |
| Length/Length | | 8 bits | |
| Element ID extension/Element identifier extension | | 8 bits | |
| Sensing sector ID order/Sensing sector identifier order | Sector ID 1 (Sector identifier 1)/CDOWN 1 (First value of a down counter)/AWV Feedback ID 1 (AWV feedback identifier 1) | 11 bits | Sector ID k/CDOWN k/AWV Feedback ID k-Sector ID/CDOWN/AWV feedback ID for SNR k being obtained, or sector ID/CDOWN/AWV feedback ID of the k^{th} detected beam. |
| | TX antenna ID 1 (Transmit antenna identifier 1) | 3 bits | (k^{th} sector identifier/k^{th} CDOWN value/k^{th} AWV feedback identifier, corresponding to a beam corresponding to a k^{th} SNR value, or corresponding to a k^{th} detected beam). |
| | RX antenna ID 1 (Receive antenna identifier 1) | 3 bits | |
| | Sector ID 2/CDOWN 2/AWV feedback ID 2 | 11 bits | TX Antenna ID k - TX antenna ID corresponding to Sector ID k/CDOWN k/AWV Feedback ID k. (k^{th} transmit antenna identifier, corresponding to k^{th} sector identifier/k^{th} value/k^{th}AWV CDOWN feedback identifier). |
| | TX antenna ID 2 | 3 bits | |
| | RX antenna ID 2 | 3 bits | |
| | ... | ... | RX Antenna ID k - RX antenna ID corresponding to Sector ID k/CDOWN k/AWV Feedback ID k (k^{th} receive antenna identifier, corresponding to k^{th} sector identifier/k^{th} CDOWN value/k^{th}AWV feedback identifier) |
| | Sector ID_{Nmeas}/CDOWN_{Nmeas}/AWV feedback ID_{Nmeas} | 11 bits | |
| | TX antenna ID_{Nmeas} | 3 bits | |
| | RX antenna ID_{Nmeas} | 3 bits | |
| Sensing BRP CDOWN/Sensing BRP down counter | BRP CDOWN 1 | 6 bits | BRP CDOWN k: BRP CDOWN corresponding to AWV feedback ID k (k^{th} BRP down counter value, corresponding to k^{th} AWV feedback identifier) |
| | BRP CDOWN 2 | 6 bits | |
| | ... | ... | |
| | BRP CDOWNNmeas | 6 bits | |
| ... | ... | ... | ... |
| | ... | ... | ... |

S307: The second device sends an eighth BRP frame that carries the second beam information list, where the second beam information list is used to feed back a plurality of transmit and receive beam pairs whose variations of CSI from the first device to the second device are greater than the CSI variation threshold.

S308: The first device receives the eighth BRP frame that carries the second beam information list.

Optionally, the second device sends, to the first device, the eighth BRP frame that carries the second beam information list. An element field is newly added based on a frame format of an original BRP frame to carry the second beam information list. In this application, a newly added element is referred to as a sensing measurement feedback element (Sensing Measurement feedback element). It should be understood that the newly added element may alternatively have another name. This is not limited in this application. The second beam information list is used to feed back a plurality of transmit beams whose variations of CSI from the first device to the second device are greater than the CSI variation threshold and a receive antenna corresponding to each transmit beam.

Optionally, the second beam information list includes an antenna identifier and a sector identifier that correspond to a transmit beam in the plurality of transmit and receive beam pairs whose variations of CSI from the first device to the second device are greater than the CSI variation threshold, and a receive antenna identifier corresponding to each transmit beam. It should be understood that one transmit and receive beam pair includes one transmit beam and one receive beam. One antenna identifier and one sector identifier can be used to uniquely determine one beam. However, because the receive beam is used by a receive end to receive data, a direction of the receive beam does not need to be notified to a transmit end, and only needs to be known by the receive end. Therefore, the second beam information list may not include a sector identifier of the receive beam. In other words, a CSI difference between CSI values obtained through measurement when the transmit end and the receive end (the second device and the first device) sends and receives the fifth BRP PPDU any two times by using any one of the plurality of transmit and receive beam pairs is greater than the CSI variation threshold. In other words, a difference between CSI values obtained through any two measurements on the plurality of transmit and receive beam pairs is greater than the CSI variation threshold.

Optionally, an element identifier of the sensing measurement feedback element (Sensing Measurement feedback element) may be a reserved value, for example, 13. It should be understood that the standard 802.11ay defines elements whose element identifiers (element IDs) are 0 to 11. As shown in the foregoing table 1, based on this, this embodiment of this application defines the BRP sensing request element whose element identifier is 12 and the sensing measurement feedback element whose element identifier is 13. A frame format of the BRP sensing request element whose element identifier is 12 is shown in FIG. 13B. Details are not described herein again. The sensing measurement feedback element whose element identifier is 13 is located in the seventh BRP frame. A frame format of the sensing measurement feedback element is shown in the foregoing table 2. Details are not described herein again. The second beam information list is located in a sensing sector ID order field of the sensing measurement feedback element of the eighth BRP frame.

It can be learned that, in this embodiment of this solution, based on the procedures of the beamforming training (which includes the SLS phase and the BRP phase) in the standard 802.11ay, sensing is performed by using a variation between CSI values measured when a same beam sweeps for a plurality of times, and related frame structures in the SLS phase and the BRP phase are modified to enable a sensing operation, feed back a sensing measurement result, and the like. In this way, sensing of a single moving target and training of an optimal transmit/receive beam for sensing can be implemented while original communication beam training is implemented, there is no need to specially design a related procedure for the sensing and the training of the beam for sensing, overheads are low, and compatibility is good.

To better understand the MID procedure shown in FIG. 12 and the BC procedure shown in FIG. 15, the following uses one example for description.

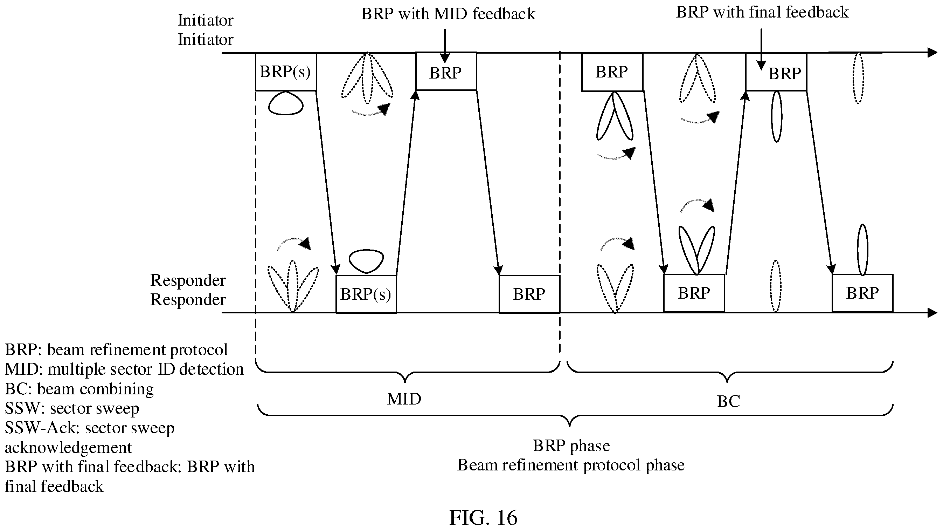

FIG. 16 is a schematic time sequence diagram of a BRP phase according to an embodiment of this application. After the SLS phase, an initiator sends a BRP PPDU to perform a MID procedure. As shown in FIG. 16, an initiator (Initiator) sends a BRP PPDU (the BRP PPDU includes a BRP frame and a TRN unit) in a quasi-omni manner, and indicates, by using the BRP PPDU, a responder (Responder) to enable a sensing operation (or a responder evaluates a variation of CSI from the initiator to the responder). The responder (Responder) performs directional receiving in a sector sweep manner, and measures a CSI value of the TRN unit in the received BRP PPDU. The responder compares variations between CSI values obtained when a same receive beam sweeps a same location for a plurality of times, to determine whether there is a moving target in a swept area of the beam. Then, the responder sends a BRP PPDU in a quasi-omni manner, and indicates, by using the BRP PPDU, the initiator (Initiator) to perform a corresponding sensing operation (or the initiator evaluates a variation of CSI from the responder to the initiator). The initiator performs directional receiving in a sector sweep manner, and measures a CSI value of a TRN Unit in the received BRP PPDU. The initiator feeds back a measurement result (a first number of receive beams) of the initiator by sending a BRP frame that carries a DMG beam refinement element. Similarly, the responder adds a measurement result (a second number of receive beams) of the responder to a beam refinement element of a BRP frame for feedback. For a frame format of each BRP frame in the MID procedure, refer to the foregoing descriptions. Details are not described herein again.

After the MID procedure, the initiator (Initiator) sends a BRP PPDU in a directional manner, and indicates, by using the BRP PPDU, the responder to evaluate a variation of CSI from the initiator to the responder. The responder (Responder) performs directional receiving and measures a CSI value of a TRN unit in the received BRP PPDU. The responder compares variations between CSI values obtained when a same transmit and receive beam pair sends and receives a fifth BRP PPDU for a plurality of times, to determine whether there is a moving target in a swept area of the beam. Then, the responder sends a BRP PPDU in a directional manner, and indicates, by using a BRP frame, the initiator (Initiator) to perform a corresponding sensing operation (or the initiator evaluates a variation of CSI from the responder to the initiator). The initiator performs directional receiving, and measures a CSI value of a TRN Unit in the received BRP PPDU. The initiator adds a measurement result (a first beam information list) of the initiator to a BRP frame for feedback. Similarly, the responder adds a measurement result (a second beam information list) of the responder to a BRP frame for feedback. For a frame format of each BRP frame in the BC procedure, refer to the foregoing descriptions. Details are not described herein again.

It should be understood that a main difference between the MID procedure and the BC procedure lies in that content fed back in the MID procedure is different from that fed back in the BC procedure, and sending and receiving manners are different.

### Embodiment 2

Embodiment 2 of this application mainly describes how to design a related frame format and a feedback procedure based on the beamforming training process in the standard 802. Hay when a plurality of moving targets are sensed and a plurality of optimal sensing beams need to be fed back, to implement both communication beam training and radio sensing.

It should be understood that when there are a plurality of moving targets in a sensing scenario, only one optimal sensing beam may need to be fed back. When only one optimal sensing beam needs to be fed back, the technical solution provided in Embodiment 1 or a technical solution provided in Embodiment 2 may be used. This is not limited in this embodiment of this application.

A data amount difference caused by sweeping a single moving target and sweeping a plurality of moving targets is considered. For the plurality of moving targets, a plurality of sector identifiers and antenna identifiers need to be fed back, and reserved bits of each frame in the BRP phase are sufficient, to adapt to a case of the plurality of moving targets. However, reserved bits of an SSW frame and an SSW feedback frame in the SLS phase are limited, and the plurality of sector identifiers and antenna identifiers cannot be fed back at the same time. Therefore, in a radio sensing method provided in Embodiment 2 of this application, a sensing feedback procedure is added between an SLS phase and a BRP phase, to feed back sensing measurement results of an ISS procedure and an RSS procedure.

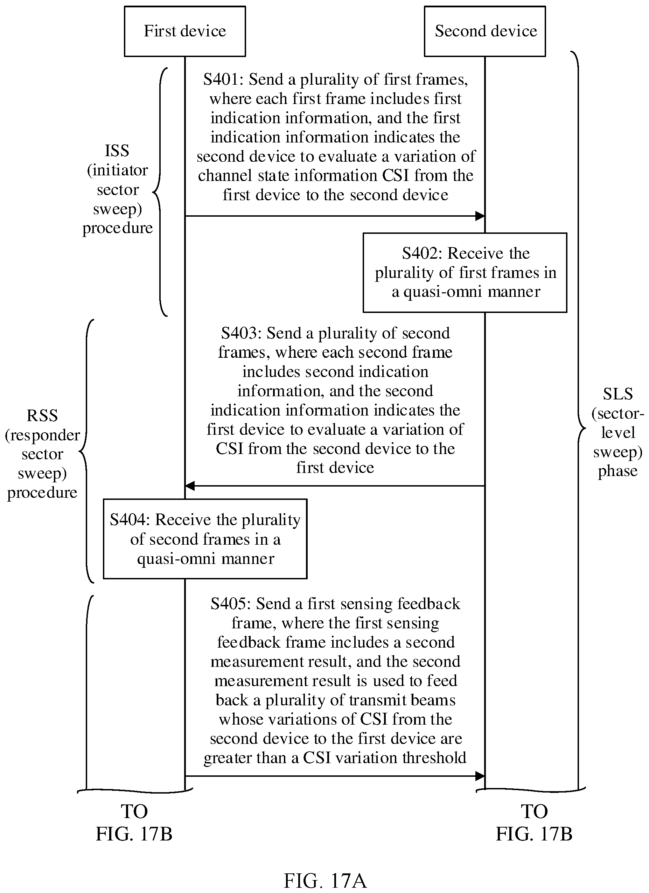

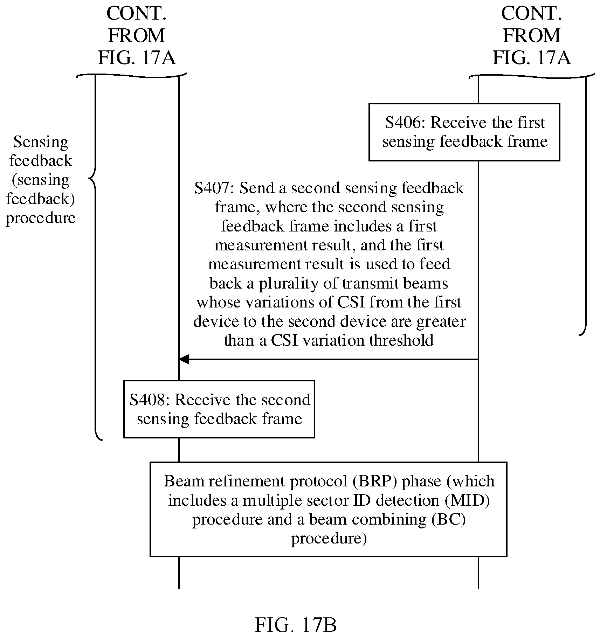

Specifically, FIG. 17A and FIG. 17B are another schematic flowchart of the radio sensing method according to an embodiment of this application. As shown in FIG. 17A and FIG. 17B, the ISS procedure includes a step S401 and a step S402, and may be used to train an optimal sensing transmit beam of the first device (or the initiator). The RSS procedure includes a step S403 and a step S404, and may be used to train an optimal sensing transmit beam of the second device (or the responder). The sensing feedback procedure includes a step S405 to a step S408, and may be used to feed back the optimal sensing transmit beams obtained in the ISS procedure and the RSS procedure.

As shown in FIG. 17A and FIG. 17B, the radio sensing method includes but is not limited to the following steps.

S401: A first device sends a plurality of first frames, where each first frame includes first indication information, and the first indication information indicates a second device to evaluate a variation of channel state information CSI from the first device to the second device.

S402: The second device receives the plurality of first frames in a quasi-omni manner.

Optionally, for implementations of the step S401 and the step S402 in this embodiment of this application, refer to the implementations of the step S101 and the step S102 in the embodiment shown in FIG. 5A and FIG. 5B. Details are not described herein again.

S403: The second device sends a plurality of second frames, where each second frame includes second indication information, and the second indication information indicates the first device to evaluate a variation of CSI from the second device to the first device.

S404: The first device receives the plurality of second frames in a quasi-omni manner.

Optionally, for implementations of the step S403 and the step S404 in this embodiment of this application, refer to the corresponding descriptions in the step S103 and the step S104 in the embodiment shown in FIG. 5A and FIG. 5B. Details are not described herein again. It should be understood that, because the second frame does not carry a first measurement result in this embodiment of this application, an SNR report subfield of the second frame in this embodiment of this application indicates an SNR of a beam with optimal communication.

S405: The first device sends a first sensing feedback frame, where the first sensing feedback frame includes a second measurement result, and the second measurement result is used to feed back a plurality of transmit beams whose variations of CSI from the second device to the first device are greater than a CSI variation threshold.

S406: The second device receives the first sensing feedback frame.

Optionally, before the step S405, the radio sensing method provided in this embodiment of this application further includes an SSW feedback procedure. To be specific, the first device sends an SSW feedback frame, and the second device receives the SSW feedback frame. The SSW feedback procedure is the same as the SSW feedback procedure in the standard 802.11ay. For a specific implementation, refer to related descriptions in the standard 802.11ay. Details are not described again in this embodiment of this application.

Optionally, after the SSW feedback procedure, the first device sends the first sensing feedback frame, and the second device receives the first sensing feedback frame. The first sensing feedback frame includes the second measurement result that is used to feed back the plurality of transmit beams whose variations of CSI from the second device to the first device are greater than the CSI variation threshold. In other words, the second measurement result is used to feed back a result evaluated by the first device, or is used to feed back a sensing measurement result (for example, a plurality of antenna identifiers and a plurality of sector identifiers that correspond to a moving target) in the RSS phase.

Optionally, the second measurement result includes a plurality of groups of second beam identifiers, and one group of second beam identifiers includes a second antenna identifier and a second sector identifier. A beam determined by one group of second beam identifiers is a transmit beam whose CSI difference between any two CSI measurements on a same transmit beam is greater than the CSI variation threshold and that is of all transmit beams of the second device.

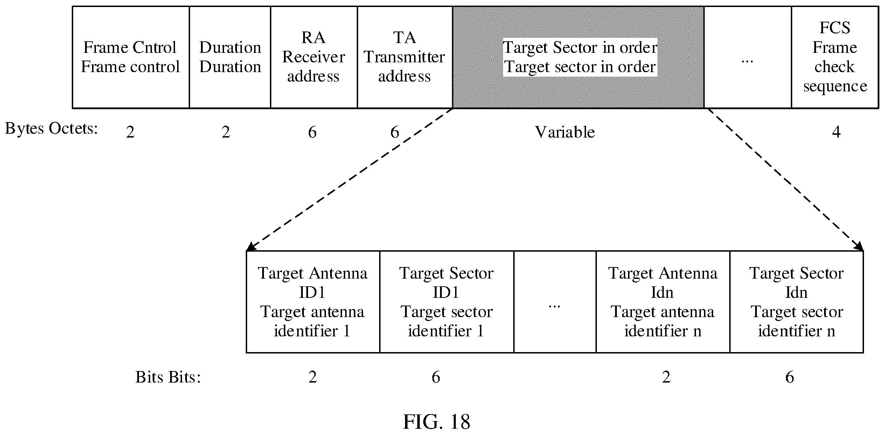

FIG. 18 is a schematic diagram of a frame format of a first sensing feedback frame according to an embodiment of this application. As shown in FIG. 18, the first sensing feedback frame includes a frame control (frame control) field, a duration (duration) field, a receiver address (Receiver Address, RA) field, a transmitter address (Transmitter Address, TA) field, a target sector in order (target sector in order) field, and a frame check sequence (frame check sequence, FCS) field. The target sector in order (target sector in order) field includes a plurality of target antenna identifier subfields and a plurality of target sector identifier subfields, one target antenna identifier subfield indicates one second antenna identifier, and one target sector identifier subfield indicates one second sector identifier. In other words, the second measurement result is carried in the target sector in order field of the first sensing feedback frame. A target antenna identifier 1 (target antenna ID 1) and a target sector identifier 1 (target sector ID 1) in FIG. 18 indicate one group of second beam identifiers.

It should be understood that the fields included in the first sensing feedback frame in FIG. 18 may alternatively have other names. This is not limited in this embodiment of this application.

S407: The second device sends a second sensing feedback frame, where the second sensing feedback frame includes a first measurement result, and the first measurement result is used to feed back a plurality of transmit beams whose variations of CSI from the first device to the second device are greater than a CSI variation threshold.

S408: The first device receives the second sensing feedback frame.

Optionally, similar to the step S405 and the step S406, the second device sends the second sensing feedback frame, and the first device receives the second sensing feedback frame. The second sensing feedback frame includes the first measurement result that is used to feed back the plurality of transmit beams whose variations of CSI from the first device to the second device are greater than the CSI variation threshold. In other words, the first measurement result is used to feed back a result evaluated by the second device, or is used to feed back a sensing measurement result (for example, a plurality of antenna identifiers and a plurality of sector identifiers that correspond to a moving target) in the ISS phase.

Optionally, the first measurement result includes a plurality of groups of first beam identifiers, and one group of first beam identifiers includes a first antenna identifier and a first sector identifier. A beam determined by one group of first beam identifiers is a transmit beam whose CSI difference between any two CSI measurements on a same transmit beam is greater than the CSI variation threshold and that is of all transmit beams of the first device.

Optionally, a frame format of the second sensing feedback frame is the same as that of the first sensing feedback frame. For details, refer to FIG. 18.

It can be learned that in this embodiment of this application, the sensing feedback procedure (the foregoing step S405 to step S408) is added to resolve a problem that beam information of a plurality of targets cannot be fed back due to insufficient reserved bits in the SLS phase, and implement sensing of a plurality of moving targets and training of an optimal transmit/receive beam for sensing each moving target. There is no need to specially design a related procedure for the sensing and the training of the beam for sensing, overheads are low, and compatibility is good.

After the step S408, the radio sensing method provided in this embodiment of this application further includes the BRP phase.

In an implementation, a BRP phase in the method shown in FIG. 17A and FIG. 17B is the same as the BRP phase of the beamforming training in the standard 802.11ay. For a specific process and a related frame format, refer to descriptions in the standard 802.11ay. Details are not described herein again.

In another implementation, for a MID procedure included in the BRP phase of the method shown in FIG. 17A and

FIG. 17B, refer to FIG. 12. For a BC procedure, refer to FIG. 15. Details are not described herein again. In other words, a difference between this embodiment of this application and Embodiment 1 lies in that: In this embodiment of this application, the SSW frame and the SSW feedback frame no longer feed back the sensing measurement results (the antenna identifier and the sector identifier that correspond to the moving target) of the RSS procedure and the ISS procedure, and the sensing measurement results of the RSS procedure and the ISS procedure are fed back in the newly added sensing feedback procedure.

To better understand the procedures of the method shown in FIG. 17A and FIG. 17B, the following uses one example for description.

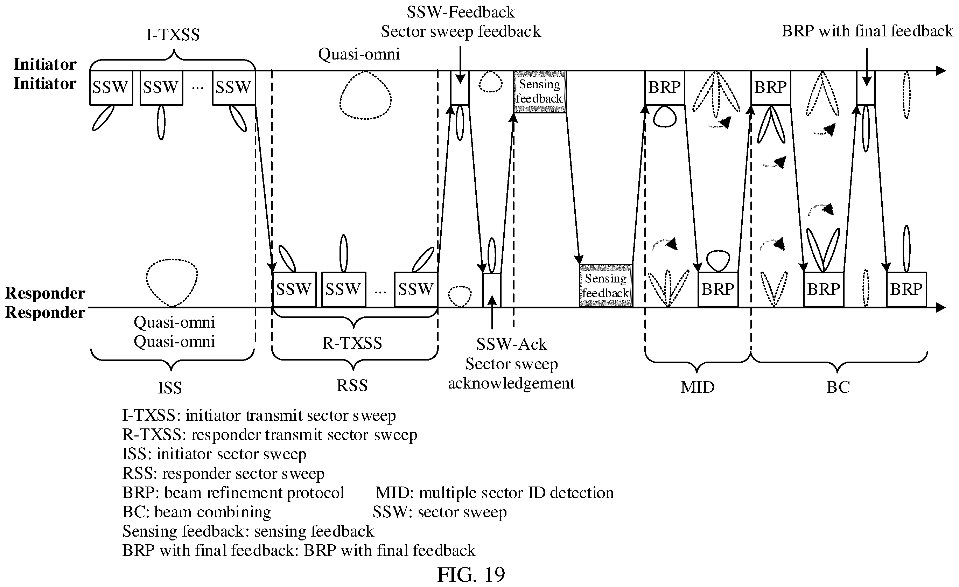

In an example, FIG. 19 is a schematic time sequence diagram of the radio sensing method according to an embodiment of this application. Because reserved bits of an original feedback field (SSW feedback field) in the SLS phase are insufficient, the SSW frame and the SSW feedback frame no longer feed back the sensing measurement results of the RSS procedure and the ISS procedure, and the sensing measurement results of the RSS procedure and the ISS procedure are fed back in the newly added sensing feedback procedure. As shown in FIG. 19, a sensing feedback process procedure is added after an SSW feedback procedure, to feed back beam information (a sector identifier and an antenna identifier) corresponding to a plurality of targets in an SLS phase. In a subsequent BRP phase, because a plurality of pieces of beam information (a sector identifier and an antenna identifier) can be fed back by using a BRP frame, no modification is required, that is, the BRP phase is consistent with that in FIG. 16. In the sensing feedback procedure, an initiator and a responder compare variations between CSI values obtained when a same beam sweeps for a plurality of times in the SLS phase, and send sensing feedback frames to feed back sector and antenna information corresponding to a plurality of targets to peer ends. It should be understood that FIG. 19 shows that the initiator sends an SSW frame in an ISS procedure. During actual application, a case in which the initiator sends a beacon frame in an ISS procedure is similar to that in FIG. 19. Details are not described herein again.

The method provided in this application is described in detail in the foregoing content. To better implement the foregoing solutions in embodiments of this application, embodiments of this application further provide a corresponding apparatus or device.

In embodiments of this embodiment, a first device and a second device may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In an actual implementation, another division manner may be used.

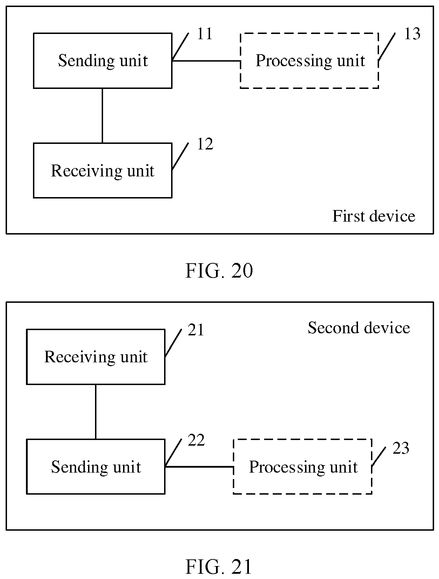

When an integrated unit is used, FIG. 20 is a schematic diagram of a structure of a first device according to an embodiment of this application. As shown in FIG. 20, the first device includes a sending unit 11 and a receiving unit 12.

In a design, the sending unit 11 is configured to send a plurality of first frames, where each first frame includes first indication information, and the first indication information indicates a second device to evaluate a variation of CSI from the first device to the second device. The receiving unit 12 is configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The sending unit 11 is further configured to send a third frame, where the third frame includes a second measurement result, and the second measurement result is used to feed back a transmit beam whose variation of CSI from the second device to the first device is greater than a CSI variation threshold.

Optionally, the first device further includes a processing unit 13, configured to generate a plurality of first frames. The processing unit 13 is further configured to generate a third frame.

Optionally, the sending unit 11 is further configured to send a first BRP PPDU for a plurality of times in a quasi-omni manner, where a first BRP frame included in the first BRP PPDU is used to indicate the second device to evaluate the variation of the CSI from the first device to the second device. The receiving unit 12 is further configured to receive a second BRP PPDU for a plurality of times, where a second BRP frame included in the second BRP PPDU is used to indicate the first device to evaluate the variation of the CSI from the second device to the first device. The sending unit 11 is further configured to send a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The receiving unit 12 is further configured to receive a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit 13 is further configured to generate a first BRP PPDU and a third BRP frame.

Each first BRP PPDU includes one first BRP frame and a training unit (training unit, TRN Unit). Similarly, each second BRP PPDU includes one second BRP frame and a TRN unit. The TRN unit is used by a peer end to perform CSI measurement.

Optionally, the sending unit 11 is further configured to send a fifth BRP PPDU for a plurality of times, where a fifth BRP frame included in the fifth BRP PPDU is used to indicate the second device to evaluate the variation of the CSI from the first device to the second device. The receiving unit 12 is further configured to receive a sixth BRP PPDU for a plurality of times, where a sixth BRP frame included in the sixth BRP PPDU is used to indicate the first device to evaluate the variation of the CSI from the second device to the first device. The sending unit 11 is further configured to send a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The receiving unit 12 is further configured to receive an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit 13 is further configured to generate a fifth BRP PPDU and a seventh BRP frame that carries a first beam information list. Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

The sending unit 11 and the receiving unit 12 may be integrated into one module, for example, a transceiver module.

It should be understood that the first device in this design may correspondingly perform the foregoing method embodiment 1, and the foregoing operations or functions of the units in the first device are respectively used to implement corresponding operations in the foregoing method embodiment 1. For technical effects thereof, refer to the technical effects in the foregoing embodiment 1. For brevity, details are not described herein again.

In another design, the sending unit 11 is configured to send a plurality of first frames, where each first frame includes first indication information, and the first indication information indicates a second device to evaluate a variation of CSI from the first device to the second device. The receiving unit 12 is configured to receive a plurality of second frames in a quasi-omni manner, where each second frame includes second indication information, and the second indication information indicates the first device to evaluate a variation of CSI from the second device to the first device. The sending unit 11 is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The receiving unit 12 is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the first device further includes a processing unit 13, configured to generate a plurality of first frames. The processing unit 13 is further configured to generate a first sensing feedback frame.

Optionally, the sending unit 11 is further configured to send a first BRP PPDU for a plurality of times in a quasi-omni manner, where a first BRP frame included in the first BRP PPDU is used to indicate the second device to evaluate the variation of the CSI from the first device to the second device. The receiving unit 12 is further configured to receive a second BRP PPDU for a plurality of times, where a second BRP frame included in the second BRP PPDU is used to indicate the first device to evaluate the variation of the CSI from the second device to the first device. The sending unit 11 is further configured to send a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The receiving unit 12 is further configured to receive a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit 13 is further configured to generate a first BRP PPDU and a third BRP frame.

Each first BRP PPDU includes one first BRP frame and a training unit (training unit, TRN Unit). Similarly, each second BRP PPDU includes one second BRP frame and a TRN unit. The TRN unit is used by a peer end to perform CSI measurement.

Optionally, the sending unit 11 is further configured to send a fifth BRP PPDU for a plurality of times, where a fifth BRP frame included in the fifth BRP PPDU is used to indicate the second device to evaluate the variation of the CSI from the first device to the second device. The receiving unit 12 is further configured to receive a sixth BRP PPDU for a plurality of times, where a sixth BRP frame included in the sixth BRP PPDU is used to indicate the first device to evaluate the variation of the CSI from the second device to the first device. The sending unit 11 is further configured to send a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The receiving unit 12 is further configured to receive an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit 13 is further configured to generate a fifth BRP PPDU and a seventh BRP frame that carries a first beam information list. Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

The sending unit 11 and the receiving unit 12 may be integrated into one module, for example, a transceiver module.

It should be understood that the first device in this design may correspondingly perform the foregoing method embodiment 2, and the foregoing operations or functions of the units in the first device are respectively used to implement corresponding operations in the foregoing method embodiment 2. For technical effects thereof, refer to the technical effects in the foregoing embodiment 2. For brevity, details are not described herein again.

FIG. 21 is a schematic diagram of a structure of a second device according to an embodiment of this application. As shown in FIG. 21, the second device includes a receiving unit 21 and a sending unit 22.

In a design, the receiving unit 21 is configured to receive a plurality of first frames in a quasi-omni manner, where each first frame includes first indication information, and the first indication information indicates the second device to evaluate a variation of CSI from a first device to the second device. The sending unit 22 is configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The receiving unit 21 is further configured to receive a third frame, where the third frame includes a second measurement result, and the second measurement result is used to feed back a transmit beam whose variation of CSI from the second device to the first device is greater than a CSI variation threshold.

Optionally, the second device further includes a processing unit 23, configured to generate a plurality of second frames.

Optionally, the receiving unit 21 is further configured to receive a first BRP PPDU for a plurality of times, where a first BRP frame included in the first BRP PPDU is used to indicate the second device to evaluate the variation of the CSI from the first device to the second device. The sending unit 22 is further configured to send a second BRP PPDU for a plurality of times in a quasi-omni manner, where a second BRP frame included in the second BRP PPDU is used to indicate the first device to evaluate the variation of the CSI from the second device to the first device. The receiving unit 21 is further configured to receive a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The sending unit 22 is further configured to send a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit 23 is further configured to generate a second BRP PPDU and a fourth BRP frame.

Each first BRP PPDU includes one first BRP frame and a training unit (training unit, TRN Unit). Similarly, each second BRP PPDU includes one second BRP frame and a TRN unit. The TRN unit is used by a peer end to perform CSI measurement.

Optionally, the receiving unit 21 is further configured to receive a fifth BRP PPDU for a plurality of times, where a fifth BRP frame included in the fifth BRP PPDU is used to indicate the second device to evaluate the variation of the CSI from the first device to the second device. The sending unit 22 is further configured to send a sixth BRP PPDU for a plurality of times, where a sixth BRP frame included in the sixth BRP PPDU is used to indicate the first device to evaluate the variation of the CSI from the second device to the first device. The receiving unit 21 is further configured to receive a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The sending unit 22 is further configured to send an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit 23 is further configured to generate a sixth BRP PPDU and an eighth BRP frame that carries a second beam information list. Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

The receiving unit 21 and the sending unit 22 may be integrated into one module, for example, a transceiver module.

It should be understood that the second device in this design may correspondingly perform the foregoing method embodiment 1, and the foregoing operations or functions of the units in the second device are respectively used to implement corresponding operations in the foregoing method embodiment 1. For technical effects thereof, refer to the technical effects in the foregoing embodiment 1. For brevity, details are not described herein again.

In another design, the receiving unit 21 is configured to receive a plurality of first frames in a quasi-omni manner, where each first frame includes first indication information, and the first indication information indicates the second device to evaluate a variation of CSI from a first device to the second device. The sending unit 22 is configured to send a plurality of second frames, where each second frame includes second indication information, and the second indication information indicates the first device to evaluate a variation of CSI from the second device to the first device. The receiving unit 21 is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The sending unit 22 is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the second device further includes a processing unit 23, configured to generate a plurality of second frames. The processing unit 13 is further configured to generate a second sensing feedback frame.

Optionally, the receiving unit 21 is further configured to receive a first BRP PPDU for a plurality of times, where a first BRP frame included in the first BRP PPDU is used to indicate the second device to evaluate the variation of the CSI from the first device to the second device. The sending unit 22 is further configured to send a second BRP PPDU for a plurality of times in a quasi-omni manner, where a second BRP frame included in the second BRP PPDU is used to indicate the first device to evaluate the variation of the CSI from the second device to the first device. The receiving unit 21 is further configured to receive a third BRP frame, where the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device. The sending unit 22 is further configured to send a fourth BRP frame, where the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

Optionally, the processing unit 23 is further configured to generate a second BRP PPDU and a fourth BRP frame.

Each first BRP PPDU includes one first BRP frame and a training unit (training unit, TRN Unit). Similarly, each second BRP PPDU includes one second BRP frame and a TRN unit. The TRN unit is used by a peer end to perform CSI measurement.

Optionally, the receiving unit 21 is further configured to receive a fifth BRP PPDU for a plurality of times, where a fifth BRP frame included in the fifth BRP PPDU is used to indicate the second device to evaluate the variation of the CSI from the first device to the second device. The sending unit 22 is further configured to send a sixth BRP PPDU for a plurality of times, where a sixth BRP frame included in the sixth BRP PPDU is used to indicate the first device to evaluate the variation of the CSI from the second device to the first device. The receiving unit 21 is further configured to receive a seventh BRP frame that carries a first beam information list, where the first beam information list is used to feed back a plurality of transmit beams whose variations of CSI from the second device to the first device are greater than the CSI variation threshold and a receive antenna corresponding to each transmit beam. The sending unit 22 is further configured to send an eighth BRP frame that carries a second beam information list, where the second beam information list is used to feed back a plurality of transmit beams whose variations of CSI from the first device to the second device are greater than the CSI variation threshold and a receive antenna corresponding to each transmit beam.

Optionally, the processing unit 23 is further configured to generate a sixth BRP PPDU and an eighth BRP frame that carries a second beam information list. Each fifth BRP PPDU includes one fifth BRP frame and a TRN unit. Similarly, each sixth BRP PPDU includes one sixth BRP frame and a TRN unit. The TRN unit is used by a peer end to perform CSI measurement.

The receiving unit 21 and the sending unit 22 may be integrated into one module, for example, a transceiver module.

It should be understood that the second device in this design may correspondingly perform the foregoing method embodiment 2, and the foregoing operations or functions of the units in the second device are respectively used to implement corresponding operations in the foregoing method embodiment 2. For technical effects thereof, refer to the technical effects in the foregoing embodiment 2. For brevity, details are not described herein again.

The foregoing describes the first device and the second device in embodiments of this application. The following describes possible product forms of the first device and the second device. It should be understood that any product in any form that has the function of the first device in FIG. 20 and any product in any form that has the function of the second device in FIG. 21 fall within the protection scope of embodiments of this application. It should be further understood that the following description is merely an example, and the product forms of the first device and the second device in embodiments of this application are not limited thereto.

In a possible product form, the first device and the second device in embodiments of this application may be implemented by using general bus architectures.

The first device includes a processor and a transceiver that is internally connected to and communicates with the processor.

In a design, the transceiver is configured to send a plurality of first frames, where each first frame includes first indication information, and the first indication information indicates a second device to evaluate a variation of CSI from the first device to the second device. The transceiver is further configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The transceiver is further configured to send a third frame, where the third frame includes a second measurement result, and the second measurement result is used to feed back a transmit beam whose variation of CSI from the second device to the first device is greater than a CSI variation threshold.

Optionally, the processor is configured to generate a plurality of first frames, and is further configured to generate a third frame.

In another design, the transceiver is configured to send a plurality of first frames, where each first frame includes first indication information, and the first indication information indicates a second device to evaluate a variation of CSI from the first device to the second device. The transceiver is further configured to receive a plurality of second frames in a quasi-omni manner, where each second frame includes second indication information, and the second indication information indicates the first device to evaluate a variation of CSI from the second device to the first device. The transceiver is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The transceiver is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processor is configured to generate a plurality of first frames, and is further configured to generate a first sensing feedback frame.

The second device includes a processor and a transceiver that is internally connected to and communicates with the processor.

In a design, the transceiver is configured to receive a plurality of first frames in a quasi-omni manner, where each first frame includes first indication information, and the first indication information indicates the second device to evaluate a variation of CSI from a first device to the second device. The transceiver is further configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The transceiver is further configured to receive a third frame, where the third frame includes a second measurement result, and the second measurement result is used to feed back a transmit beam whose variation of CSI from the second device to the first device is greater than a CSI variation threshold.

Optionally, the processor is configured to generate a plurality of second frames.

In another design, the transceiver is configured to receive a plurality of first frames in a quasi-omni manner, where each first frame includes first indication information, and the first indication information indicates the second device to evaluate a variation of CSI from a first device to the second device. The transceiver is further configured to send a plurality of second frames, where each second frame includes second indication information, and the second indication information indicates the first device to evaluate a variation of CSI from the second device to the first device. The transceiver is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The transceiver is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processor is configured to generate a plurality of second frames, and is further configured to generate a second sensing feedback frame.

In a possible product form, the first device and the second device in embodiments of this application may be implemented by using general-purpose processors.

The general-purpose processor for implementing the first device includes a processing circuit and an input/output interface that is internally connected to and communicates with the processing circuit.

In a design, the input/output interface is configured to send a plurality of first frames, where each first frame includes first indication information, and the first indication information indicates a second device to evaluate a variation of CSI from the first device to the second device. The input/output interface is further configured to receive a plurality of second frames in a quasi-omni manner, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The input/output interface is further configured to send a third frame, where the third frame includes a second measurement result, and the second measurement result is used to feed back a transmit beam whose variation of CSI from the second device to the first device is greater than a CSI variation threshold.

Optionally, the processing circuit is configured to generate a plurality of first frames, and is further configured to generate a third frame.

In another design, the input/output interface is configured to send a plurality of first frames, where each first frame includes first indication information, and the first indication information indicates a second device to evaluate a variation of CSI from the first device to the second device. The input/output interface is further configured to receive a plurality of second frames in a quasi-omni manner, where each second frame includes second indication information, and the second indication information indicates the first device to evaluate a variation of CSI from the second device to the first device. The input/output interface is further configured to send a first sensing feedback frame, where the first sensing feedback frame includes a second measurement result, and the second measurement result is used to feed back a plurality of transmit beams whose variations of CSI from the second device to the first device are greater than a CSI variation threshold. The input/output interface is further configured to receive a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processing circuit is configured to generate a plurality of first frames, and is further configured to generate a first sensing feedback frame.

The general-purpose processor for implementing the second device includes a processing circuit and an input/output interface that is internally connected to and communicates with the processing circuit.

In a design, the input/output interface is configured to receive a plurality of first frames in a quasi-omni manner, where each first frame includes first indication information, and the first indication information indicates the second device to evaluate a variation of CSI from a first device to the second device. The input/output interface is further configured to send a plurality of second frames, where each second frame includes a first measurement result and second indication information, the first measurement result is used to feed back a transmit beam whose variation of CSI from the first device to the second device is greater than a CSI variation threshold, and the second indication information indicates the first device to evaluate a variation of CSI from the second device to the first device. The input/output interface is further configured to receive a third frame, where the third frame includes a second measurement result, and the second measurement result is used to feed back a transmit beam whose variation of CSI from the second device to the first device is greater than a CSI variation threshold.

Optionally, the processing circuit is configured to generate a plurality of second frames.

In another design, the input/output interface is configured to receive a plurality of first frames in a quasi-omni manner, where each first frame includes first indication information, and the first indication information indicates the second device to evaluate a variation of CSI from a first device to the second device. The input/output interface is further configured to send a plurality of second frames, where each second frame includes second indication information, and the second indication information indicates the first device to evaluate a variation of CSI from the second device to the first device. The input/output interface is further configured to receive a first sensing feedback frame, where the first sensing feedback frame includes a second measurement result, and the second measurement result is used to feed back a plurality of transmit beams whose variations of CSI from the second device to the first device are greater than a CSI variation threshold. The input/output interface is further configured to send a second sensing feedback frame, where the second sensing feedback frame includes a first measurement result, and the first measurement result is used to feed back a plurality of transmit beams whose variations of CSI from the first device to the second device are greater than a CSI variation threshold.

Optionally, the processing circuit is configured to generate a plurality of second frames, and is further configured to generate a second sensing feedback frame.

It should be understood that the foregoing apparatuses or devices in various product forms have any function of the first device or the second device in the foregoing method embodiments. Details are not described herein again.

An embodiment of this application further provides a computer-readable storage medium. The computer-readable storage medium stores computer program code. When a processor executes the computer program code, an electronic device performs the method in any one of the foregoing embodiments.

An embodiment of this application further provides a computer program product. When the computer program product runs on a computer, the computer performs the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus by using a receiver circuit, so that the apparatus performs the method in any one of the foregoing embodiments.

An embodiment of this application further provides a wireless communication system, including a first device and a second device. The first device and the second device may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in one or more of the foregoing examples, the functions described in this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium that can be accessed by a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A radio sensing method, comprising:
sending, by a first device, a plurality of first frames, wherein each first frame comprises first indication information, and the first indication information indicates a second device to evaluate a variation of channel state information (channel state information, CSI) from the first device to the second device;
receiving, by the first device, a plurality of second frames in a quasi-omni manner, wherein each second frame comprises a first measurement result and second indication information, the first measurement result is used to feed back a transmit beam whose variation of the CSI from the first device to the second device is greater than a CSI variation threshold, and the second indication information indicates the first device to evaluate a variation of CSI from the second device to the first device; and
sending, by the first device, a third frame, wherein the third frame comprises a second measurement result, and the second measurement result is used to feed back a transmit beam whose variation of the CSI from the second device to the first device is greater than the CSI variation threshold.

2. A radio sensing method, comprising:
receiving, by a second device, a plurality of first frames in a quasi-omni manner, wherein each first frame comprises first indication information, and the first indication information indicates the second device to evaluate a variation of CSI from a first device to the second device;
sending, by the second device, a plurality of second frames, wherein each second frame comprises a first measurement result and second indication information, the first measurement result is used to feed back a transmit beam whose variation of the CSI from the first device to the second device is greater than a CSI variation threshold, and the second indication information indicates the first device to evaluate a variation of CSI from the second device to the first device; and
receiving, by the second device, a third frame, wherein the third frame comprises a second measurement result, and the second measurement result is used to feed back a transmit beam whose variation of CSI from the second device to the first device is greater than the CSI variation threshold.

3. The method according to claim 1 or 2, wherein the first frame is a beacon frame, and the first indication information is located in an optional subelement subfield of an enhanced directional multi-gigabit (enhanced directional multi-gigabit, EDMG) capability field of the beacon frame;
the first indication information comprises a CSI measurement request field and a CSI variation calculation field, and further comprises one or more of the following fields: an evaluation algorithm field and a CSI variation threshold field; and
when a value of the CSI measurement request field is a first value, the CSI measurement request field indicates the second device to measure CSI; the evaluation algorithm field indicates a CSI evaluation algorithm; the CSI variation threshold field indicates the CSI variation threshold; and the CSI variation calculation field indicates the second device whether to calculate a CSI difference.

4. The method according to claim 1 or 2, wherein the first frame is a sector sweep (sector sweep, SSW) frame, and the first indication information is carried in a reserved subfield of an SSW feedback field of the SSW frame;
the first indication information comprises a CSI measurement request field and a CSI variation calculation field, and further comprises one or more of the following fields: an evaluation algorithm field and a CSI variation threshold field; and
when a value of the CSI measurement request field is a first value, the CSI measurement request field indicates the second device to measure CSI; the evaluation algorithm field indicates a CSI evaluation algorithm; the CSI variation threshold field indicates the CSI variation threshold; and the CSI variation calculation field indicates the second device whether to calculate a CSI difference.

5. The method according to any one of claims 1 to 4, wherein the second frame is an SSW frame, and the second indication information is located in a reserved subfield of an SSW feedback field of the SSW frame;
the first measurement result is located in a signal-to-noise ratio (signal-to-noise ratio, SNR) report subfield of the SSW feedback field of the SSW frame; and
the second indication information comprises a CSI variation calculation field, and the CSI variation calculation field indicates the first device whether to calculate a CSI difference.

6. The method according to any one of claims 1 to 5, wherein the second frame further comprises third indication information, and the third indication information indicates whether the second frame comprises the first measurement result.

7. The method according to any one of claims 1 to 6, wherein the third frame is an SSW feedback frame, and the second measurement result is located in an SNR report subfield of an SSW feedback field of the SSW feedback frame.

8. The method according to any one of claims 1 to 7, wherein the third frame further comprises fourth indication information, and the fourth indication information indicates whether the third frame comprises the second measurement result.

9. The method according to any one of claims 1 to 8, wherein the first measurement result comprises a first antenna identifier and a first sector identifier, and the second measurement result comprises a second antenna identifier and a second sector identifier;
a beam determined by the first antenna identifier and the first sector identifier is a transmit beam whose CSI difference between any two CSI measurements on a same transmit beam is greater than the CSI variation threshold and that is of all transmit beams of the first device; and
a beam determined by the second antenna identifier and the second sector identifier is a transmit beam whose CSI difference between any two CSI measurements on a same transmit beam is greater than the CSI variation threshold and that is of all transmit beams of the second device.

10. The method according to claim 1, wherein after the sending, by the first device, a third frame, the method further comprises:
sending, by the first device, a first beam refinement protocol (beam refinement protocol, BRP) physical layer protocol data unit (Physical layer protocol data unit, PPDU) for a plurality of times in a quasi-omni manner, wherein the first BRP PPDU is used to indicate the second device to evaluate the variation of the CSI from the first device to the second device;
receiving, by the first device, a second BRP PPDU for a plurality of times, wherein the second BRP PPDU is used to indicate the first device to evaluate the variation of the CSI from the second device to the first device;
sending, by the first device, a third BRP frame, wherein the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device; and
receiving, by the first device, a fourth BRP frame, wherein the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

11. The method according to claim 2, wherein after the receiving, by the second device, a third frame, the method further comprises:
receiving, by the second device, a first BRP PPDU for a plurality of times, wherein the first BRP PPDU is used to indicate the second device to evaluate the variation of the CSI from the first device to the second device;
sending, by the second device, a second BRP PPDU for a plurality of times in a quasi-omni manner, wherein the second BRP PPDU is used to indicate the first device to evaluate the variation of the CSI from the second device to the first device;
receiving, by the second device, a third BRP frame, wherein the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device; and
sending, by the second device, a fourth BRP frame, wherein the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

12. The method according to claim 10, wherein after the receiving, by the first device, a fourth BRP frame, the method further comprises:
sending, by the first device, a fifth BRP PPDU for a plurality of times, wherein the fifth BRP PPDU is used to indicate the second device to evaluate the variation of the CSI from the first device to the second device;
receiving, by the first device, a sixth BRP PPDU for a plurality of times, wherein the sixth BRP PPDU is used to indicate the first device to evaluate the variation of the CSI from the second device to the first device;
sending, by the first device, a seventh BRP frame that carries a first beam information list, wherein the first beam information list is used to feed back a plurality of transmit beams whose variations of CSI from the second device to the first device are greater than the CSI variation threshold and a receive antenna corresponding to each transmit beam; and
receiving, by the first device, an eighth BRP frame that carries a second beam information list, wherein the second beam information list is used to feed back a plurality of transmit beams whose variations of CSI from the first device to the second device are greater than the CSI variation threshold and a receive antenna corresponding to each transmit beam.

13. The method according to claim 11, wherein after the sending, by the second device, a fourth BRP frame, the method further comprises:
receiving, by the second device, a fifth BRP PPDU for a plurality of times, wherein the fifth BRP PPDU is used to indicate the second device to evaluate the variation of the CSI from the first device to the second device;
sending, by the second device, a sixth BRP PPDU for a plurality of times, wherein the sixth BRP PPDU is used to indicate the first device to evaluate the variation of the CSI from the second device to the first device;
receiving, by the second device, a seventh BRP frame that carries a first beam information list, wherein the first beam information list is used to feed back a plurality of transmit beams whose variations of CSI from the second device to the first device are greater than the CSI variation threshold and a receive antenna corresponding to each transmit beam; and
sending, by the second device, an eighth BRP frame that carries a second beam information list, wherein the second beam information list is used to feed back a plurality of transmit beams whose variations of CSI from the first device to the second device are greater than the CSI variation threshold and a receive antenna corresponding to each transmit beam.

14. The method according to any one of claims 10 to 13, wherein both the first BRP PPDU and the second BRP PPDU comprise a CSI measurement request field and a number of beam sweep cycles field; when a value of the CSI measurement request field is a first value, the CSI measurement request field indicates to measure CSI; and the number of beam sweep cycles field indicates a number of sweep cycles of a receive beam; and
the first BRP PPDU and the second BRP PPDU further comprise one or more of the following fields:
a transmit end sensing sector identifier field and a transmit end sensing antenna identifier mask field, used to jointly indicate a transmit sector and a transmit antenna of a BRP frame;
a CSI variation threshold field, used to indicate the CSI variation threshold; and
an evaluation algorithm field, used to indicate a CSI evaluation algorithm.

15. The method according to any one of claims 10 to 14, wherein the first number of receive beams is carried in a directional multi-gigabit (directional multi-gigabit, DMG) beam refinement element of the third BRP frame; and
the second number of receive beams is carried in a DMG beam refinement element of the fourth BRP frame.

16. The method according to claim 12 or 13, wherein both the fifth BRP PPDU and the sixth BRP PPDU comprise a CSI measurement request field and a number of beam sweep cycles field; when a value of the CSI measurement request field is a first value, the CSI measurement request field indicates to measure CSI; and the number of beam sweep cycles field indicates a number of sweep cycles of a receive beam; and
the fifth BRP PPDU and the sixth BRP PPDU further comprise one or more of the following fields:
a transmit end sensing sector identifier field and a transmit end sensing antenna identifier mask field, used to jointly indicate a transmit sector and a transmit antenna of a BRP frame;
a CSI variation threshold field, used to indicate the CSI variation threshold; and
an evaluation algorithm field, used to indicate a CSI evaluation algorithm.

17. The method according to claim 12 or 13, wherein the first beam information list is located in a sensing measurement feedback element of the seventh BRP frame; and
the second beam information list is located in a sensing measurement feedback element of the eighth BRP frame.

18. A radio sensing method, comprising:
sending, by a first device, a plurality of first frames, wherein each first frame comprises first indication information, and the first indication information indicates a second device to evaluate a variation of CSI from the first device to the second device;
receiving, by the first device, a plurality of second frames in a quasi-omni manner, wherein each second frame comprises second indication information, and the second indication information indicates the first device to evaluate a variation of CSI from the second device to the first device;
sending, by the first device, a first sensing feedback frame, wherein the first sensing feedback frame comprises a second measurement result, and the second measurement result is used to feed back a plurality of transmit beams whose variations of CSI from the second device to the first device are greater than a CSI variation threshold; and
receiving, by the first device, a second sensing feedback frame, wherein the second sensing feedback frame comprises a first measurement result, and the first measurement result is used to feed back a plurality of transmit beams whose variations of CSI from the first device to the second device are greater than a CSI variation threshold.

19. A radio sensing method, comprising:
receiving, by a second device, a plurality of first frames in a quasi-omni manner, wherein each first frame comprises first indication information, and the first indication information indicates the second device to evaluate a variation of CSI from a first device to the second device;
sending, by the second device, a plurality of second frames, wherein each second frame comprises second indication information, and the second indication information indicates the first device to evaluate a variation of CSI from the second device to the first device;
receiving, by the second device, a first sensing feedback frame, wherein the first sensing feedback frame comprises a second measurement result, and the second measurement result is used to feed back a plurality of transmit beams whose variations of CSI from the second device to the first device are greater than a CSI variation threshold; and
sending, by the second device, a second sensing feedback frame, wherein the second sensing feedback frame comprises a first measurement result, and the first measurement result is used to feed back a plurality of transmit beams whose variations of CSI from the first device to the second device are greater than a CSI variation threshold.

20. The method according to claim 18 or 19, wherein the first frame is a beacon frame, and the first indication information is located in an optional subelement subfield of an EDMG capability field of the beacon frame;
the first indication information comprises a CSI measurement request field and a CSI variation calculation field, and further comprises one or more of the following fields: an evaluation algorithm field and a CSI variation threshold field; and
when a value of the CSI measurement request field is a first value, the CSI measurement request field indicates the second device to measure CSI; the evaluation algorithm field indicates a CSI evaluation algorithm; the CSI variation threshold field indicates the CSI variation threshold; and the CSI variation calculation field is used to indicate the second device whether to calculate a CSI difference.

21. The method according to claim 18 or 19, wherein the first frame is an SSW frame, and the first indication information is carried in a reserved subfield of an SSW feedback field of the SSW frame;
the first indication information comprises a CSI measurement request field and a CSI variation calculation field, and further comprises one or more of the following fields: an evaluation algorithm field and a CSI variation threshold field; and
when a value of the CSI measurement request field is a first value, the CSI measurement request field indicates the second device to measure CSI; the evaluation algorithm field indicates a CSI evaluation algorithm; the CSI variation threshold field indicates the CSI variation threshold; and the CSI variation calculation field is used to indicate the second device whether to calculate a CSI difference.

22. The method according to any one of claims 18 to 21, wherein the second frame is an SSW frame, and the second indication information is located in a reserved subfield of an SSW feedback field of the SSW frame; and
the second indication information comprises a CSI variation calculation field, and the CSI variation calculation field is used to indicate the first device whether to perform CSI calculation.

23. The method according to any one of claims 18 to 22, wherein the first measurement result comprises a plurality of groups of first beam identifiers, and one group of first beam identifiers comprises a first antenna identifier and a first sector identifier;
the second measurement result comprises a plurality of groups of second beam identifiers, and one group of second beam identifiers comprises a second antenna identifier and a second sector identifier;
a beam determined by one group of first beam identifiers is a transmit beam whose CSI difference between any two CSI measurements on a same transmit beam is greater than the CSI variation threshold and that is of all transmit beams of the first device; and
a beam determined by one group of second beam identifiers is a transmit beam whose CSI difference between any two CSI measurements on a same transmit beam is greater than the CSI variation threshold and that is of all transmit beams of the second device.

24. The method according to claim 18, wherein after the receiving, by the first device, a second sensing feedback frame, the method further comprises:
sending, by the first device, a first BRP PPDU for a plurality of times in a quasi-omni manner, wherein the first BRP PPDU is used to indicate the second device to evaluate the variation of the CSI from the first device to the second device;
receiving, by the first device, a second BRP PPDU for a plurality of times, wherein the second BRP PPDU is used to indicate the first device to evaluate the variation of the CSI from the second device to the first device;
sending, by the first device, a third BRP frame, wherein the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device; and
receiving, by the first device, a fourth BRP frame, wherein the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

25. The method according to claim 19, wherein after the sending, by the second device, a second sensing feedback frame, the method further comprises:
receiving, by the second device, a first BRP PPDU for a plurality of times, wherein the first BRP PPDU is used to indicate the second device to evaluate the variation of the CSI from the first device to the second device;
sending, by the second device, a second BRP PPDU for a plurality of times in a quasi-omni manner, wherein the second BRP PPDU is used to indicate the first device to evaluate the variation of the CSI from the second device to the first device;
receiving, by the second device, a third BRP frame, wherein the third BRP frame is used to feed back a first number of receive beams for beam training of the first device in a beam combining phase, and the first number of receive beams is a number of receive beams whose CSI difference between any two CSI measurements on a same receive beam is greater than the CSI variation threshold and that are of all receive beams of the first device; and
sending, by the second device, a fourth BRP frame, wherein the fourth BRP frame is used to feed back a second number of receive beams for beam training of the second device in a beam combining phase, and the second number of receive beams is a number of receive beams whose CSI difference between any two CSI measurements on a same receive beam is greater than the CSI variation threshold and that are of all receive beams of the second device.

26. The method according to claim 24, wherein after the receiving, by the first device, a fourth BRP frame, the method further comprises:
sending, by the first device, a fifth BRP PPDU for a plurality of times, wherein the fifth BRP PPDU is used to indicate the second device to evaluate the variation of the CSI from the first device to the second device;
receiving, by the first device, a sixth BRP PPDU for a plurality of times, wherein the sixth BRP PPDU is used to indicate the first device to evaluate the variation of the CSI from the second device to the first device;
sending, by the first device, a seventh BRP frame that carries a first beam information list, wherein the first beam information list is used to feed back a plurality of transmit beams whose variations of CSI from the second device to the first device are greater than the CSI variation threshold and a receive antenna corresponding to each transmit beam; and
receiving, by the first device, an eighth BRP frame that carries a second beam information list, wherein the second beam information list is used to feed back a plurality of transmit beams whose variations of CSI from the first device to the second device are greater than the CSI variation threshold and a receive antenna corresponding to each transmit beam.

27. The method according to claim 25, wherein after the sending, by the second device, a fourth BRP frame, the method further comprises:
receiving, by the second device, a fifth BRP PPDU for a plurality of times, wherein the fifth BRP PPDU is used to indicate the second device to evaluate the variation of the CSI from the first device to the second device;
sending, by the second device, a sixth BRP PPDU for a plurality of times, wherein the sixth BRP PPDU is used to indicate the first device to evaluate the variation of the CSI from the second device to the first device;
receiving, by the second device, a seventh BRP frame that carries a first beam information list, wherein the first beam information list is used to feed back a plurality of transmit beams whose variations of CSI from the second device to the first device are greater than the CSI variation threshold and a receive antenna corresponding to each transmit beam; and
sending, by the second device, an eighth BRP frame that carries a second beam information list, wherein the second beam information list is used to feed back a plurality of transmit beams whose variations of CSI from the first device to the second device are greater than the CSI variation threshold and a receive antenna corresponding to each transmit beam.

28. The method according to any one of claims 24 to 27, wherein both the first BRP PPDU and the second BRP PPDU comprise a CSI measurement request field and a number of beam sweep cycles field; when a value of the CSI measurement request field is a first value, the CSI measurement request field indicates to measure CSI; and the number of beam sweep cycles field indicates a number of sweep cycles of a receive beam; and
the first BRP PPDU and the second BRP PPDU further comprise one or more of the following fields:
a transmit end sensing sector identifier field and a transmit end sensing antenna identifier mask field, used to jointly indicate a transmit sector and a transmit antenna of a BRP frame;
a CSI variation threshold field, used to indicate the CSI variation threshold; and
an evaluation algorithm field, used to indicate a CSI evaluation algorithm.

29. The method according to any one of claims 24 to 28, wherein the first number of receive beams is carried in a DMG beam refinement element of the third BRP frame; and
the second number of receive beams is carried in a DMG beam refinement element of the fourth BRP frame.

30. The method according to claim 26 or 27, wherein both the fifth BRP PPDU and the sixth BRP PPDU comprise a CSI measurement request field and a number of beam sweep cycles field; when a value of the CSI measurement request field is a first value, the CSI measurement request field indicates to measure CSI; and the number of beam sweep cycles field indicates a number of sweep cycles of a receive beam; and
the fifth BRP PPDU and the sixth BRP PPDU further comprise one or more of the following fields:
a transmit end sensing sector identifier field and a transmit end sensing antenna identifier mask field, used to jointly indicate a transmit sector and a transmit antenna of a BRP frame;
a CSI variation threshold field, used to indicate the CSI variation threshold; and
an evaluation algorithm field, used to indicate a CSI evaluation algorithm.

31. The method according to claim 26 or 27, wherein the first beam information list is located in a sensing measurement feedback element of the seventh BRP frame; and
the second beam information list is located in a sensing measurement feedback element of the eighth BRP frame.

32. A first device, comprising a unit or module configured to perform the method according to any one of claims 1, 3 to 10, 12, 14 to 17, 18, 20 to 24, 26, and 28 to 31.

33. A second device, comprising a unit or module configured to perform the method according to any one of claims 2 to 9, 11, 13, 14 to 17, 19, 20 to 23, 25, and 27 to 31.

34. A computer-readable storage medium, wherein the computer-readable storage medium stores program instructions; and when the program instructions are run on a computer, the computer is enabled to perform the method according to any one of claims 1 to 31.

35. A computer program product comprising program instructions, wherein when the program instructions are run on a computer, the computer is enabled to perform the method according to any one of claims 1 to 31.
